(19) Europäisches Patentamt
European Patent Office
Office européen des brevets

(11) EP 2 754 595 A1

(12) EUROPEAN PATENT APPLICATION
published in accordance with Art. 153(4) EPC

(43) Date of publication:
**16.07.2014 Bulletin 2014/29**

(21) Application number: **12829353.7**

(22) Date of filing: **05.09.2012**

(51) Int Cl.:
***B60W 10/08*** (2006.01)
***B60K 6/48*** (2007.10)
***B60K 6/547*** (2007.10)
***B60L 7/14*** (2006.01)
***B60L 11/14*** (2006.01)
***B60L 11/18*** (2006.01)
***B60W 10/10*** (2012.01)
***B60W 20/00*** (2006.01)
***F16H 61/02*** (2006.01)
***F16H 61/688*** (2006.01)
***F16H 63/50*** (2006.01)

(86) International application number:
**PCT/JP2012/072576**

(87) International publication number:
**WO 2013/035728 (14.03.2013 Gazette 2013/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2011 JP 2011193017**
**05.09.2011 JP 2011193019**
**05.09.2011 JP 2011193020**

(71) Applicant: **Honda Motor Co., Ltd.**
**Minato-ku**
**Tokyo 107-8556 (JP)**

(72) Inventors:
- **KAWATA, Kohei**
**Wako-shi**
**Saitama 351-0193 (JP)**
- **YOKOO, Kentaro**
**Wako-shi**
**Saitama 351-0193 (JP)**
- **YAMADA, Tetsuya**
**Wako-shi**
**Saitama 351-0193 (JP)**

(74) Representative: **Beder, Jens**
**Mitscherlich PartmbB**
**Patent- und Rechtsanwälte**
**Sonnenstraße 33**
**80331 München (DE)**

# (54) HYBRID VEHICLE CONTROL DEVICE AND CONTROL METHOD

(57) A control system and control method for a hybrid vehicle, which is capable of suppressing fuel consumption, thereby making it possible to improve fuel economy, when the hybrid vehicle is caused to travel using motive power of at least one of an electric motor and an internal combustion engine is provided. The control system 1 for the hybrid vehicle V, for controlling operations of the engine 3 and the electric motor 4 includes an ECU 2. During execution of an EV travel mode, the ECU 2 calculates an engine fuel consumption amount FC_eng and an EV fuel consumption amount FC_ev required when an engine travel mode and an EV travel mode are executed, respectively, according to required torque TRQ and vehicle speed VP (step 41). The ECU 2 selects and executes, when the engine fuel consumption amount FC_eng is smaller than the EV fuel consumption amount FC_ev, the engine travel mode, whereas when the EV fuel consumption amount FC_ev is smaller than the engine fuel consumption amount FC_eng, the EV travel mode (steps 42, 43).

FIG. 10

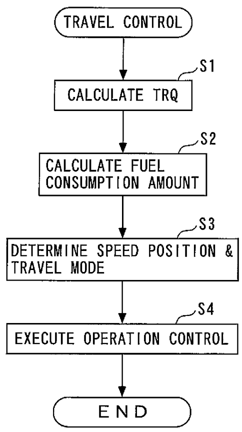


EP 2 754 595 A1

## Description

The present invention relates to a control system and a control method for a hybrid vehicle equipped with an internal combustion engine and an electric motor as motive power sources, and a stepped transmission mechanism, for controlling operations of the engine, the electric motor, and the transmission mechanism.

Conventionally, as a control system for a hybrid vehicle of this kind, one disclosed in PTL 1 is known. This hybrid vehicle includes a dual clutch transmission comprising a first transmission mechanism and a second transmission mechanism, and travel modes thereof include an ENG travel mode which uses an internal combustion engine alone as a motive power source, an EV travel mode which uses an electric motor alone as a motive power source, a charge travel mode which charges a battery by performing regeneration by the electric motor using part of motive power of the engine, and so forth. Further, in this conventional control system, the travel mode is selected according to vehicle speed.

Further, conventionally, as a control system for a hybrid vehicle, one disclosed in PTL 2 is known. This hybrid vehicle includes an internal combustion engine and an electric motor as motive power sources. Torque of the engine and the electric motor is transmitted to drive wheels via a stepped transmission mechanism. In this control system, during traveling of the hybrid vehicle, when a required driving force required for the drive wheels is increased by an accelerator pedal operation by a driver, control shown in FIG. 6 in PTL 2 is executed so as to improve fuel economy. In this case, when the required driving force cannot be attained by only an increase in the torque of the electric motor, one of prime mover cooperative controls A to D and the downshift control of the transmission are executed depending on to which of four regions A to D illustrated in FIG. 5 of PTL 2, the operating region of the engine corresponds (steps 110 to 170).

[PTL 1] Japanese Laid-Open Patent Publication No. 2009-173196
[PTL 2] Japanese Laid-Open Patent Publication No. 2010-100251

Electric power charged into the battery by regeneration performed by the electric motor using part of the motive power of the engine during the charge travel mode is used afterwards for causing the hybrid vehicle to travel. Therefore, in selecting the charge travel mode, to take into account the driving efficiency of the hybrid vehicle exhibited when electric power charged in the battery is supplied to the electric motor for causing the hybrid vehicle to travel leads to obtaining excellent fuel economy of the hybrid vehicle. On the other hand, in the control system disclosed in PTL 1, since the travel mode is selected only according to the vehicle speed as described above, there is a fear that it is impossible to obtain excellent fuel economy of the hybrid vehicle.

Further, according to the control system for a hybrid vehicle, disclosed in PTL 2, the operating region of the engine is determined by searching a map in FIG. 5 in PTL 2, and this map is created by taking the fuel consumption ratio of the engine into account, so that it is possible to suppress the fuel consumption ratio of the engine by performing the various kinds of control described above. However, since the efficiency of the electric motor is not taken into account, for example, when the hybrid vehicle is caused to travel by only the motive power of the electric motor, the control is executed under the condition of low efficiency of the electric motor even when the fuel consumption ratio of the engine is low. This can result in an increase in fuel consumed by the engine during traveling of the hybrid vehicle, causing degraded fuel economy.

The present invention has been made to provide a solution to the above-described problems, and a first object thereof is to provide a control system and a control method for a hybrid vehicle, which are capable of properly selecting a travel mode to thereby make it possible to improve fuel economy of the hybrid vehicle. Further, a second object of the invention is to provide a control system and a control method for a hybrid vehicle, which are capable of suppressing fuel consumption when the hybrid vehicle is caused to travel using motive power of an internal combustion engine or motive powers of the engine and an electric motor, to thereby make it possible to improve the fuel economy of the hybrid vehicle.

To attain the above first object, the invention according to claim 1 is a control system for a hybrid vehicle including an internal combustion engine 3 and an electric motor 4 capable of generating electric power, as motive power sources, a storage battery (battery 52 in embodiments (the same applies hereinafter in this section)) capable of supplying and receiving electric power to and from the electric motor 4, and a transmission mechanism capable of transmitting input motive power to drive wheels DW, DW, the control system comprising first memory means for memorizing a first total fuel consumption which is a total fuel consumption of the hybrid vehicle in an ENG travel mode in which only the engine 3 is used as the motive power source, and second memory means for memorizing a second total fuel consumption which is a total fuel consumption of the hybrid vehicle in a charge travel mode in which the engine 3 is operated in a vicinity of an optimum fuel economy line and regeneration is performed by the electric motor 4 using a surplus amount of torque of the engine 3 with respect to a required driving force required for the drive wheels DW, DW, wherein the second total fuel consumption is set according to a predetermined assumed power usage effectiveness which is a predicted value of driving efficiency of the hybrid vehicle to be exhibited when the hybrid vehicle V' is caused to travel by supplying electric power, which has been charged into the storage battery during the charge travel mode, afterwards to the electric motor 4, and wherein a travel mode in which a smaller total fuel consumption can be obtained is selected from the ENG travel mode and the charge travel mode, based on a result of comparison between the first total fuel consumption and the second total fuel consumption.

According to this control system for the hybrid vehicle, motive power of the engine and motive power of the electric motor are transmitted to the drive wheels via the transmission mechanism. The first total fuel consumption which is the total fuel consumption of the hybrid vehicle in the ENG travel mode in which only the engine is used as the motive power source is memorized by the first memory means. Further, the second total fuel consumption which is the total fuel consumption of the hybrid vehicle in the charge travel mode is memorized by the second memory means. This charge travel mode is a travel mode in which the engine is operated in the vicinity of the optimum fuel economy line which minimizes the fuel consumption of the engine, and regeneration is performed by the electric motor using the surplus amount of the torque of the engine with respect to the required driving force.

Here, the total fuel consumption of the hybrid vehicle represents e.g. a ratio of a fuel amount to final traveling energy, assuming that fuel as an energy source for the hybrid vehicle is finally converted to the traveling energy of the hybrid vehicle. Therefore, reduction of the total fuel consumption leads to improvement in fuel economy of the hybrid vehicle. Further, the driving efficiency of the hybrid vehicle to be exhibited when the hybrid vehicle is caused to travel by supplying electric power charged into the storage battery during the charge travel mode, afterwards to the electric motor, has influence on the total fuel consumption in the charge travel mode.

In view of this, with the configuration described above, the second total fuel consumption is set according to the predetermined assumed power usage effectiveness. The assumed power usage effectiveness is a predicted value of the driving efficiency of the hybrid vehicle to be exhibited when the hybrid vehicle is caused to travel by supplying electric power which has been charged into the storage battery during the charge travel mode, afterwards to the electric motor 4. Therefore, the second total fuel consumption, which is the total fuel consumption in the charge travel mode, can be properly set according to the assumed power usage effectiveness.

Furthermore, based on the result of comparison between the first total fuel consumption, which is the total fuel consumption in the ENG travel mode, and the second total fuel consumption, which is the total fuel consumption in the charge travel mode, a travel mode in which the smaller total fuel consumption can be obtained is selected from the ENG travel mode and the charge travel mode. From the above, it is possible to properly select the travel mode in which the smaller total fuel consumption can be obtained, and thereby improve fuel consumption of the hybrid vehicle.

To attain the above object, the invention according to claim 2 is a control system for a hybrid vehicle including an internal combustion engine 3, an electric motor 4 capable of generating electric power, a storage battery (battery 52 in embodiments (the same applies hereinafter in this section)) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the control system comprising first memory means for memorizing a first total fuel consumption (first total fuel consumption ratio TSFC1) which is a total fuel consumption (total fuel consumption ratio TSFC) of the hybrid vehicle in an ENG travel mode in which only the engine 3 is used as the motive power source, and second memory means for memorizing a second total fuel consumption (second total fuel consumption ratio TSFC2) which is a total fuel consumption of the hybrid vehicle in a charge travel mode in which the engine 3 is operated in a vicinity of an optimum fuel economy line and regeneration is performed by the electric motor 4 using a surplus amount of torque of the engine with respect to the required driving force, wherein the second total fuel consumption is set according to a predetermined assumed power usage effectiveness which is a predicted value of driving efficiency of the hybrid vehicle to be exhibited when the hybrid vehicle is caused to travel by supplying electric power which has been charged into the storage battery during the charge travel mode, afterwards to the electric motor 4, and wherein a travel mode in which a smaller total fuel consumption can be obtained is selected from the ENG travel mode and the charge travel mode, based on a result of comparison between the first total fuel consumption and the second total fuel consumption.

With this configuration, when the engine output shaft of the engine and the first input shaft of the first transmission mechanism are engaged with each other by the first clutch, and engagement between the engine output shaft and the second input shaft of the second transmission mechanism is released by the second clutch, the motive power of the engine is transmitted to the drive wheels in a state in which the speed thereof is changed in one of the speed positions of the first transmission mechanism. Further, when engagement between the engine output shaft and the first input shaft is released by the first clutch, and the engine output shaft and the second input shaft are engaged with each other by the second clutch, the motive power of the engine is transmitted to the drive wheels in a state in which the speed thereof is changed in one of the speed positions of the second transmission mechanism.

Furthermore, the motive power of the electric motor is transmitted to the drive wheels in a state in which the speed thereof is changed in one of the speed positions of the first transmission mechanism.

Further, the first total fuel consumption, which is the total fuel consumption of the hybrid vehicle in the ENG travel mode in which only the engine is used as the motive power source, is memorized by the first memory means. Furthermore, the second total fuel consumption, which is the total fuel consumption of the hybrid vehicle in the charge travel mode, is memorized by the second memory means. This charge travel mode is a travel mode in which the engine is operated in the vicinity of the optimum fuel economy line which minimizes the fuel consumption of the engine and regeneration is performed by the electric motor using the surplus amount of the torque of the engine with respect to the required driving force.

Here, the total fuel consumption of the hybrid vehicle represents e.g. a ratio of a fuel amount to final traveling energy, assuming that fuel as an energy source for the hybrid vehicle is finally converted to the traveling energy of the hybrid vehicle. Therefore, reduction of the total fuel consumption leads to improvement in fuel economy of the hybrid vehicle. Further, the driving efficiency to be exhibited when the hybrid vehicle is caused to travel by supplying electric power which has been charged into the storage battery during the charge travel mode, afterwards to the electric motor has influence on the total fuel consumption in the charge travel mode.

In view of this, with the configuration described above, the second total fuel consumption is set according to the predetermined assumed power usage effectiveness. The assumed power usage effectiveness is the predicted value of the driving efficiency to be exhibited when the hybrid vehicle is caused to travel by supplying electric power which has been charged into the storage battery during the charge travel mode, afterwards to the electric motor. Therefore, the second total fuel consumption, which is the total fuel consumption in the charge travel mode, can be properly set according to the assumed power usage effectiveness.

Furthermore, the travel mode in which the smaller total fuel consumption can be obtained is selected from the ENG travel mode and the charge travel mode, based on the result of comparison between the first total fuel consumption, which is the total fuel consumption in the ENG travel mode, and the second total fuel consumption, which is the total fuel consumption in the charge travel mode. From the above, it is possible to properly select the travel mode in which the smaller total fuel consumption can be obtained, and thereby improve fuel consumption of the hybrid vehicle.

The invention according to claim 3 is the control system 1 as recited in claim 2 wherein the second total fuel consumption is expressed by the following equation (A), and selection of the speed position is performed such that the second total fuel consumption is minimized during the charge travel mode.

$$\text{second total fuel consumption} = (\text{first fuel consumption amount} + \text{second fuel consumption amount})/(\text{traveling energy} + \text{EV traveling energy}) \quad \ldots \quad (A)$$

wherein first fuel consumption amount: amount of fuel supplied to the engine for causing the hybrid vehicle to travel during the charge travel mode

second fuel consumption amount: amount of fuel supplied to the engine for regeneration by the electric motor during the charge travel mode

traveling energy: traveling energy of the hybrid vehicle in the charge travel mode

EV traveling energy: predicted value of the traveling energy of the hybrid vehicle with which the hybrid vehicle is to travel when the hybrid vehicle is caused to travel by supplying electric power which has been charged into the storage battery during the charge travel mode, afterwards to the electric motor.

With this configuration, during the charge travel mode, the selection of the speed positions is performed such that the second total fuel consumption expressed by the above-described equation (A) is minimized. As is apparent from the above-described respective definitions of the traveling energy, the EV traveling energy, and the first and second fuel consumption amounts, the first fuel consumption amount is the amount of fuel supplied to the engine for obtaining the traveling energy in the charge travel mode. Therefore, the first fuel consumption amount and the traveling energy are in correspondence with each other, and a ratio between the former and the latter corresponds to the fuel consumption amount of the engine per unit traveling energy. Further, the second fuel consumption amount is the amount of fuel supplied to the engine for regeneration during the charge travel mode, and the electric power charged into the storage battery is used afterwards to obtain the EV traveling energy. Therefore, the second fuel consumption amount and the EV traveling energy are in correspondence with each other, and a ratio between the former and the latter corresponds to the fuel consumption amount of the engine per unit EV traveling energy, and corresponds to a reciprocal of the above-mentioned assumed power usage effectiveness.

The second total fuel consumption expressed by the above-described equation (A) using the traveling energy, the EV traveling energy, and the first and second fuel consumption amounts, which have the above-described relationship, properly represents the ratio of the fuel amount supplied to obtain the final traveling energy to the final traveling energy of the hybrid vehicle (including energy charged into the storage battery, and output afterwards). Further, the assumed power usage effectiveness is excellently reflected on the second total fuel consumption. Therefore, it is possible to properly select the speed position by using the second total fuel consumption such that the total fuel consumption of the hybrid vehicle is minimized.

Further, the first and second transmission mechanisms are sometimes different from each other in motive power transmission efficiency. In this case, the speed position can be properly selected using the first and second total fuel consumptions properly defined in association with the respective speed positions of the first and second transmission mechanisms, and hence it is possible to effectively obtain the above-described advantageous effects.

The invention according to claim 4 is the control system 1 as recited in claim 2, wherein during the charge travel mode, when the hybrid vehicle V is traveling in a state in which the speed of the motive power of the engine 3 has been changed by the second transmission mechanism 31, a lower speed position than a speed position of the second transmission mechanism 31 or such a speed position as will enhance power generation efficiency of the electric motor 4 is selected as the speed position of the first transmission mechanism 11.

In general, in the electric motor, as the rotational speed thereof is higher, the power generation efficiency thereof is higher. With the configuration described above, during the charge travel mode, when the hybrid vehicle is traveling in the state in which the speed of the motive power of the engine has been changed by the second transmission mechanism, a lower speed position than the speed position of the second transmission mechanism or such a speed position as will enhance the power generation efficiency of the electric motor is selected as the speed position of the first transmission mechanism. This makes it possible to increase the rotational speed of the electric motor in the charge travel mode, and enhance the power generation efficiency of the electric motor.

The invention according to claim 5 is the control system 1 as recited in claim 2, wherein during the charge travel mode, when a state of charge (state of charge SOC) of the storage battery is not larger than a predetermined value, such a speed position as will enhance power generation efficiency of the electric motor 4 is selected as the speed positions of the first and second transmission mechanisms 11 and 31.

With this configuration, during the charge travel mode, when the state of charge of the storage battery is not larger than the predetermined value, such a speed position as will enhance power generation efficiency of the electric motor is selected as the speed positions of the first and second transmission mechanisms. Therefore, when the state of charge of the storage battery is not larger than the predetermined value and it is required to increase the state of charge of the storage battery soon, high power generation efficiency of the electric motor can be obtained, whereby it is possible to obtain a larger charge amount of the storage battery.

To attain the second object, the invention according to claim 6 is a control system 1 for a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to the drive wheels DW in a state in which a speed of the motive power is changed in one of a plurality of speed positions, a second transmission mechanism 31 that is capable of receiving motive power from the output shaft (crankshaft 3a) by a second input shaft 32, and transmitting the motive power to drive wheels DW in a state in which a speed of the motive power is changed in one of a plurality of speed positions, a first clutch C1 that is capable of engaging between the engine output shaft (crankshaft 3a) and the first transmission mechanism 11, and a second clutch C2 that is capable of engaging between the engine output shaft (crankshaft 3a) and the second transmission mechanism 31, the control system comprising travel mode-executing means (ECU 2, step 43) capable of selecting an ENG travel mode in which the hybrid vehicle V is caused to travel using the engine 3 as a motive power source, and an EV travel mode in which the hybrid vehicle V is caused to travel using the electric motor 4 as a motive power source, for a travel mode of the hybrid vehicle V, engine consumption degree parameter-calculating means (ECU 2, step 41) for calculating an engine consumption degree parameter (engine fuel consumption amount FC_eng) indicative of a degree of consumption of fuel to be consumed by the engine 3 when the ENG travel mode is executed, according to a traveling state of the hybrid vehicle (required torque TRQ, vehicle speed VP), and EV consumption degree parameter-calculating means (ECU 2, step 41) for calculating an EV consumption degree parameter (EV fuel consumption amount FC_ev) indicative of a degree of consumption of fuel corresponding to a degree of consumption of electric power of the storage battery to be used for conversion to motive power by the electric motor 4 when the EV travel mode is executed, according to the traveling state of the hybrid vehicle V, wherein the travel mode-executing means selects, as the travel mode, the ENG travel mode when the degree of consumption of fuel represented by the engine consumption degree parameter is smaller than the degree of consumption of fuel represented by the EV consumption degree parameter, and the EV travel mode when the degree of consumption of fuel represented by the EV consumption degree parameter is smaller than the degree of consumption of fuel represented by the engine consumption degree parameter (step 42).

According to this control system for the hybrid vehicle, the engine consumption degree parameter indicative of the degree of consumption of fuel to be consumed by the engine when the ENG travel mode is executed is calculated according to a traveling state of the hybrid vehicle, and the EV consumption degree parameter indicative of the degree of consumption of fuel corresponding to the degree of consumption of electric power of the storage battery to be used for conversion to motive power by the electric motor when the EV travel mode is executed, is calculated according to the traveling state of the hybrid vehicle. Further, as the travel mode, when the fuel consumption degree represented by the engine consumption degree parameter is smaller than the fuel consumption degree represented by the EV consumption degree parameter, the ENG travel mode is selected, whereas when the fuel consumption degree represented by the EV consumption degree parameter is smaller than the fuel consumption degree represented by the engine consumption degree parameter, the EV travel mode is selected. This makes it possible to cause the hybrid vehicle to travel, according to the traveling state thereof, in a travel mode smaller in the degree of consumption of fuel, which makes it possible to suppress fuel consumption, and thereby improve fuel economy.

The invention according to claim 7 is the control system 1 as recited in claim 6, wherein when electric power is supplied from an external power source to the storage battery (battery 52) by a plug-in method, the EV consumption degree parameter-calculating means corrects the EV consumption degree parameter (EV fuel consumption amount FC_ev) according to an amount of electric power supplied to the storage battery by the plug-in method.

According to this control system for the hybrid vehicle, when electric power is supplied from the external power source to the storage battery by the plug-in method, the EV consumption degree parameter is corrected according to the amount of electric power supplied to the storage battery by the plug-in method, which makes it possible to calculate the EV consumption degree parameter while taking into account the influence of the amount of electric power supplied to the storage battery by the plug-in method. Therefore, for example, by correcting the EV consumption degree parameter such that the degree of consumption of fuel represented by the EV consumption degree parameter becomes smaller as the amount of electric power supplied to the battery 52 by the plug-in method is larger, it is possible to lengthen a time period over which the EV travel mode is executed, thereby further improve the fuel economy.

The invention according to claim 8 is the control system 1 as recited in claim 6, wherein the travel mode-executing means selects and executes one of the ENG travel mode, the EV travel mode, and an assist travel mode in which the hybrid vehicle V is caused to travel using the engine 3 and the electric motor 4 as the motive power sources, the control system further comprises assist consumption degree parameter-calculating means (ECU 2, step 2) for calculating an assist consumption degree parameter (assist fuel consumption amount FC_asst) indicative of a degree of consumption of fuel to be consumed by the engine 3 when the assist travel mode is executed, and a degree of consumption of fuel corresponding to a degree of consumption of electric power of the storage battery to used for conversion to motive power by the electric motor 4, using a past charge amount, which is a charge amount on which charging efficiency of the storage battery up to a current time is reflected, and a consumed electric power amount in the storage battery.

According to this control system for the hybrid vehicle, the assist fuel consumption amount parameter indicative of the degree of consumption of fuel to be consumed by the engine when the assist travel mode is executed and the degree of consumption of fuel corresponding to the degree of consumption of electric power of the storage battery to be used for conversion to motive power by the electric motor, is calculated using the past charge amount, which is the charge amount on which the charging efficiency of the storage battery up to the current time is reflected, and the consumed electric power amount in the storage battery. This makes it possible to accurately calculate the assist consumption degree parameter while taking the amount of fuel consumed for charging the storage battery into account (Note that throughout the specification, the term "assist consumption degree parameter" is only required to be a value indicative of a degree of consumption of fuel to be consumed when the assist travel mode is executed, and is intended to include a fuel consumption amount, a fuel consumption ratio, and a total efficiency of the whole hybrid vehicle, for example).

The invention according to claim 9 is the control system 1 as recited in claim 6, wherein in a case where the EV travel mode is being executed, when the engine 3 is at a stop, the EV consumption degree parameter-calculating means corrects the EV consumption degree parameter (EV fuel consumption amount FC_ev) according to an amount of electric power required for starting the engine 3 by motive power of the electric motor 4.

According to this control system for the hybrid vehicle, in the case where the EV travel mode is being executed, when the engine is at a stop, the EV consumption degree parameter is corrected according to the amount of motive power required to start the engine using motive power of the electric motor, and hence it is possible to positively restart the engine by the motive power of the electric motor, thereby making it possible to improve marketability.

The invention according to claim 10 is the control system 1 as recited in claim 6, wherein the engine consumption degree parameter-calculating means calculates the engine consumption degree parameter (engine fuel consumption amount FC_eng), in association with each speed position of the first transmission mechanism 11 and the second transmission mechanism 31 according to the traveling state of the hybrid vehicle V, wherein the EV consumption degree parameter- calculating means calculates the EV consumption degree parameter (EV fuel consumption amount FC_ev), in association with each speed position of the first transmission mechanism 11 according to the traveling state of the hybrid vehicle, and wherein during execution of the EV travel mode, the travel mode-executing means selects a travel mode in a speed position corresponding to a smallest value of a degree of consumption of fuel indicated by the engine consumption degree parameter which is calculated in association with each speed position of the first transmission mechanism and the second transmission mechanism, and a degree of consumption of fuel indicated by the engine consumption degree parameter which is calculated in association with each speed position of the first transmission mechanism (step 42).

According to this control system for the hybrid vehicle, the engine consumption degree parameter is calculated according to the traveling state of the hybrid vehicle, in association with each speed position of the first transmission mechanism and the second transmission mechanism, and the EV consumption degree parameter is calculated according to the traveling state of the hybrid vehicle, in association with each speed position of the first transmission mechanism. During execution of the EV travel mode, there is selected the travel mode in the speed position corresponding to the smallest value of the fuel consumption degree indicated by the engine consumption degree parameter which is calculated in association with each speed position of the first transmission mechanism and the second transmission mechanism and the fuel consumption degree indicated by the EV consumption degree parameter which is calculated in association with each speed position of the first transmission mechanism. This makes it possible to accurately select a travel mode, which is smaller in the fuel consumption degree, according to the traveling state of the hybrid vehicle, as a travel mode of the hybrid vehicle which is provided with two transmission mechanisms and two clutches, and cause the hybrid vehicle to travel in the selected travel mode. As a consequence, it is possible to further suppress the fuel consumption, and thereby further improve fuel economy.

The invention according to claim 11 is a control system 1 for a hybrid vehicle V, V' including an internal combustion engine 3 and an electric motor 4 capable of generating electric power, as motive power sources, a storage battery (battery 52) capable of supplying and receiving electric power to and from the electric motor 4, and a transmission mechanism 11, 31, 37 that transmits motive power of the engine 3 and the electric motor 4 to drive wheels DW while changing a speed of the motive power of the engine 3 and the electric motor 4, and includes a plurality of speed positions, the control system comprising consumption degree parameter-calculating means (ECU 2, step 102) for calculating, in association with each speed position, a consumption degree parameter (engine fuel consumption amount FC_eng, charge fuel consumption amount FC_ch, assist fuel consumption amount FC_asst) which represents a degree of consumption of fuel to be consumed, when a difference between torque to be generated by the engine 3 when the engine 3 is operated in a given one of the speed positions such that the degree of consumption of fuel is minimized, and a required torque required by the hybrid vehicle V, is absorbed/supplemented by regenerative operation/ powering operation by the electric motor 4, by using one of a past charge amount (past average charge amount ENE_chave), which is a charge amount on which charging efficiency of the storage battery up to a current time is reflected, and a predicted efficiency Ehat, which is an efficiency predicted to be exhibited when it is predicted that an amount of electric power charged in the storage battery is to be used, and travel mode-executing means (ECU 2, steps 102 to 104) for selecting and executing a travel mode corresponding to a smallest value of a degree of consumption of fuel indicated by the consumption degree parameter which is calculated in association with each speed position, according to the required torque TRQ and a vehicle speed VP of the hybrid vehicle V.

According to this control system for the hybrid vehicle, the travel mode corresponding to the smallest value of the degree of consumption of fuel indicated by the consumption degree parameter which is calculated in association with each speed position is selected and executed according to the required torque and the vehicle speed VP of the hybrid vehicle V. In this case, the consumption degree parameter is a value which represents the degree of consumption of fuel to be consumed when the difference between the torque to be generated by the engine when the engine is operated in a given one of the speed positions such that the fuel consumption degree is minimized and the required torque required by the hybrid vehicle is absorbed/supplemented by the regenerative operation/powering operation by the electric motor. The consumption degree parameter is calculated in association with each speed position of the transmission mechanism, and hence when the hybrid vehicle is caused to travel by the motive power of the engine and the electric motor or when charging of the storage battery is executed while the hybrid vehicle is caused to travel by the motive power of the engine, the consumption degree parameter is calculated as a value which minimizes the degree of consumption of fuel, on a speed position basis. In addition to this, since the consumption degree parameter is calculated using one of the past charge amount, which is the charge amount on which the charging efficiency of the storage battery up to the current time is reflected, and the predicted efficiency, which is the efficiency predicted to be exhibited when it is predicted that the amount of electric power charged into the storage battery is to be used, it is possible to calculate the consumption degree parameter while causing the charging efficiency up to the current time and the efficiency predicted to be exhibited when it is predicted that the electric power in the storage battery is to be used in the future to be reflected thereon, whereby it is possible to accurately calculate the consumption degree parameter. Therefore, by executing a travel mode corresponding to the smallest value of the consumption degree parameter calculated in association with each speed position as described above, it is possible to suppress fuel consumption, and thereby improve fuel economy (Note that throughout the specification, the term "consumption degree parameter" is only required to be a value indicative of a degree of consumption of fuel, and is intended to include a fuel consumption amount, a fuel consumption ratio, and a total efficiency of the whole hybrid vehicle, for example).

The invention according to claim 12 is a control system 1 for a hybrid vehicle V including an internal combustion engine 3, an electric motor 4 capable of generating electric power, a storage battery (battery 52) capable of supplying and receiving electric power to and from the electric motor 4, a first transmission mechanism 11 that is capable of transmitting motive power from an engine output shaft (crankshaft 3a) of the engine 3 and the electric motor 4 to a first input shaft 13, and transmitting the motive power to the drive wheels DW in a state in which a speed of the motive power is changed in one of a plurality of speed positions, a second transmission mechanism 31 that is capable of transmitting motive power from the engine output shaft to a second input shaft 32, and transmitting the motive power to drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the control system comprising consumption degree parameter-calculating means (ECU 2, step 102) for calculating, in association with each speed position of the first transmission mechanism 11 and the second transmission mechanism 31, a consumption degree parameter (engine fuel consumption amount FC_eng, charge fuel consumption amount FC_ch, assist fuel consumption amount FC_asst) which represents a degree of consumption of fuel to be consumed, when a difference between torque to be generated by the engine 3 when the engine is operated in a given one of the speed positions of the first transmission mechanism 11 and the second transmission mechanism 31 such that the degree of consumption of fuel is minimized, and a required torque TRQ required by the hybrid vehicle V, is absorbed/supplemented by regenerative operation/powering operation by the electric motor 4, by using one of a past charge amount (past average charge amount ENE_chave), which is a charge amount on which charging efficiency of the storage battery up to a current time is reflected, and a predicted efficiency Ehat, which is an efficiency predicted to be exhibited when it is predicted that an amount of electric power charged in the storage battery is to be used, and travel mode-executing means (ECU 2, steps 102 to 104) for selecting and executing a travel mode corresponding to a smallest value of a degree of consumption indicated by the consumption degree parameter which is calculated in association with each speed position, according to the required torque TRQ and a vehicle speed VP of the hybrid vehicle V.

According to this control system for the hybrid vehicle, the travel mode corresponding to the smallest value of the degree of consumption of fuel indicated by the consumption degree parameter which is calculated in association with each speed position is selected and executed according to the required torque and the vehicle speed of the hybrid vehicle. In this case, the consumption degree parameter is a value which represents a degree of consumption of fuel to be consumed when the difference between the torque to be generated by the engine when the engine is operated in the given one of the speed positions of the first transmission mechanism and the second transmission mechanism such that the fuel consumption degree is minimized, and the required torque required by the hybrid vehicle is absorbed/supplemented by regenerative operation/powering operation by the electric motor. The consumption degree parameter is calculated in association with each speed position of the first transmission mechanism and the second transmission mechanism, and hence when the hybrid vehicle is caused to travel by the motive power from the engine and the electric motor, or when charging of the storage battery is executed while the hybrid vehicle is caused to travel by the motive power from the engine, the consumption degree parameter is calculated as a value which minimizes the fuel consumption degree, on a speed position basis. In addition to this, since the consumption degree parameter is calculated using one of the past charge amount, which is the charge amount on which the charging efficiency of the storage battery up to the current time is reflected, and the predicted efficiency, which is the efficiency predicted to be exhibited when it is predicted that the amount of electric power charged into the storage battery is to be used, it is possible to calculate the consumption degree parameter while causing the charging efficiency up to the current time or the efficiency predicted to be exhibited when it is predicted that the electric power in the storage battery is to be used in the future to be reflected thereon, whereby it is possible to accurately calculate the consumption degree parameter. Therefore, by thus executing a travel mode corresponding to the smallest value of the consumption degree parameter calculated in association with each speed position, it is possible to suppress fuel consumption and thereby improve fuel economy.

The invention according to claim 13 is the control system 1 as recited in claim 12, wherein the motive power of the engine 3 is transmitted to the drive wheels DW via an odd-number speed position of the first transmission mechanism 11 and an even-number speed position of the second transmission mechanism 31, and the motive power of the electric motor 4 is transmitted to the drive wheels DW via an odd-number speed position of the first transmission mechanism 11, and wherein when the consumption degree parameter-calculating means calculates the consumption degree parameter (charge fuel consumption amount FC_ch, assist fuel consumption amount FC_asst) in a travel mode in which the hybrid vehicle V is caused to travel using the motive power of both the engine 3 and the electric motor 4, the consumption degree parameter-calculating means calculates, when transmission of motive power of the engine 3 is executed in the even-number speed position of the second transmission mechanism 31, a consumption degree parameter associate with a case where transmission of motive power of the electric motor 4 is executed using a higher or lower odd-number speed position of the first transmission mechanism 11 than the even-number speed position.

According to this control system, in a case where the consumption degree parameter in the travel mode in which the hybrid vehicle is caused to travel using the motive power from both the engine and the electric motor is calculated, when transmission of the motive power from the engine is executed using an even-number speed position of the second transmission mechanism, a consumption degree parameter associate with a case where transmission of the motive power from the electric motor is executed using a higher or lower odd-number speed position of the first transmission mechanism than the even-number speed position is also calculated, and hence it is possible to calculate the consumption degree parameter in a fine-grained manner in a manner associated with an actual combination of an even-number speed position for transmitting the motive power of the engine and an odd-number speed position for transmitting the motive power of the electric motor. This makes it possible to further suppress fuel consumption, and thereby further improve fuel economy.

The invention according to claim 14 is the control system 1 as recited in claim 11 or 12, wherein the predicted efficiency Ehat is calculated using charging/discharging efficiency Ebat_cd of the storage battery, driving efficiency Emot_d of the electric motor 4, and driving efficiency Etm_d of the transmission mechanism.

According to this control system for the hybrid vehicle, the predicted efficiency is calculated using the charging/discharging efficiency of the storage battery, the driving efficiency of the electric motor, and the driving efficiency of the transmission mechanism. Therefore, the predicted efficiency can be calculated as a value which accurately predicts an efficiency to be exhibited when the electric power charged into the storage battery is to be used as motive power in the future. This makes it possible to further improve calculation accuracy of the consumption degree parameter, whereby it is possible to further improve fuel economy.

The invention according to claim 15 is the control system 1 as recited in any one of claims 1, 2, 6, 11 and 12, when a temperature of at least one of the electric motor 4 and the storage battery (battery 52) is not lower than a predetermined temperature set for at least one of the electric motor 4 and the storage battery, an output of the electric motor 4 is limited, or alternatively, in a case where regeneration control is being executed by the electric motor 4, when at least one of a condition that a charge amount of the storage battery is not smaller than a predetermined amount, and a condition that the temperature of the storage battery is not lower than a predetermined temperature is satisfied, the ENG travel mode is selected.

With this configuration, when the temperature of at least one of the electric motor and the storage battery is not lower than the predetermined temperature set for at least one of the electric motor and the storage battery, that is, when the temperature of at least one of them is relatively high, output from the electric motor is limited. Therefore, it is possible to suppress a rise in the temperature of at least one of them. Further, in the case where the regeneration control is being executed, when at least one of the condition that the charge amount of the storage battery is not smaller than the predetermined amount and the condition that the temperature of the storage battery is not lower than the predetermined temperature is satisfied, the ENG travel mode is selected. This makes it possible to avoid occurrence of an overcharged state of the storage battery and/or an overheated state of the electric motor, whereby it is possible to prolong the service lives/life of the storage battery and/or the electric motor.

The invention according to claim 16 is the control system 1 as recited in any one of claims 1, 2, 6, 11 and 12, wherein when a state of charge (state of charge SOC) of the storage battery (battery 52) is not larger than a predetermined value, a forced regeneration mode in which regeneration by the electric motor 4 is forcibly performed using part of the motive power of the engine 3 is selected, wherein in a case where powering control is being executed by the electric motor 4, when at least one of a condition that a charge amount of the storage battery is not smaller than a predetermined amount, and a condition that a temperature of the storage battery is not lower than a predetermined temperature is satisfied, the ENG travel mode is selected, wherein when the charge amount of the storage battery is not larger than the predetermined value, operations of the engine 3, the electric motor 4, and the transmission mechanism 11, 31, 71 are corrected such that a time period over which an operation of charging the storage battery by the electric motor 4 is executed is made longer, or alternatively, when the charge amount of the storage battery is not larger than a predetermined lower limit value, one of inhibiting an operation of stopping the engine 3 and continuing the operation of the engine 3 for a predetermined time period is executed.

With this configuration, when the state of charge of the storage battery is not larger than the predetermined value, that is, when the state of charge of the storage battery is relatively small, the forced regeneration mode is selected in which regeneration by the electric motor is forcibly performed using part of the motive power from the engine. Therefore, the state of charge can be increased by this regeneration, whereby it is possible to avoid overdischarge of the storage battery. Further, in the case where the powering control is being executed, when at least one of the condition that the charge amount of the storage battery is not smaller than the predetermined amount and the condition that the temperature of the storage battery is not lower than the predetermined temperature is satisfied, the ENG travel mode is selected, so that it is possible to avoid occurrence of the overcharged state of the storage battery and/or the overheated state of the electric motor, whereby it is possible to prolong the service lives/life of the storage battery and/or the electric motor. Further, when the charge amount of the storage battery is not larger than the predetermined amount, the operations of the engine, the electric motor, and the transmission mechanism are corrected such that the time period over which an operation of charging the storage battery by the electric motor is executed is made longer, so that it is possible to quickly avoid shortage of the charge amount of the storage battery. In addition to this, when the charge amount of the storage battery is not larger than the predetermined lower limit value, one of inhibiting an operation of stopping the engine and continuing the operation of the engine for the predetermined time period is executed, and hence it is possible to avoid the storage battery from being overdischarged, whereby it is possible to prolong the service life of the storage battery.

The invention according to claim 17 is the control system 1 as recited in any one of claims 1, 2, 6, 11 and 12, wherein the hybrid vehicle V, V' i is equipped with a car navigation system 66 storing data indicative of information on a road on which the hybrid vehicle is traveling and neighborhood roads, the control system further comprising prediction means (ECU 2) for predicting a traveling situation of the hybrid vehicle based on the data stored in the car navigation system 66, wherein selection of the travel mode is performed further according to the predicted traveling situation of the hybrid vehicle.

With this configuration, the traveling situation of the hybrid vehicle is predicted based on the data indicative of information on the road on which the hybrid vehicle is traveling and the neighborhood roads, and the travel mode of the hybrid vehicle is selected according to the predicted traveling situation of the hybrid vehicle. This makes it possible to select a travel mode suitable for the traveling situation of the hybrid vehicle. For example, when it is predicted that the hybrid vehicle will travel downhill, it is expected that the charge amount of the storage battery is increased by regeneration by the electric motor during downhill traveling, and hence the ENG travel mode is selected, whereas when it is predicted that the hybrid vehicle will travel uphill, it is expected that the electric motor is required to assist the engine during uphill traveling, so that to charge the storage battery in advance, the charge travel mode can be selected. Further, it is possible to select a travel mode suitable for the traveling situation of the hybrid vehicle, thereby making it possible to further enhance fuel economy.

The invention according to claim 18 is a control system 1 for a hybrid vehicle V having an internal combustion engine 3 and an electric motor 4 capable of generating electric power, as motive power sources, a storage battery (battery 52) capable of supplying and receiving electric power to and from the electric motor 4, and a transmission mechanism 11, 31, 71 that transmits motive power from the engine and the electric motor to drive wheels DW while changing a speed of the motive power from the engine 3 and the electric motor 4, the control system comprising charge travel mode-executing means (ECU 2, steps 103, 104) for executing a charge travel mode in which driving of the drive wheels DW by the motive power from the engine 3 and charging of the storage battery by the electric motor 4 are simultaneously executed, as a travel mode of the hybrid vehicle V, engine driving energy-calculating means (ECU 2) for calculating engine driving energy ENE_eng2 which is energy transmitted from the engine 3 to the drive wheels DW, using engine efficiency Eeng and driving efficiency Etm_d of the transmission mechanism, charging energy-calculating means (ECU 2) for calculating charging energy (driving/charging energy ENE_mot2) which is electric energy to be charged when charging of the storage battery by electric power conversion of the motive power of the engine by the electric motor 4 is executed, using the engine efficiency Eeng, charging efficiency Etm_c of the transmission mechanism, charging/discharging efficiency Ebat_cd of the electric motor 4, and predicted efficiency Ehat which is an efficiency predicted to be exhibited when it is predicted that electric power in the storage battery is to be used, and charge fuel consumption amount parameter-calculating means (ECU 2, step 102) for calculating a charge consumption degree parameter (charge fuel consumption amount FC_ch) indicative of a degree of consumption of fuel to be consumed by the engine 3 when the charge travel mode is executed, using the engine driving energy and the charging energy, wherein the charge travel mode-executing means executes the charge travel mode such that a smallest value of the degree of consumption of fuel indicated by the charge consumption degree parameter can be obtained.

According to this control system for the hybrid vehicle, the charge consumption degree parameter indicative of the degree of consumption of fuel to be consumed by the engine when the charge travel mode is executed is calculated using the engine driving energy and the charging energy, and the charge travel mode is executed such that the smallest value of the degree of consumption of fuel indicated by the charge consumption degree parameter can be obtained. In this case, since the engine driving energy is calculated using the engine efficiency and the driving efficiency of the transmission mechanism, it is calculated as a value which accurately represents energy transmitted from the engine to the drive wheels. Further, the charging energy is calculated using the engine efficiency, the charging efficiency of the transmission mechanism, the charging/discharging efficiency of the electric motor, and the predicted efficiency, which is an efficiency predicted to be exhibited when it is predicted that electric power in the storage battery is to be used. Therefore, the charging energy is calculated as a value accurately indicating electric energy applied when the motive power of the engine is charged into the storage battery by conversion to electric power by the electric motor. Therefore, by using the engine driving energy and the charging energy, the charge consumption degree parameter can be calculated as a value accurately indicating the degree of consumption of fuel to be consumed by the engine when the charge travel mode is executed. Further, by executing the charge travel mode such that the smallest value of the fuel consumption degree indicated by the charge consumption degree parameter can be obtained, it is possible to improve fuel economy.

The invention according to claim 19 is a method of controlling a hybrid vehicle including an internal combustion engine 3, an electric motor 4 capable of generating electric power, a storage battery (battery 52 in embodiments (the same applies hereinafter in this section)) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the method comprising setting a first total fuel consumption (first total fuel consumption ratio TSFC1) which is a total fuel consumption (total fuel consumption ratio TSFC) of the hybrid vehicle in an ENG travel mode in which only the engine 3 is used as the motive power source, setting a second total fuel consumption (second total fuel consumption ratio TSFC2) which is a total fuel consumption of the hybrid vehicle in a charge travel mode in which the engine 3 is operated in a vicinity of an optimum fuel economy line and regeneration is performed by the electric motor 4 using a surplus amount of torque of the engine with respect to the required driving force, according to a predetermined assumed power usage effectiveness, which is a predicted value of driving efficiency of the hybrid vehicle to be exhibited when it is predicted that the hybrid vehicle is caused to travel by supplying electric power which has been charged into the storage battery during the charge travel mode, afterwards to the electric motor, and selecting a travel mode in which a smaller total fuel consumption can be obtained from the ENG travel mode and the charge travel mode, based on a result of comparison between the first total fuel consumption and the second total fuel consumption.

With this configuration, it is possible to obtain the same advantageous effects as provided by the invention according to claim 2.

The invention according to claim 20 is the method as recited in claim 19, wherein the second total fuel consumption is expressed by the following equation (B), and selection of the speed position is performed such that the second total fuel consumption is minimized during the charge travel mode.

$$\text{second total fuel consumption} = (\text{first fuel consumption amount} + \text{second fuel consumption amount})/(\text{traveling energy} + \text{EV traveling energy}) \quad \ldots \quad (B)$$

wherein first fuel consumption amount: amount of fuel supplied to the engine for causing the hybrid vehicle to travel during the charge travel mode

second fuel consumption amount: amount of fuel supplied to the engine for regeneration by the electric motor during the charge travel mode

traveling energy: traveling energy of the hybrid vehicle in the charge travel mode

EV traveling energy: predicted value of the traveling energy of the hybrid vehicle with which the hybrid vehicle is to travel when the hybrid vehicle is caused to travel by supplying electric power which has been charged into the storage battery during the charge travel mode, afterwards to the electric motor.

With this configuration, it is possible to obtain the same advantageous effects as provided by the invention according to claim 3.

The invention according to claim 21 is a method of controlling a hybrid vehicle V including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft, and transmitting the motive power to the drive wheels DW in a state in which a speed of the motive power is changed in one of a plurality of speed positions, a second transmission mechanism 31 that is capable of receiving motive power from the engine output shaft by a second input shaft 32, and transmitting the motive power to drive wheels in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the method comprising calculating, in association with each speed position of the first transmission mechanism 11 and the second transmission mechanism 31, a consumption degree parameter (charge fuel consumption amount FC_ch, assist fuel consumption amount FC_asst) which represents a degree of consumption of fuel to be consumed, when a difference between torque to be generated by the engine 3 when the engine 3 is operated in a given one of the speed positions of the first transmission mechanism 11 and the second transmission mechanism 31 such that the degree of consumption of fuel is minimized, and a required torque required TRQ by the hybrid vehicle V, is absorbed/supplemented by regenerative operation/powering operation by the electric motor 4, by using one of a past charge amount (past average charge amount ENE_chave), which is a charge amount on which charging efficiency of the storage battery up to a current time is reflected, and a predicted efficiency Eha, which is an efficiency predicted to be exhibited when it is predicted that an amount of electric power charged in the storage battery is to be used, selecting and executing a travel mode corresponding to a smallest value of a degree of consumption of fuel indicated by the consumption degree parameter which is calculated in association with each speed position, according to the required torque TRQ and a vehicle speed VP of the hybrid vehicle V and calculating the predicted efficiency Ehat, using charging/discharging efficiency Ebat_cd of the storage battery (battery 52), driving efficiency Emot_d of the electric motor 4, and driving efficiency Etm_d of the transmission mechanisms.

According to this control method, it is possible to provide a control method which is capable of attaining the same advantageous effects as provided by the invention according to claims 12 and 14.

[FIG. 1] A diagram schematically showing the arrangement of a hybrid vehicle to which a control system according to a first embodiment of the present invention is applied.
[FIG.2] A diagram showing an electrical arrangement of the control system.
[FIG. 3] A view showing an example of a selection map.
[FIG. 4] A view showing an example of a first total fuel consumption map.
[FIG. 5] A view showing an example of a first charging-time fuel consumption map.
[FIG. 6] A view showing an example of a second charging-time fuel consumption map.
[FIG. 7] A view showing an example of a second total fuel consumption map.
[FIG. 8] A view showing an example of a total fuel consumption map.
[FIG. 9] A diagram schematically showing the arrangement of a variation of the hybrid vehicle.
[FIG. 10] A flowchart of a travel control process executed by a control system according to a second embodiment.
[FIG. 11] A view showing an example of maps for use in calculating an engine fuel consumption amount FC_eng.
[FIG. 12] A view showing an example of a map for use in calculating the engine fuel consumption amount FC_eng, when in a third speed position.
[FIG. 13] A view showing an example of a map for use in calculating a charge fuel consumption amount FC_ch and an assist fuel consumption amount FC_asst, when in the third speed position.
[FIG. 14] A view showing an example of a map for use in calculating the engine fuel consumption amount FC_eng, the charge fuel consumption amount FC_ch, and the assist fuel consumption amount FC_asst, when in the third speed position.
[FIG. 15] A view showing an example of a map for use in calculating an EV fuel consumption amount FC_ev.
[FIG. 16] A flowchart of a process for calculating a past average charge amount ENE_chave.
[FIG. 17] A flowchart of a process for updating a map value of the assist fuel consumption amount FC_asst.
[FIG. 18] A flowchart of an EV travel control process.
[FIG. 19] A flowchart of a travel control process executed by a control system according to a third embodiment.

Hereafter, a control system for a hybrid vehicle according to a first embodiment of the present invention will be described with reference to drawings. Note that the present invention is by no means limited to the first embodiment. Further, component elements of the present embodiment include component elements that can be easily thought of by those skilled in the art and component elements which are substantially the same as those in the present embodiment. The hybrid vehicle V shown in FIG. 1 is a four-wheel vehicle comprising a pair of drive wheels DW (only one of which is shown) and a pair of driven wheels (not shown), and is equipped with an internal combustion engine (hereinafter referred to as the "engine") 3 and an electric motor (hereinafter referred to as the "motor") 4 as motive power sources. The engine 3 is a gasoline engine including a plurality of cylinders, and includes a crankshaft 3a. A fuel injection amount, fuel injection timing, ignition timing, etc. of the engine 3 are controlled by an ECU 2 of the control system 1 shown in FIG. 2.

The motor 4 is a general one-rotor-type brushless DC motor, which is a so-called motor generator, and includes a fixed stator 4a, and a rotatable rotor 4b. The stator 4a generates a rotating magnetic field, and is formed e.g. by an iron core and three-phase coils. Further, the stator 4a is mounted on a casing CA fixed to the vehicle, and is electrically connected to a battery 52, which is capable of being charged and discharged, via a power drive unit (hereinafter referred to as the "PDU") 51. The PDU 51 is formed by an electric circuit, such as an inverter, and is electrically connected to the ECU 2 (see FIG. 2). The above-mentioned rotor 4b is composed of e.g. magnets, and is disposed in a manner opposed to the stator 4a.

In the motor 4 constructed as above, when the ECU 2 controls the PDU 51 to thereby supply electric power from the battery 52 to the stator 4a via the PDU 51, the rotating magnetic field is generated, and accordingly the electric power is converted to motive power, by which the rotor 4b is rotated. In this case, the electric power supplied to the stator 4a is controlled whereby the motive power of the rotor 4b is controlled.

Further, when the rotor 4b is being rotated by input of motive power in a state in which supply of the electric power to the stator 4a is stopped, the ECU 2 controls the PDU 51 to thereby generate the rotating magnetic field. Accordingly, the motive power input to the rotor 4b is converted to electric power to perform power generation, and generated electric power is charged into the battery 52. Further, the ECU 2 controls the stator 4a, on an as-needed basis, to thereby control the motive power transmitted to the rotor 4b. Hereinafter, generating electric power by the motor 4 and charging the generated electric power into the battery 52 is referred to as the "regeneration", as deemed appropriate.

Further, the hybrid vehicle V is equipped with a driving force transmission system for transmitting the motive power from the engine 3 and the motor 4 to the drive wheels DW of the vehicle. This driving force transmission system includes a dual clutch transmission comprising a first transmission mechanism 11 and a second transmission mechanism 31.

The first transmission mechanism 11 transmits input motive power to the drive wheels DW after changing the speed thereof in one of a first speed position, a third speed position, a fifth speed position, and a seventh speed position. The first speed position to the seventh speed position have their transmission gear ratios set to higher-speed values as the number of the speed position is larger. Specifically, the first transmission mechanism 11 includes a first clutch C1, a planetary gear unit 12, a first input shaft 13, a third speed gear 14, a fifth speed gear 15, and a seventh speed gear 16, which are arranged coaxially with the crankshaft 3a of the engine 3.

The first clutch C1 is a dry multiple-disc clutch, and is formed e.g. by an outer clutch member C1a integrally mounted on the crankshaft 3a, and an inner clutch member C1b integrally mounted on one end of the first input shaft 13. The first clutch C1, which is controlled by the ECU 2, engages the first input shaft 13 with the crankshaft 3a when in an engaged state, and releases the engagement between the first input shaft 13 and the crankshaft 3a when in a disengaged state, to thereby disconnect between the two 13 and 3a.

The planetary gear unit 12 is of a single planetary type, and includes a sun gear 12a, a ring gear 12b which is rotatably provided around an outer periphery of the sun gear 12a and has a larger number of gear teeth than those of the sun gear 12a, a plurality of (e.g. three) planetary gears 12c (only two of which are shown) in mesh with the gears 12a and 12b, and a rotatable carrier 12d rotatably supporting the planetary gears 12c.

The sun gear 12a is integrally mounted on the other end of the first input shaft 13. The other end of the first input shaft 13 further has the rotor 4b of the above-described motor 4 integrally mounted thereon. The first input shaft 13 is rotatably supported by bearings (not shown). With the above arrangement, the first input shaft 13, the sun gear 12a, and the rotor 4b rotate in unison with each other.

Further, the ring gear 12b is provided with a lock mechanism BR. The lock mechanism BR is of an electromagnetic type, and is turned on or off by the ECU 2. In an ON state, the lock mechanism BR holds the ring gear 12b unrotatable, whereas in an OFF state, the lock mechanism BR permits rotation of the ring gear 12b. Note that a synchronizing clutch may be used as the lock mechanism BR.

The carrier 12d is integrally mounted on a hollow cylindrical rotating shaft 17. The rotating shaft 17 is relatively rotatably arranged outside the first input shaft 13, and is rotatably supported by bearings (not shown).

The third speed gear 14 is integrally mounted on the rotating shaft 17, and is rotatable in unison with the rotating shaft 17 and the carrier 12d. Further, the fifth speed gear 15 and the seventh speed gear 16 are rotatably provided on the first input shaft 13. Furthermore, the third speed gear 14, the seventh speed gear 16, and the fifth speed gear 15 are arranged side by side between the planetary gear unit 12 and the first clutch C1 in the mentioned order.

Further, the first input shaft 13 is provided with a first synchronizing clutch SC1 and a second synchronizing clutch SC2. The first synchronizing clutch SC1 includes a sleeve S1a, and a shift fork and an actuator (neither of which is shown). Under the control of the ECU 2, the first synchronizing clutch SC1 causes the sleeve S1a to move in an axial direction of the first input shaft 13, to thereby selectively engage the third speed gear 14 or the seventh speed gear 16 with the first input shaft 13.

The second synchronizing clutch SC2 is constructed similarly to the first synchronizing clutch SC1, and under the control of the ECU 2, causes a sleeve S2a to move in an axial direction of the first input shaft 13 to thereby engage the fifth speed gear 15 with the first input shaft 13.

Further, a first driven gear 18, a second driven gear 19, and a third driven gear 20 are in mesh with the third speed gear 14, the fifth speed gear 15, and the seventh speed gear 16, respectively. These first to third driven gears 18 to 20 are integrally mounted on an output shaft 21. The output shaft 21 is rotatably supported by bearings (not shown), and is disposed in parallel with the first input shaft 13. Further, a gear 21a is integrally mounted on the output shaft 21. The gear 21a is in mesh with a gear of a final reduction gear box FG including a differential gear. The output shaft 21 is connected to the drive wheels DW via the gear 21a and the final reduction gear box FG.

In the first transmission mechanism 11 constructed as above, gear positions of the first speed position and the third speed position are formed by the planetary gear unit 12, the third speed gear 14, and the first driven gear 18, and a gear position of the fifth speed position is formed by the fifth speed gear 15 and the second driven gear 19. A gear position of the seventh speed position is formed by the seventh speed gear 16 and the third driven gear 20. Further, motive power input to the first input shaft 13 is transmitted to the drive wheels DW via the output shaft 21, the gear 21a, and the final reduction gear box FG, while having the speed thereof changed in one of the first speed position, the third speed position, the fifth speed position, and the seventh speed position.

The above-described second transmission mechanism 31 transmits input motive power to the drive wheels DW while changing the speed of the motive power in one of the second speed position, the fourth speed position, and the sixth speed position. The second speed position to the sixth speed position have their transmission gear ratios set to higher-speed values as the number of the speed position is larger. Specifically, the second transmission mechanism 31 includes a second clutch C2, a second input shaft 32, a second input intermediate shaft 33, a second speed gear 34, a fourth speed gear 35, and a sixth speed gear 36. The second clutch C2 and the second input shaft 32 are arranged coaxially with the crankshaft 3a.

Similarly to the first clutch C1, the second clutch C2 is a dry multiple-disc clutch, and is formed by an outer clutch member C2a integrally mounted on the crankshaft 3a, and an inner clutch member C2b integrally mounted on one end of the second input shaft 32. The second clutch C2, which is controlled by the ECU 2, engages the second input shaft 32 with the crankshaft 3a when in an engaged state and releases the engagement between the second input shaft 32 and the crankshaft 3a when in a disengaged state to thereby disconnect between the two 32 and 3a.

The second input shaft 32 is formed into a hollow cylindrical shape. The second input shaft 32 is relatively rotatably arranged outside the first input shaft 13, and is rotatably supported by bearings (not shown). Further, a gear 32a is integrally mounted on the other end of the second input shaft 32.

The second input intermediate shaft 33 is rotatably supported by bearings (not shown), and is disposed in parallel with the second input shaft 32 and the above-described output shaft 21. A gear 33a is integrally mounted on the second input intermediate shaft 33. An idler gear 37 is in mesh with the gear 33a. The idler gear 37 is in mesh with the gear 32a of the second input shaft 32. Note that in FIG. 1, the idler gear 37 is illustrated at a position away from the gear 32a, for convenience of illustration. The second input intermediate shaft 33 is connected to the second input shaft 32 via the gear 33a, the idler gear 37, and the gear 32a.

The second speed gear 34, the sixth speed gear 36, and the fourth speed gear 35 are rotatably arranged on the second input intermediate shaft 33 in the mentioned order, and are in mesh with the above-described first driven gear 18, third driven gear 20, and second driven gear 19, respectively. Further, a third synchronizing clutch SC3 and a fourth synchronizing clutch SC4 are provided on the second input intermediate shaft 33. Both the synchronizing clutches SC3 and SC4 are constructed similarly to the first synchronizing clutch SC1.

Under the control of the ECU 2, the third synchronizing clutch SC3 causes a sleeve S3a thereof to move in the axial direction of the second input intermediate shaft 33, to thereby selectively engage the second speed gear 34 or the sixth speed gear 36 with the second input intermediate shaft 33. Under the control of the ECU 2, the fourth synchronizing clutch SC4 causes a sleeve S4a thereof to move in the axial direction of the second input intermediate shaft 33, to thereby engage the fourth speed gear 35 with the second input intermediate shaft 33.

In the second transmission mechanism 31 constructed as above, a gear position of the second speed position is formed by the second speed gear 34 and the first driven gear 18, and a gear position of the fourth speed position is formed by the fourth speed gear 35 and the second driven gear 19. A gear position of the sixth speed position is formed by the sixth speed gear 36 and the third driven gear 20. Further, motive power input to the second input shaft 32 is transmitted to the second input intermediate shaft 33 via the gear 32a, the idler gear 37, and the gear 33a, and the motive power transmitted to the second input intermediate shaft 33 is transmitted to the drive wheels DW via the output shaft 21, the gear 21a, and the final reduction gear box FG, while having the speed thereof changed in one of the second speed position, the fourth speed position, and the sixth speed position. As describe above, the output shaft 21 for transmitting motive power changed in speed to the drive wheels DW is shared by the first and second transmission mechanisms 11 and 31.

Further, the driving force transmission system is provided with a reverse mechanism 41. The reverse mechanism 41 comprises a reverse shaft 42, a reverse gear 43, and a fifth synchronizing clutch SC5 including a sleeve S5a. To cause the hybrid vehicle V to travel backward, the reverse mechanism 41 under the control of the ECU 2 causes the sleeve S5a to move in the axial direction of the reverse shaft 42, to thereby engage the reverse gear 43 with the reverse shaft 42.

Further, as shown in FIG. 2, a CRK signal is input from a crank angle sensor 61 to the ECU 2. The CRK signal is a pulse signal which is delivered along with rotation of the crankshaft 3a of the engine 3, whenever the crankshaft 3a rotates through a predetermined crank angle. The ECU 2 calculates an engine speed NE based on the CRK signal. Further, detection signals indicative of current and voltage values of electric current flowing into and out of the battery 52 are input from a current/voltage sensor 62 to the ECU 2. The ECU 2 calculates a state of charge SOC (charge amount) of the battery 52 based on the detection signals.

Furthermore, a detection signal indicative of a detected temperature of the battery 52 (hereinafter referred to as the "battery temperature") TB is input from a battery temperature sensor 63 to the ECU 2. Also input to the ECU 2 are a detection signal indicative of an accelerator pedal opening AP which is a stepped-on amount of an accelerator pedal (not shown) of the vehicle, from an accelerator pedal opening sensor 64, and a detection signal indicative of a vehicle speed VP, from a vehicle speed sensor 65. Further, data stored in a car navigation system 66 and indicative of information on a road on which the hybrid vehicle V is traveling and neighborhood roads is input to the ECU 2 as required.

The ECU 2 is implemented by a microcomputer comprising an I/O interface, a CPU, a RAM, and a ROM, and controls the operation of the hybrid vehicle V based on the detection signals from the aforementioned sensors 61 to 65 and the data from the car navigation system 66, according to control programs stored in the ROM.

The travel modes of the hybrid vehicle V constructed as above include an ENG travel mode, an EV travel mode, an assist travel mode, a charge travel mode, an engine start mode, and a deceleration regeneration mode. The operation of the hybrid vehicle V in each travel mode is controlled by the ECU 2. Hereafter, a description will be given of the travel modes one by one.

[ENG travel mode]

The ENG travel mode is a travel mode for using only the engine 3 as a motive power source. In the ENG travel mode, the motive power of the engine 3 (hereinafter referred as the "engine motive power") is controlled by controlling the fuel injection amount, the fuel injection timing, and the ignition timing of the engine 3. Further, the engine motive power is transmitted to the drive wheels DW while having the speed thereof changed by the first or second transmission mechanism 11 or 31.

First, a description will be sequentially given of operations performed when the speed of the engine motive power is changed by the first transmission mechanism 11 in one of the first speed position, the third speed position, the fifth speed position, and the seventh speed position. In this case, in all of the above-mentioned speed positions, the first input shaft 13 is engaged with the crankshaft 3a by controlling the first clutch C1 to the engaged state, and engagement of the second input intermediate shaft 33 with the crankshaft 3a is released by controlling the second clutch C2 to the disengaged state. Further, engagement of the reverse gear 43 with the reverse shaft 42 is released by controlling the fifth synchronizing clutch SC5.

In the case of the first speed position, the ring gear 12b is held unrotatable by controlling the lock mechanism BR to an ON state, and engagement of the third speed gear 14, the fifth speed gear 15, and the seventh speed gear 16 with the first input shaft 13 is released by the first and second synchronizing clutches SC1 and SC2.

With the above operations, the engine motive power is transmitted to the output shaft 21 via the first clutch C1, the first input shaft 13, the sun gear 12a, the planetary gears 12c, the carrier 12d, the rotating shaft 17, the third speed gear 14, and the first driven gear 18, and is further transmitted to the drive wheels DW via the gear 21a and the final reduction gear box FG. At this time, since the ring gear 12b is held unrotatable as described above, the engine motive power transmitted to the first input shaft 13 is reduced in speed at a transmission gear ratio corresponding to a tooth number ratio between the sun gear 12a and the ring gear 12b, and is thereafter transmitted to the carrier 12d. Further, the engine motive power is reduced in speed at a transmission gear ratio corresponding to a tooth number ratio between the third speed gear 14 and the first driven gear 18, and is thereafter transmitted to the output shaft 21. As a consequence, the engine motive power is transmitted to the drive wheels DW while having the speed thereof changed at a transmission gear ratio of the first speed position determined by the above-described two transmission gear ratios.

In the case of the third speed position, the rotation of the ring gear 12b is permitted by controlling the lock mechanism BR to the OFF state, and only the third speed gear 14 is engaged with the first input shaft 13 by controlling the first and second synchronizing clutches SC1 and SC2.

With the above operations, the engine motive power is transmitted to the output shaft 21 from the first input shaft 13 via the third speed gear 14 and the first driven gear 18. In this case, since the third speed gear 14 is engaged with the first input shaft 13 as described above, the sun gear 12a, the carrier 12d, and the ring gear 12b idly rotate in unison with each other. For this reason, in the case of the third speed position, differently from the case of the first speed position, the engine motive power is transmitted to the drive wheels DW, without having the speed thereof reduced by the planetary gear unit 12, while having the speed thereof changed at a transmission gear ratio of the third speed position determined by the tooth number ratio between the third speed gear 14 and the first driven gear 18.

In the case of the fifth speed position, similarly to the case of the third speed position, the rotation of the ring gear 12b is permitted by controlling the lock mechanism BR, and only the fifth speed gear 15 is engaged with the first input shaft 13 by controlling the first and second synchronizing clutches SC1 and SC2.

With the above operations, the engine motive power is transmitted to the output shaft 21 from the first input shaft 13 via the fifth speed gear 15 and the second driven gear 19. In this case, similarly to the case of the third speed position, the speed reduction function of the planetary gear unit 12 is not exhibited, but the engine motive power is transmitted to the drive wheels DW while having the speed thereof changed at a transmission gear ratio of the fifth speed position determined by a tooth number ratio between the fifth speed gear 15 and the second driven gear 19.

In the case of the seventh speed position, similarly to the case of the fifth speed position, the rotation of the ring gear 12b is permitted by controlling the lock mechanism BR, and only the seventh speed gear 16 is engaged with the first input shaft 13 by controlling the first and second synchronizing clutches SC1 and SC2.

With the above operations, the engine motive power is transmitted to the output shaft 21 from the first input shaft 13 via the seventh speed gear 16 and the third driven gear 20. In this case as well, the speed reduction function of the planetary gear unit 12 is not exhibited, but the engine motive power is transmitted to the drive wheels DW while having the speed thereof changed at a transmission gear ratio of the seventh speed position determined by a tooth number ratio between the seventh speed gear 16 and the third driven gear 20.

Next, a description will be sequentially given of operations performed when the engine motive power is changed in speed by the second transmission mechanism 31 in each one of the second speed position, the fourth speed position, and the sixth speed position. In this case, in all of these speed positions, engagement of the first input shaft 13 with the crankshaft 3a is released by controlling the first clutch C1 to a disengaged state, and the second input shaft 32 is engaged with the crankshaft 3a by controlling the second clutch C2 to an engaged state.
Further, the engagement of the reverse gear 43 with the reverse shaft 42 is released by controlling the fifth synchronizing clutch SC5.

In the case of the second speed position, only the second speed gear 34 is engaged with the second input intermediate shaft 33 by controlling the third and fourth synchronizing clutches SC3 and SC4. With this operation, the engine motive power is transmitted to the output shaft 21 via the second clutch C2, the second input shaft 32, the gear 32a, the idler gear 37, the gear 33a, the second input intermediate shaft 33, the second speed gear 34, and the first driven gear 18, and is further transmitted to the drive wheels DW via the gear 21a and the final reduction gear box FG. At this time, the engine motive power is transmitted to the drive wheels DW while having the speed thereof changed at a transmission gear ratio of the second speed position determined by a tooth number ratio between the second speed gear 34 and the first driven gear 18.

In the case of the fourth speed position, only the fourth speed gear 35 is engaged with the second input intermediate shaft 33 by controlling the third and fourth synchronizing clutches SC3 and SC4. With this operation, the engine motive power is transmitted to the output shaft 21 from the second input intermediate shaft 33 via the fourth speed gear 35 and the second driven gear 19. At this time, the engine motive power is transmitted to the drive wheels DW while having the speed thereof changed at a transmission gear ratio of the fourth speed position determined by a tooth number ratio between the fourth speed gear 35 and the second driven gear 19.

In the case of the sixth speed position, only the sixth speed gear 36 is engaged with the second input intermediate shaft 33 by controlling the third and fourth synchronizing clutches SC3 and SC4. With this operation, the engine motive power is transmitted to the output shaft 21 from the second input intermediate shaft 33 via the sixth speed gear 36 and the third driven gear 20. At this time, the engine motive power is transmitted to the drive wheels DW while having the speed thereof changed at a transmission gear ratio of the sixth speed position determined by a tooth number ratio between the sixth speed gear 36 and the third driven gear 20.

During the ENG travel mode, the speed positions of the first and second transmission mechanisms 11 and 31 are set such that excellent fuel economy of the engine 3 can be obtained.

[EV travel mode]

The EV travel mode is a travel mode in which only the motor 4 is used as a motive power source. In the EV travel mode, the motive power of the motor 4 (hereinafter referred as the "motor motive power") is controlled by controlling electric power supplied from the battery 52 to the motor 4. Further, the motor motive power is transmitted to the drive wheels DW while having the speed thereof changed by the first transmission mechanism 11 in one of the first speed position, the third speed position, the fifth speed position, and the seventh speed position. In this case, in all of these speed positions, engagement of the first and second input shafts 13 and 32 with the crankshaft 3a is released by controlling the first and second clutches C1 and C2 to the disengaged state. This disconnects the motor 4 and the drive wheels DW from the engine 3, and hence the motor motive power is prevented from being wastefully transmitted to the engine 3. Further, the engagement of the reverse gear 43 with the reverse shaft 42 is released by controlling the fifth synchronizing clutch SC5.

In the case of the first speed position, similarly to the case of the ENG travel mode, the ring gear 12b is held unrotatable by controlling the lock mechanism BR to the ON state, and the engagement of the third speed gear 14, the fifth speed gear 15, and the seventh speed gear 16 with the first input shaft 13 is released by controlling the first and second synchronizing clutches SC1 and SC2.

With the above operations, the motor motive power is transmitted to the output shaft 21 via the first input shaft, the sun gear 12a, the planetary gears 12c, the carrier 12d, the rotating shaft 17, the third speed gear 14, and the first driven gear 18. As a consequence, similarly to the case of the ENG travel mode, the motor motive power is transmitted to the drive wheels DW while having the speed thereof changed at the transmission gear ratio of the first speed position.

In the case of the third speed position, similarly to the case of the ENG travel mode, the rotation of the ring gear 12b is permitted by controlling the lock mechanism BR to the OFF state, and only the third speed gear 14 is engaged with the first input shaft 13 by controlling the first and second synchronizing clutches SC1 and SC2. With these operations, the motor motive power is transmitted to the output shaft 21 from the first input shaft 13 via the third speed gear 14 and the first driven gear 18. As a consequence, similarly to the case of the ENG travel mode, the motor motive power is transmitted to the drive wheels DW while having the speed thereof changed at the transmission gear ratio of the third speed position.

In the case of the fifth or seventh speed position, similarly to the case of the ENG travel mode, the lock mechanism BR and the first and second synchronizing clutches SC1 and SC2 are controlled. With these operations, the motor motive power is transmitted to the drive wheels DW while having the speed thereof changed at the transmission gear ratio of the fifth or seventh speed position.

Note that during the EV travel mode, the speed position of the first transmission mechanism 11 is set such that high efficiency of the whole hybrid vehicle V (i.e. high driving efficiency of the motor 4) can be obtained.

[Assist travel mode]

The assist travel mode is a travel mode in which the engine 3 is assisted by the motor 4. In the assist travel mode, torque of the engine 3 (hereinafter referred to as the "engine torque") is controlled such that a net fuel consumption ratio BSFC of the engine 3 is minimized (i.e. excellent fuel economy of the engine 3 can be obtained). Further, a shortage amount of the engine motive power with respect to a required driving force which is determined by torque required by a driver for the drive wheels DW (hereinafter referred to as the "required torque") TRQ and the vehicle speed VP is compensated for by torque of the motor 4 (hereinafter referred to as the "motor torque"). The required torque TRQ is calculated according to the detected accelerator pedal opening AP.

During the assist travel mode, when the engine motive power has its speed changed by the first transmission mechanism 11 (i.e. when the engine is in an odd-number speed position), a transmission gear ratio between the motor 4 and the drive wheels DW becomes equal to the transmission gear ratio of the speed position set by the first transmission mechanism 11. On the other hand, when the engine motive power has its speed changed by the second transmission mechanism 12 (i.e. when the engine is in an even-number speed position), the transmission gear ratio of one of the first speed position, the third speed position, the fifth speed position, and the seventh speed position of the first transmission mechanism 11 can be selected as the transmission gear ratio between the motor 4 and the drive wheels DW.

Further, during the assist travel mode, for example, when the engine motive power has its speed changed in the second speed position, one of the speed positions of the first transmission mechanism 11 is selected by pre-shifting the speed position, and the motor motive power is transmitted to the output shaft 21 via the first transmission mechanism 11. In this case, the first to third driven gears 18 to 20 of the output shaft 21 are in a state in mesh with both of gears in the odd-number speed position and gears in the even-number speed position, and therefore it is possible to synthesize the engine motive power having its speed changed in the odd-number speed position and the motor motive power having its speed changed in the even-number speed position. Note that the first clutch C1 is controlled to the disengaged state, whereby the engine motive power is not transmitted to the drive wheels DW via the first transmission mechanism 11. Further, the speed position of the first transmission mechanism 11, to which the speed position is pre-shifted, can be freely selected according to the traveling state of the hybrid vehicle V.

[Charge travel mode]

The charge travel mode is a travel mode in which electric power is generated by converting part of the engine motive power to electric power, and the generated electric power is charged into the battery 52. In the charge travel mode, the engine torque is controlled such that the net fuel consumption ratio BSFC of the engine 3 is minimized (i.e. excellent fuel economy of the engine 3 can be obtained). Further, electric power is generated by the motor 4 using a surplus amount of the engine torque with respect to the required torque TRQ, and the generated electric power is charged into the battery 52.

Similarly to the assist travel mode, during the charge travel mode, when the engine motive power has its speed changed by the first transmission mechanism 11 (i.e. when the engine is in the odd-number speed position), the transmission gear ratio between the motor 4 and the drive wheels DW becomes equal to the transmission gear ratio of the speed position of the first transmission mechanism 11. Further, when the engine motive power has its speed changed by the second transmission mechanism 12 (i.e. when the engine is in the even-number speed position), the transmission gear ratio of one of the first speed position, the third speed position, the fifth speed position, and the seventh speed position of the first transmission mechanism 11 can be selected as the transmission gear ratio between the motor 4 and the drive wheels DW.

Further, during the charge travel mode, for example, when the engine motive power has its speed changed in the second speed position, one of the speed positions of the first transmission mechanism 11 is selected by pre-shifting the speed position, and a braking force generated by power generation of the motor 4 is transmitted to the output shaft 21 via the first transmission mechanism 11. In this case, the first to third driven gears 18 to 20 of the output shaft 21 are in a state in mesh with both of the gears in the odd-number speed position and the gears in the even-number speed position, and therefore it is possible to synthesize the engine motive power the speed of which has been changed in the even-number speed position and the braking force from the motor 4 the speed of which has been changed in the odd-number speed position. Note that the first clutch C1 is controlled to the disengaged state, whereby the engine motive power is not transmitted to the drive wheels DW via the first transmission mechanism 11. Further, the speed position of the first transmission mechanism 11, to which the speed position is pre-shifted, can be freely selected according to the traveling state of the hybrid vehicle V.

Furthermore, during the charge travel mode, in a case where the engine motive power is transmitted to the drive wheels DW by the second transmission mechanism 31, when the transmission gear ratio between the motor 4 and the drive wheels DW is controlled to a value equal to the transmission gear ratio between the engine 3 and the drive wheels DW, the first input shaft 13 is engaged with the crankshaft 3a by the first clutch C1. This causes part of the engine motive power to be transmitted to the rotor 4b of the motor 4 via the first clutch C1 and the first input shaft 13.

[Engine start mode]

The engine start mode is an operation mode for starting the engine 3. In the engine start mode, in a case where the engine 3 is started during stoppage of the vehicle, the first input shaft 13 is engaged with the crankshaft 3a by controlling the first clutch C1 to the engaged state, and engagement of the second input shaft 32 with the crankshaft 3a is released by controlling the second clutch C2 to the disengaged state. Further, the rotation of the ring gear 12b is permitted by controlling the lock mechanism BR to the OFF state, and the engagement of the third speed gear 14, the fifth speed gear 15, and the seventh speed gear 16 with the first input shaft 13 is released by controlling the first and second synchronizing clutches SC1 and SC2. Furthermore, electric power is supplied from the battery 51 to the motor 4, whereby the motor motive power is generated.

With the above operations, the motor motive power is transmitted to the crankshaft 3a via the first input shaft 13 and the first clutch C1, whereby the crankshaft 3a is rotated. In this state, the engine 3 is started by controlling the fuel injection amount, the fuel injection timing, and the ignition timing of the engine 3, according to the above-described CRK signal. In this case, although the motor motive power transmitted to the sun gear 12a via the first input shaft 13 is transmitted to the ring gear 12b via the planetary gear 12c, since the rotation of the ring gear 12b is permitted as described above, the ring gear 12b idly rotates, and hence the motor motive power is not transmitted to the drive wheels DW via the carrier 12d and so forth.

Further, in a case where the engine 3 is started during the above-described EV travel mode, the first clutch C1 in the disengaged state is engaged to cause the first input shaft 13 to be engaged with the crankshaft 3a. This causes the motor motive power to be transmitted to the crankshaft 3a to rotate the crankshaft 3a. In this state, by controlling the fuel injection amount, the fuel injection timing, and the ignition timing of the engine 3, according to the CRK signal, the engine 3 is started. In this case, by progressively increasing the engagement force of the first clutch C1, torque transmitted from the motor 4 to the drive wheels DW is prevented from being suddenly reduced, which makes it possible to secure excellent drivability.

[Deceleration regeneration mode]

The deceleration regeneration mode is a travel mode in which regeneration of electric power is performed by the motor 4 using motive power from the drive wheels DW during decelerating traveling of the vehicle. In the deceleration regeneration mode, the first and second clutches C1 and C2 are controlled similarly to the case of the EV travel mode. Further, the motive power from the drive wheels DW is transmitted to the motor 4 in a state changed in speed via the final reduction gear box FG, the gear 21a, the output shaft 21, and the first transmission mechanism 11. The motive power transmitted from the drive wheels DW to the motor 4 is converted to electric power, and generated electric power is charged into the battery 52. Along therewith, braking force corresponding to the generated electric power acts from the motor 4 on the drive wheels DW.

During the deceleration regeneration mode, the speed position of the first transmission mechanism 11 is set such that high electric power generation efficiency of the motor 4 can be obtained. Further, similarly to the case of the EV travel mode, the engagement of the first and second input shafts 13 and 32 with the crankshaft 3a is released by the first and second clutches C1 and C2, whereby the motor 4 and the drive wheels DW are disconnected from the engine 3, which prevents the motive power from being wastefully transmitted from the drive wheels DW to the engine 3.

Note that when it is impossible to obtain sufficient braking force from the motor 4 during the deceleration regeneration mode, it is possible to engage the first clutch C1 in order to obtain a braking force from engine brake.

Next, a description will be given of selection of the travel mode between the above-described ENG travel mode and charge travel mode, and selection of speed positions of the first and second transmission mechanisms 11 and 31 in both of the travel modes. The selection of the travel mode and the speed positions is performed by searching a selection map shown in FIG. 3 according to the vehicle speed VP and the required torque TRQ. In this selection map, a region of the ENG travel mode and a region of the charge travel mode are set for the vehicle speed VP and the required torque TRQ, and the regions of the respective travel modes are divided on a speed position basis.

In FIG. 3, "ENG1" to "ENG5" show respective regions where the travel mode is the ENG travel mode and at the same time the speed position determining the transmission gear ratio between the engine 3 and the drive wheels DW (hereinafter referred to as the "engine-side speed position") is in a range of the first to fifth speed positions. Further, "E1M1", "E2M1", "E3M3", "E4M3" and "E5M5" all show regions of the charge travel mode. Further, as regions of the speed positions in the charge travel mode, "E1M1", "E3M3", and "E5M5" show respective regions where both the engine-side speed position and the speed position determining the transmission gear ratio between the motor 4 and the drive wheels DW (hereinafter referred to as the "motor-side speed position") are the first speed position, the third speed position, and the fifth speed position. Furthermore, "E2M1" shows a region where the engine-side speed position is the second speed position and at the same time the motor-side speed position is the first speed position, and "E4M3" shows a region where the engine-side speed position is the fourth speed position and at the same time the motor-side speed position is the third speed position.

For example, in the selection map, when an operation point of the hybrid vehicle V, determined by the vehicle speed VP and the required torque TRQ, is in the region of ENG1, the ENG travel mode is selected as the travel mode, and the first speed position is selected as the engine-side speed position. Further, when the operation point of the hybrid vehicle V is in the region of E1M1, the charge travel mode is selected as the travel mode, and the first speed position is selected as the engine-side speed position and the motor-side speed position. Note that although FIG. 3 shows the regions of the first to fifth speed positions for convenience of illustration, actually, there are set regions of the sixth and seventh speed positions as well.

This selection map is set based on a total fuel consumption ratio of the hybrid vehicle V, as described hereafter. Here, the term "total fuel consumption ratio" refers to a ratio of a fuel amount to final traveling energy, determined assuming that fuel as an energy source for the hybrid vehicle V is finally converted to the traveling energy of the hybrid vehicle V. First, a first total fuel consumption map shown in FIG. 4 is set. This first total fuel consumption map defines a total fuel consumption ratio in the ENG travel mode (hereinafter referred to as the "first total fuel consumption ratio TSFC1") in association with the vehicle speed VP and the required torque TRQ on a speed position basis. The first total fuel consumption ratio TSFC1 represents a ratio between a fuel consumption amount of the engine 3 in the ENG travel mode and traveling energy of the hybrid vehicle V obtained from fuel equal in amount to the fuel consumption amount (fuel consumption amount/traveling energy).

Further, the first total fuel consumption map is set in advance by experiment based on the efficiency of the engine 3 (output/input) and the difference in motive power transmission efficiency between a plurality of speed positions of the first and second transmission mechanisms 11 and 31. The motive power transmission efficiency is a ratio between the output torque and input torque of each of the first and second transmission mechanisms 11 and 31. The efficiency of the engine 3 and the motive power transmission efficiency are determined according to the vehicle speed VP and the required torque TRQ. In FIG. 4, the magnitude of the first total fuel consumption ratio TSFC1 is represented by hatching. Further, in actuality, the first total fuel consumption map is formed by a plurality of maps associated with the first to seventh speed positions, respectively. FIG. 4 shows an example of a map associated with the first speed position.

Next, there is set a map for defining a total fuel consumption ratio in the charge travel mode (hereinafter referred to as the "second total fuel consumption ratio TSFC2") on a speed position basis. During the charge travel mode, the torque of the engine 3 (hereinafter referred to as the "engine torque") is controlled via the fuel injection amount, the fuel injection timing, and the ignition timing such that the engine torque becomes BSFC bottom torque. The BSFC bottom torque is torque which makes it possible to obtain a minimum fuel consumption ratio with respect to the engine speed NE determined by the vehicle speed VP and the speed position. This causes the engine 3 to be operated in the vicinity of an optimum fuel economy line which minimizes the fuel consumption ratio of the engine 3. Further, during the charge travel mode, electric power is generated by the motor 4 using the surplus amount of the engine torque with respect to the required torque TRQ, and the generated electric power is charged into the battery 52. Afterwards, the charged electric power is used in the above-described assist travel mode and EV travel mode.

From the above, the second total fuel consumption ratio TSFC2 is expressed by the following equation (1):

$$TSFC2 = (FC1+FC2)/(VE+VEEV) \quad ... \quad (1)$$

wherein

FC1: the amount of fuel supplied to the engine 3 for traveling of the hybrid vehicle V during the charge travel mode (hereinafter referred to as the "first fuel consumption amount")

FC2: the amount of fuel supplied to the engine 3 for regeneration of electric power by the motor 4 during the charge travel mode (hereinafter referred to as the "second fuel consumption amount")

VE: traveling energy of the hybrid vehicle V during the charge travel mode (hereinafter referred to as the "traveling energy")
VEEV: a predicted value of the traveling energy of the hybrid vehicle V with which the hybrid vehicle V is caused to travel by supplying electric power charged into the battery 52 during the charge travel mode, afterwards to the motor 4 (hereinafter referred to as the "EV traveling energy").

In view of the above-described point, the map for defining the second total fuel consumption ratio TSFC2 is set in the following manner: First, a first charging-time fuel consumption map shown in FIG. 5 is set. This first charging-time fuel consumption map defines a first charging-time fuel consumption ratio in association with the vehicle speed VP and the required torque TRQ on a speed position basis. The first charging-time fuel consumption ratio is a ratio between the amount of fuel supplied to the engine 3 for traveling of the hybrid vehicle V during the charge travel mode, and the traveling energy of the hybrid vehicle V obtained from fuel equal in amount to the fuel consumption amount, and corresponds to (first fuel consumption amount FC1/traveling energy VE) in the above-mentioned equation (1).

Similarly to the first total fuel consumption map, the first charging-time fuel consumption map is set in advance by experiment based on the efficiency of the engine 3 and the difference in motive power transmission efficiency between the plurality of speed positions of the first and second transmission mechanisms 11 and 31. In FIG. 5, similarly to FIG. 4, the magnitude of the first charging-time fuel consumption ratio is represented by hatching. Further, in actuality, the first charging-time fuel consumption map is formed by a plurality of maps associated with the respective first to seventh speed positions, respectively. FIG. 5 shows an example of a map associated with the first speed position.

Next, there is set a second charging-time fuel consumption map shown in FIG. 6. This second charging-time fuel consumption map defines a second charging-time fuel consumption ratio in association with the vehicle speed VP and the required torque TRQ on a speed position basis. Further, the second charging-time fuel consumption ratio is a ratio between the amount of fuel supplied to the engine 3 for regeneration of electric power by the motor 4 during the charge travel mode, and the above-mentioned EV traveling energy, and corresponds to (second fuel consumption amount FC2/EV traveling energy VEEV) in the above-mentioned equation (1). The second charging-time fuel consumption map is set in advance by experiment based on the efficiency of the engine 3, the difference in motive power transmission efficiency between the plurality of speed positions of the first and second transmission mechanisms 11 and 31, the power generation efficiency of the motor 4, the charging efficiency of the battery 52, and assumed power usage effectiveness.

Here, the power generation efficiency is a ratio between electric energy generated by the motor 4 and torque input to the motor 4, and is determined according to the vehicle speed VP and the required torque TRQ. The charging efficiency is a ratio between electric energy charged into the battery 52 and electric energy supplied to the battery 52, and is regarded as a predetermined value when the second charging-time fuel consumption map is set.

Further, the assumed power usage effectiveness is a predicted value of driving efficiency of the hybrid vehicle V to be exhibited when the hybrid vehicle V is caused to travel by supplying electric power charged into the battery 52 during the charge travel mode, afterwards to the motor 4, and corresponds to a value obtained by multiplying predicted discharging efficiency, the predicted driving efficiency, and the predicted motive power transmission efficiency by each other. The predicted discharging efficiency and the predicted driving efficiency are predicted values of the discharging efficiency of the battery 52 and the driving efficiency of the motor 4, respectively, and the predicted motive power transmission efficiency is a predicted value of the motive power transmission efficiency of each speed position of the first and second transmission mechanisms 11 and 31. Note that the assumed power usage effectiveness is regarded as a predetermined value (e.g. 80%) when the second charging-time fuel consumption map is set.

Further, in FIG. 6, similarly to FIG. 4, the magnitude of the second charging-time fuel consumption ratio is represented by hatching. Furthermore, as described above, when the engine-side speed position is an even-number speed position, it is possible to select one of the first speed position, the third speed position, the fifth speed position, and the seventh speed position of the first transmission mechanism 11, as a motor-side speed position. Therefore, as second charging-time fuel consumption map, in actuality, there are set maps for respective cases where both the engine-side speed positions and the motor-side speed positions are the first speed position, the third speed position, the fifth speed position, and the seventh speed position, and also in association with each case where the engine-side speed position is the second speed position, the fourth speed position, or the sixth speed position, there is set a map for each case where the motor-side speed position is the first speed position, the third speed position, the fifth speed position or the seventh speed position, i.e. there are set maps for 3 X 4 = 12 combinations of cases, respectively. FIG. 6 shows an example of a case where both the engine-side speed position and the motor-side speed position are the first speed position.

Next, a second total fuel consumption map illustrated in FIG. 7 is set based on the first charging-time fuel consumption map (FIG. 5) and the second charging-time fuel consumption map (FIG. 6). This second total fuel consumption map defines the second total fuel consumption ratio TSFC2 (equation (1)) in association with the vehicle speed VP and the required torque TRQ on a speed position basis.

In FIG. 7, similarly to FIG. 4, the magnitude of the second total fuel consumption ratio TSFC2 is represented by hatching. Further, similarly to the second charging-time fuel consumption map shown in FIG. 6, as the second total fuel consumption map, in actuality, there are set maps for the respective cases where both the engine-side speed position and the motor-side speed positions are the first speed position, the third speed position, the fifth speed position, and the seventh speed position, and also in association with each case where the engine-side speed position is the second speed position, the fourth speed position, or the sixth speed position, there is set a map for each case where the motor-side speed position is the first speed position, the third speed position, the fifth speed position or the seventh speed position, i.e. there are set maps for 3 X 4 = 12 combinations of cases, respectively. FIG. 7 shows an example of the case where both the engine-side speed position and the motor-side speed position are the first speed position.

Then, a total fuel consumption map illustrated in FIG. 8 is set based on the first and second total fuel consumption maps (FIGS. 4 and 7) on a speed position basis. In this total fuel consumption map, the first total fuel consumption ratio TSFC1 defined by the first total fuel consumption map, i.e. the total fuel consumption ratio in the ENG travel mode, and the second total fuel consumption ratio TSFC2 defined by the second total fuel consumption map, i.e. the total fuel consumption ratio in the charge travel mode are compared, and the region of the travel mode is set such that a smaller total fuel consumption ratio TSFC can be obtained.

In FIG. 8, similarly to FIG. 4, the magnitude of the total fuel consumption ratio TSFC is represented by hatching. Further, similarly to the second charging-time fuel consumption map shown in FIG. 6, as the total fuel consumption map, in actuality, there are set maps for respective cases where both the engine-side speed positions and the motor-side speed positions are the first speed position, the third speed position, the fifth speed position, and the seventh speed position, and also in association with each case where the engine-side speed position is the second speed position, the fourth speed position, or the sixth speed position, there is set a map for each case where the motor-side speed position is the first speed position, the third speed position, the fifth speed position, or the seventh speed position, i.e. there are set maps for 3 X 4 = 12 combinations of cases, respectively. FIG. 8 shows an example of the case where both the engine-side speed position and the motor-side speed position are the first speed position.

Next, the plurality of total fuel consumption maps set on a speed position basis as described above are overlaid on each other, whereby the above-described selection map (FIG. 3) is set. When the total fuel consumption maps are overlaid on each other, the regions of the respective speed positions are set in the selection map such that the smallest total fuel consumption ratio TSFC can be obtained among the plurality of speed positions. Note that in the present embodiment, the ROM of the ECU 2 stores only the selection map, without storing the first and second total fuel consumption maps, the first and second charging-time fuel consumption maps, and the total fuel consumption maps (FIGS. 4 to 8), which are used only for setting the selection map.

Further, as shown in FIG. 3, in the selection map, when the engine-side speed position is set to an even-number speed position (the second speed position, the fourth speed position, or the sixth speed position), the motor-side speed position is set to a lower speed position than the engine-side speed position by one speed position. For example, when the engine-side speed position is set to the second speed position, the motor-side speed position is set to the first speed position. Furthermore, during the charge travel mode, the speed position is selected according to the selection map such that the second total fuel consumption ratio TSFC2 (the equation (1)) is minimized.

When the battery temperature TB which is detected becomes not lower than a predetermined temperature during the assist travel mode, the ECU 2 limits the output of the motor 4 to thereby limit engine assist by the motor 4. In this case, the engine torque is increased such that the amount of limited engine assistance is compensated for. Further, when the battery temperature TB becomes not lower than the predetermined temperature during the EV travel mode, the ECU 2 inhibits the EV travel mode, and switches the travel mode to the ENG travel mode, the charge travel mode, or the assist travel mode. Further, when the travel mode is switched to the assist travel mode, the output of the motor 4 is limited, as mentioned above.

Further, when the state of charge SOC is not larger than a predetermined lower limit value, a forced regeneration mode is selected, whereby the regeneration is forcibly performed by the motor 4 using part of the engine motive power. During the forced regeneration mode, selection of the speed position is performed based on a third total fuel consumption map (not shown) in place of the above-described selection map. This third total fuel consumption map defines the total fuel consumption ratio TSFC in association with the vehicle speed VP and the required torque TRQ on a speed position basis for during the forced regeneration mode. Further, when the speed position is selected according to the third total fuel consumption map, such a speed position as will enhance the power generation efficiency of the motor 4 is selected as the speed position of each of the first and second transmission mechanisms 11 and 31.

Further, the ECU 2 predicts a traveling situation of the hybrid vehicle V based on information on a road on which the hybrid vehicle V is traveling and neighborhood roads, stored in the above-mentioned car navigation system 66. The ECU 2 selects the travel mode not only according to the selection map but also according to the predicted traveling situation of the hybrid vehicle V. As a consequence, e.g. when the hybrid vehicle V is predicted to travel downhill, it is expected that the charge amount of the battery 52 will be increased during downhill traveling by the above-described deceleration regeneration mode, and hence the ENG travel mode is selected, whereas when the hybrid vehicle V is predicted to travel uphill, it is expected that the assist travel mode will be selected during uphill traveling, and hence to charge the battery 52 in advance, the charge travel mode is selected.

Further, the correspondence between various elements of the present embodiment and various elements of the invention is as follows: The crankshaft 3a and the battery 52 in the present embodiment correspond to an engine output shaft and a storage battery in the present invention, respectively. Further, the ECU 2 in the present embodiment corresponds to prediction means in the present invention. Furthermore, the required torque TRQ, the battery temperature TB, and the state of charge SOC in the present embodiment correspond to a required driving force, temperature of a storage battery, and a state of charge of a storage battery in the present invention, respectively. Further, the total fuel consumption ratio TSFC, and the first and second total fuel consumption ratios TSFC1 and TSFC2 in the present embodiment correspond to a total fuel consumption, and first and second total fuel consumptions in the present invention, respectively.

As described above, according to the present embodiment, when the crankshaft 3a of the engine 3 and the first input shaft 13 of the first transmission mechanism 11 are engaged with each other by the first clutch C1, and also engagement between the crankshaft 3a and the second input shaft 32 of the second transmission mechanism 31 is released by the second clutch C2, the engine motive power is transmitted to the drive wheels DW in a state in which the speed thereof is changed by one of the plurality of speed positions of the first transmission mechanism 11. Further, when engagement between the crankshaft 3a and the first input shaft 13 is released by the first clutch C1, and also the crankshaft 3a and the second input shaft 32 are engaged with each other by the second clutch C2, the engine motive power is transmitted to the drive wheels DW in a state in which the speed thereof is changed by one of the plurality of speed positions of the second transmission mechanism 31. Furthermore, the motor motive power is transmitted to the drive wheels DW in a state in which the speed thereof is changed by one of the plurality of speed positions of the first transmission mechanism 11.

Further, the selection of the travel mode and the speed position is performed according to the selection map (FIG. 3). In the selection map, the first total fuel consumption ratio TSFC1, i.e. the total fuel consumption ratio TSFC of each speed position of the hybrid vehicle V in the ENG travel mode, and the second total fuel consumption ratio TSFC2, i.e. the total fuel consumption ratio TSFC of each speed position of the hybrid vehicle V in the charge travel mode are compared, whereby the respective regions of the travel modes are set such that a smaller total fuel consumption ratio TSFC can be obtained, and further the respective regions of the speed positions of the first and second transmission mechanisms 11 and 31 are set such that the smallest total fuel consumption ratio TSFC can be obtained among the speed positions. Furthermore, the second total fuel consumption map defining the second total fuel consumption ratio TSFC2 is set according to the charging efficiency of the battery 52 and the predetermined assumed power usage effectiveness. From the above, it is possible to properly select the travel mode which makes it possible to obtain the smaller total fuel consumption ratio TSFC, and also properly select the speed position which minimizes the total fuel consumption ratio TSFC, which makes it possible to improve the fuel economy of the hybrid vehicle V.

Further, as to the first transmission mechanism 11 (odd-number speed position) and the second transmission mechanism 31 (even-number speed position), the latter suffers a larger loss since it has a larger number of meshes of gears, and further in the case of an even-number speed position, the reverse shaft 42 is rotated together via the idler gear 37. This loss is caused e.g. by a friction loss and stirring of lubricating oil in the gears, and normally amounts to approximately 3%. The friction loss is converted to a heat loss. Further, when the above-mentioned pre-shifting is performed, in addition to the second transmission mechanism 31 which transmits the engine motive power to the drive wheels DW, the first transmission mechanism 11 is rotated together in a state engaged with each other via the output shaft 21, which requires an extra motive power for causing the motor 4 to rotate. On the other hand, according to the present embodiment, selection of the speed position can be performed using the first and second total fuel consumption ratios TSFC1 and TSFC2 which are properly set in association with each speed position of the first and second transmission mechanisms 11 and 31, and therefore it is possible effectively obtain the advantageous effect that the fuel economy of the hybrid vehicle V can be improved.

Furthermore, during the charge travel mode, the speed position is selected such that the second total fuel consumption ratio TSFC2 expressed by the aforementioned equation (1) (TSFC2 = (FC1+FC2)/(VE+VEEV)) is minimized, so that it is possible to properly perform the selection of the speed position such that the total fuel consumption ratio TSFC of the hybrid vehicle V is minimized. Further, when the battery temperature TB which is detected is not lower than the predetermined temperature, the output of the motor 4 is limited. This makes it possible to suppress a rise in the battery temperature TB.

Further, when the state of charge SOC is not higher than the lower limit value, the forced regeneration mode is selected, whereby the regeneration is forcibly performed by the motor 4 using part of the engine motive power. Therefore, it is possible to increase the state of charge SOC, thereby making it possible to avoid overdischarge of the battery 52. During the forced regeneration mode, such a speed position as will enhance the power generation efficiency of the motor 4 is selected as a speed position of each of the first and second transmission mechanisms 11 and 31 without being based on the above-described selection map. Therefore, when the state of charge SOC is not higher than the lower limit value, and it is necessary to increase the state of charge SOC soon, it is possible to obtain high power generation efficiency of the motor 4, whereby it is possible to obtain a larger charge amount of the battery 52.

Further, the traveling situation of the hybrid vehicle V is predicted based on information on a road on which the hybrid vehicle V is traveling and neighborhood roads, stored in the car navigation system 66, and the travel mode is selected based on the predicted traveling situation of the hybrid vehicle V. As a consequence, when the hybrid vehicle V is predicted to travel downhill, it is expected that the charge amount of the battery 52 will be increased during downhill traveling by the deceleration regeneration mode, and hence the ENG travel mode can be selected, whereas when the hybrid vehicle V is predicted to travel uphill, it is expected that the assist travel mode will be selected during uphill traveling, and hence to charge the battery 52 in advance, the charge travel mode can be selected.

Furthermore, as is apparent from the regions of the speed positions of the selection map, during the charge travel mode, when the hybrid vehicle V is traveling in a state in which the speed of the engine motive power has been changed by the second transmission mechanism 31, a lower speed position than the speed position of the second transmission mechanism 31 is selected as the speed position of the first transmission mechanism 11. That is, such a speed position as will enhance the power generation efficiency of the motor 4 is selected as the speed position of the first transmission mechanism 11. This makes it possible to enhance the power generation efficiency of the motor 4.

The present invention can be applied to a hybrid vehicle V' shown in FIG. 9. In the figure, the same component elements as those of the hybrid vehicle V shown in FIG. 1 are denoted by the same reference numerals. The hybrid vehicle V' shown in FIG. 9 is distinguished from the hybrid vehicle V mainly in that it is provided with a transmission mechanism 71 in place of the first and second transmission mechanisms 11 and 31.

The transmission mechanism 71 is a stepped automatic transmission, and includes an input shaft 72 and an output shaft 73. The input shaft 72 is connected to the crankshaft 3a via a clutch C, and the rotor 4b of the motor 4 is integrally mounted on the input shaft 72. The clutch C is a dry multiple-disc clutch, similarly to the first and second clutches C1 and C2.

A gear 73a is integrally mounted on the output shaft 73. The gear 73a is in mesh with the gear of the above-described final reduction gear box FG. The output shaft 73 is connected to the drive wheels DW and DW via the gear 73a and the final reduction gear box FG. In the transmission mechanism 71 constructed as above, the engine motive power and the motor motive power are input to the input shaft 72, and the input motive power is transmitted to the drive wheels DW and DW, while having the speed thereof changed in one of a plurality of speed positions (e.g. the first to seventh speed positions). Further, the operation of the transmission mechanism 71 is controlled by the ECU 2.

Also when the control system according to the present invention is applied to the hybrid vehicle V', the selection of the travel mode, as well the selection of the speed position, and the selection of the travel mode are performed similarly to the case of the above-described control system 1, and hence detailed description thereof is omitted. As a consequence, the same advantageous effects as provided by the above-described embodiment can be obtained.

Note that although the transmission mechanism 71 is configured to transmit both the engine motive power and the motor motive power to the drive wheels DW in a state having the speed thereof changed, the transmission mechanism 71 may be configured to transmit only the engine motive power to the drive wheels DW in a state having the speed thereof changed. Alternatively, a transmission mechanism which transmits the engine motive power to the drive wheels DW in a state having the speed thereof changed, and a transmission mechanism which transmits the motor motive power to the drive wheels DW in a state having the speed thereof changed may be provided separately from each other. Furthermore, although the transmission mechanism 71 is a stepped automatic transmission, it may be a stepless automatic transmission (CVT).

Note that the present invention is by no means limited to the first embodiment (including the variation shown in FIG. 9) described above, but can be practiced in various forms. For example, although in the above-described embodiment, the motor motive power is limited when the battery temperature TB is not lower than the predetermined temperature, in place of or in combination with this, the motor motive power may be limited when the temperature of the motor 4, detected by a sensor or the like, is not lower than an associated predetermined temperature. This makes it possible to suppress a rise in the temperature of the motor 4.

Further, although in the above-described first embodiment, the travel mode and the speed position are selected according to the selection map (FIG. 3) set using the first and second total fuel consumption maps (FIGS. 4 and 7), this selection may be performed e.g. as follows: First and second total fuel consumption maps set on a speed position basis are stored in storage means, such as the ROM, and the first total fuel consumption ratio TSFC1 is calculated by searching the first total fuel consumption map according to the vehicle speed VP which is detected and the required torque TRQ, and the second total fuel consumption ratio TSFC2 is calculated by searching the second total fuel consumption map according to the vehicle speed VP which is detected and the required torque TRQ. Then, the calculated first and second total fuel consumption ratios TSFC1 and TSFC2 are compared in real time to select a travel mode which will make it possible to obtain a smaller total fuel consumption ratio TSFC, and select a speed position which will minimize the total fuel consumption ratio TSFC, from a plurality of speed positions.

In this case, the second total fuel consumption map defines the second total fuel consumption ratio TSFC2 in association with the vehicle speed VP and the required torque TRQ, but the charging efficiency of the battery 52 varies with the battery temperature TB. For this reason, for example, the charging efficiency of the battery 52 may be calculated in real time by searching a predetermined map according to the battery temperature TB and also the second total fuel consumption map may be updated in real time based on the calculated charging efficiency of the battery 52. Further, although in the above-described first embodiment, the second total fuel consumption map is set based on the first and second charging-time fuel consumption maps, the second total fuel consumption map may be set by creating e.g. a map on which the assumed power usage effectiveness is not reflected, as a map defining the total fuel consumption ration in the charge travel mode, and correcting the map according to the assumed power usage effectiveness. Further, although in the above-described first embodiment, the total fuel consumption ratio TSFC (the first and second total fuel consumption ratios TSFC1 and TSFC2) is used as a parameter indicative of the total fuel consumption of the hybrid vehicles V and V', the total fuel consumption ratio TSFC may be replaced by the total fuel consumption amount.

Next, a description will be given of a control system for a hybrid vehicle according to a second embodiment of the present invention. In the second embodiment, specific arrangements of the hybrid vehicle and the control system are the same as those of the hybrid vehicle V and the control system 1 according to the first embodiment. The following description will be given only of different points from the first embodiment, and component elements identical or similar to those of the first embodiment are designated by the same reference numerals, and a description thereof is omitted.

Note that in the present embodiment, the ECU 2 corresponds to travel mode-executing means, engine consumption degree parameter-calculating means, EV consumption degree parameter-calculating means, assist consumption degree parameter-calculating means, engine driving energy-calculating means, electric motor driving energy-calculating means, motive power source energy-calculating means, and consumption degree-selecting means.

Next, a travel control process executed by the ECU 2 will be described with reference to FIG. 10. Note that it is assumed that in the following description, some of various calculated values are stored in an EEPROM of the ECU 2, and the rest are stored in the RAM. The travel control process determines (selects) the travel mode and speed position of the hybrid vehicle V, and controls the operations of the engine 3, the motor 4, and the two transmission mechanisms 11 and 31 based on the determined travel mode and speed position. The travel control process is executed at a predetermined control period (e.g. 10 msec) during operation of the hybrid vehicle V, in a state in which the accelerator pedal is being stepped on by the driver.

As shown in the figure, first in a step 1 (shown as S1 in abbreviated form in FIG. 10; the following steps are also shown in abbreviated form), the required torque TRQ is calculated by searching a map, not shown, according to the accelerator pedal opening AP. In this case, the required torque TRQ is calculated such that it has a larger value as the accelerator pedal opening AP is larger.

Then, the process proceeds to a step 2, wherein a process for calculating a fuel consumption amount is executed. The fuel consumption amount corresponds to a value obtained by converting an efficiency at which motive power source energy, which is assumed to have been supplied to the whole motive power source (i.e. the engine 3 and/or the motor 4) in order to generate motive power, is converted to traveling energy (i.e. energy which drives the drive wheels DW) and electric energy charged into the battery 52, to the fuel consumption amount. Specifically, the fuel consumption amount is calculated by searching maps for calculating various fuel consumption amounts, described hereinafter.

In this case, as the maps for calculating the fuel consumption amount, there are provided maps for calculating a fuel consumption amount in the ENG travel mode (hereinafter referred to as the "engine fuel consumption amount") FC_eng, maps for calculating a fuel consumption amount in the assist travel mode (hereinafter referred to as the "assist fuel consumption amount") FC_asst and a fuel consumption amount in the charge travel mode (hereinafter referred to as the "charge fuel consumption amount") FC_ch, and maps for calculating a fuel consumption amount in the EV travel mode (hereinafter referred to as the "EV fuel consumption amount") FC_ev. Note that in the present embodiment, the engine fuel consumption amount FC_eng corresponds to an engine consumption degree parameter, the EV fuel consumption amount FC_ev corresponds to an EV consumption degree parameter, and the assist fuel consumption amount FC_asst corresponds to an assist consumption degree parameter.

First, a description will be given of the maps for calculating the engine fuel consumption amount FC_eng. In this case, as the maps for calculating the engine fuel consumption amount FC_eng, there are provided maps for the first to seventh speed positions (see FIG. 11) for use in transmitting the engine motive power to the drive wheels DW in the first to seventh speed positions, respectively. These maps are stored in the ROM of the ECU 2.

In this case, the maps for the first to seventh speed positions for calculating the engine fuel consumption amount FC_eng are shown in FIG. 11. Particularly, a third speed position map for the engine fuel consumption amount FC_eng is shown in FIG. 12. In FIGS. 11 and 12, the engine fuel consumption amount FC_eng is set such that the fuel consumption amount is smaller in a region indicated by thinner hatching than in a region indicated by thicker hatching. This also applies to various maps, described hereinafter. Map values in the maps for the first to seventh speed positions for calculating the engine fuel consumption amount FC_eng are set to values mapped based on the results of actual measurement. More specifically, the map values are each set to a minimum fuel consumption amount obtained when the engine 3 generates torque satisfying the required torque TRQ.

In the above-described step 2, the engine fuel consumption amount FC_eng for one of the first to seventh speed positions is calculated by searching the above maps for the first to seventh speed positions for calculating the engine fuel consumption amount FC_eng, according to the required torque TRQ and the vehicle speed VP. In this case, there is a map which has no map value of the engine fuel consumption amount FC_eng, depending on the region of the required torque TRQ and the vehicle speed VP. In this case, the engine fuel consumption amount FC_eng is not calculated.

Note that the map values of the maps for the first to seventh speed positions for calculating the engine fuel consumption amount FC_eng may be set in advance to values calculated by a calculation method, described hereinafter. Further, the following calculation method may be executed at a predetermined repetition period during driving of the hybrid vehicle V and the map values may be updated using the results of the calculation.

First, the engine fuel consumption amount FC_eng corresponds to a value obtained by converting engine travel total efficiency TE_eng to a fuel consumption amount. The engine travel total efficiency TE_eng is the efficiency of the whole hybrid vehicle V in the ENG travel mode, and is calculated as a ratio between the traveling energy of the hybrid vehicle V and the above-mentioned motive power source energy. Therefore, the engine travel total efficiency TE_eng is defined by the following equation (1) :

$$TE_eng = \frac{ENE_eng2}{ENE_eng1} \quad \cdots\cdots (1)$$

In this equation (1), ENE_eng1 represents engine fuel energy, and corresponds to a value obtained by converting energy generated by combustion of fuel in the engine 3, i.e. a fuel consumption amount, to energy. Further, ENE_eng2 represents engine driving energy, and corresponds to a value of the engine fuel energy transmitted to the drive wheels DW.

In this case, the engine driving energy ENE_eng2 is calculated by the following equation (2):

$$ENE_eng2 = ENE_eng1 \cdot Eeng \cdot Etm_d \quad \cdots\cdots (2)$$

In this equation (2), Eeng represents engine efficiency, and is calculated according to engine operating conditions, such as the engine speed NE. Further, Etm_d represents a driving efficiency of the transmission mechanisms, and is calculated according to the speed position.

When the equation (2) is substituted into the above equation (1), there is obtained the following equation (3). That is, the engine travel total efficiency TE_eng is calculated as the product of the engine efficiency Eeng and the driving efficiency Etm_d of the transmission mechanisms.

$$TE_eng = \frac{ENE_eng1 \cdot Eeng \cdot Etm_d}{ENE_eng1} = Eeng \cdot Etm_d \quad \cdots\cdots (3)$$

Therefore, the engine travel total efficiency TE_eng is calculated using the above equation (3) according to the vehicle speed VP, the speed position, and the required torque TRQ, and calculated values of TE_eng are converted to fuel consumption amounts, whereby it is possible to calculate map values of the maps for the first to seventh speed positions for calculating the engine fuel consumption amount FC_eng.

Next, a description will be given of the above-mentioned maps for calculating the assist fuel consumption amount FC_asst and the charge fuel consumption amount FC_ch. In the following description, out of the maps for calculating the assist fuel consumption amount FC_asst and the charge fuel consumption amount FC_ch, for example, a map for use when the engine motive power is transmitted to the drive wheels DW in the first speed position and at the same time motive power transmission between the motor 4 and the drive wheels DW is executed in the first speed position is referred to as the "E1M1 calculation map", and a map for use when the engine motive power is transmitted to the drive wheels DW in the second speed position and at the same time motive power transmission between the motor 4 and the drive wheels DW is executed in the first speed position is referred to as the "E2M1 calculation map".

Here, during the assist travel mode or the charge travel mode, as described above, when the engine motive power is transmitted to the drive wheels DW in an odd-number speed position, the motive power transmission between the motor 4 and the drive wheels DW can be executed in the same odd-number speed position, owing to the structures of the first and second transmission mechanisms 11 and 31. On the other hand, when the engine motive power is transmitted to the drive wheels DW in an even-number speed position, the motive power transmission between the motor 4 and the drive wheels DW can be executed in any one of the four odd-number speed positions. Therefore, as the maps for calculating the assist fuel consumption amount FC_asst and the charge fuel consumption amount FC_ch, there are provided sixteen types of maps in total, specifically, the E1M1 calculation map, an E2Mi calculation map (i = 1, 3, 5, 7), an E3M3 calculation map, an E4Mi calculation map, an E5M5 calculation map, an E6Mi calculation map, and an E7M7 calculation map. These maps are stored in the EEPROM of the ECU 2.

In this case, for example, the E3M3 calculation map is specifically shown in FIG. 13. As shown in the figure, in this map, a region upper than a line connecting between operation points at each of which a minimum net fuel consumption ratio BSFC can be obtained when torque generated by the engine 3 satisfies the required torque TRQ (in other words, a minimum fuel consumption amount line) forms a map for calculating the assist fuel consumption amount FC_asst, and a region lower than the line forms a map for calculating the charge fuel consumption amount FC_ch.

This map is created by creating an E3M3 calculation map for calculating only the assist fuel consumption amount FC_asst and an E3M3 calculation map for calculating only the charge fuel consumption amount FC_ch, and thereafter causing portions of the two maps where the efficiency is the higher of the two maps (i.e. the fuel consumption amount is smaller) to remain. The E3M3 calculation map is configured as above. Although the other maps for calculating the assist fuel consumption amount FC_asst and the charge fuel consumption amount FC_ch are not specifically shown, they are created by the same method as the method of creating the E3M3 calculation map.

In the above-described step 2 in FIG. 10, by searching the above sixteen types of maps according to the required torque TRQ and the vehicle speed VP, there is calculated the assist fuel consumption amount FC_asst or the charge fuel consumption amount FC_ch in which the speed positions are represented by EjMi (j = 1 to 7, i = 1, 3, 5, 7). In this case, there are maps which have no map values of the two fuel consumption amounts FC_asst and FC_ch, depending on the region of the required torque TRQ and the vehicle speed VP. In this case, the two fuel consumption amounts FC_asst and FC_ch are not calculated.

Note that map values of the maps for calculating the assist fuel consumption amount FC_asst and the charge fuel consumption amount FC_ch are set to values calculated by the following calculation methods: First, a description will be given of the method of calculating the map values of the charge fuel consumption amount FC_ch. The charge fuel consumption amount FC_ch corresponds to a value obtained by converting charge travel total efficiency TE_ch to a fuel consumption amount. The charge travel total efficiency TE_ch is the efficiency of the whole hybrid vehicle V in the charge travel mode, and is calculated as a ratio between the sum of the traveling energy of the hybrid vehicle V and electric energy charged into the battery 52 in the charge travel mode, and the above-mentioned motive power source energy. Therefore, the charge travel total efficiency TE_ch is defined by the following equation (4) :

$$TE_ch = \frac{ENE_eng2 + ENE_mot2}{ENE_eng1 + ENE_mot1} \quad \cdots\cdots (4)$$

In this equation (4), ENE_mot1 represents motor charging/discharging energy, and ENE_mot2 represents driving/charging energy. The motor charging/discharging energy ENE_mot1 corresponds to a value obtained by converting fuel used for charging the battery 52 in the charge travel mode to energy, and is calculated, as described hereinafter.

Further, the driving/charging energy ENE_mot2 (electric motor driving energy) is electric energy (charging energy) which is charged into the battery 52 via the drive wheels DW and the motor 4 in the charge travel mode, and can be defined as expressed by the following equation (5):

$$ENE_mot2 = ENE_mot1 \cdot Eeng \cdot Etm_c \cdot Emot_c \cdot [Ebat_cd \cdot Emot_d \cdot Etm_d] \quad \cdots\cdots (5)$$

In this equation (5), Etm_c represents the charging efficiency of the transmission mechanisms, and is calculated according to the speed position. Further, Emot_c and Emot_d represent motor charging efficiency and motor driving efficiency, respectively, and are calculated according to the speed position, the vehicle speed VP, and the required torque TRQ. Furthermore, Ebat_cd represents the charging/discharging efficiency of the battery 52, and is calculated according to the state of charge SOC. Note that in the present embodiment, the motor driving efficiency Emot_d corresponds to driving efficiency of the electric motor, and the charging/discharging efficiency Ebat_cd of the battery 52 corresponds to charging/discharging efficiency of the storage battery.

In the above equation (5), a value enclosed by [] on the right side corresponds to efficiency provided when electric power charged into the battery 52 is used for conversion to motive power by the motor 4 in the future. Therefore, by indicating the efficiency as predicted efficiency Ehat, there is obtained the following equation (6) :

$$Ehat = Ebat_cd \cdot Emot_d \cdot Etm_d \quad \cdots\cdots (6)$$

When the above equation (6) and the aforementioned equation (2) are substituted into the above equation (4), there is obtained the following equation (7).

$$TE_ch = \frac{ENE_eng1 \cdot Eeng \cdot Etm_d + ENE_mot1 \cdot Eeng \cdot Etm_c \cdot Emot_c \cdot Ehat}{ENE_eng1 + ENE_mot1} \quad \cdots\cdots (7)$$

Therefore, by calculating the charge travel total efficiency TE_ch using this equation (7) and converting calculated values of TE_ch to fuel consumption amounts, it is possible to calculate the map values of the charge fuel consumption amount FC_ch in the above-described sixteen types of maps (the E1M1 calculation map to the E7M7 calculation map). In this case, respective parameters in the equation (7) are specifically calculated as follows:

The engine fuel energy ENE_eng1 is calculated by calculating a fuel amount which generates such engine torque as will make it possible to obtain the minimum net fuel consumption ratio BSFC (hereinafter referred to as the "optimum fuel economy torque") according to the vehicle speed VP and the speed position, and converting the fuel amount to energy. Further, the motor charging/discharging energy ENE_mot1 is calculated by converting a value obtained by subtracting the required torque TRQ from the optimum fuel economy torque, to energy. Furthermore, the predicted efficiency Ehat is calculated by map search according to the vehicle speed VP, the speed position, and the required torque TRQ, and the efficiencies Eeng, Etm_d, Emot_c and Etm_c are calculated by the above-described methods.

Since the map values of the charge fuel consumption amount FC_ch are calculated by the above method, each map value of the charge fuel consumption amount FC_ch is set as a value corresponding to the consumption amount of fuel consumed when the difference between torque generated by the engine when the engine 3 is operated with a fuel amount that minimizes the net fuel consumption ratio BSFC and the required torque TRQ, that is, the surplus amount of the generated torque with respect to the required torque TRQ is absorbed by regeneration control of the motor 4.

Next, a description will be given of the above-mentioned method of calculating the map values of the assist fuel consumption amount FC_asst. The assist fuel consumption amount FC_asst corresponds to a value obtained by converting assist travel total efficiency TE_asst to a fuel consumption amount. The assist travel total efficiency TE_asst is the efficiency of the whole hybrid vehicle V in the assist travel mode, and is calculated as a ratio between the traveling energy of the hybrid vehicle V and the above-mentioned motive power source energy. Therefore, the assist travel total efficiency TE_asst is defined by the following equation (8):

$$TE_asst = \frac{ENE_eng2 + ENE_mot2}{ENE_eng1 + ENE_mot1} \quad \cdots\cdots (8)$$

In this equation (8), the motor charging/discharging energy ENE_mot1 corresponds to the amount of electric power consumed for conversion to motive power by the motor 4. Further, in the assist travel mode, the driving/charging energy ENE_mot2 can be defined by the following equation (9) :

$$ENE_mot2 = [ENE_mot1 \cdot Eeng \cdot Etm_c \cdot Emot_c] \cdot Ebat_cd \cdot Emot_d \cdot Etm_d \quad \cdots\cdots (9)$$

In the above equation (9), a value enclosed by [] on the right side corresponds to the amount of electric power charged into the battery 52. Therefore, by indicating the amount of electric power by a charge amount ENE_ch, there is obtained the following equation (10). Note that the charge amount ENE_ch is calculated at a predetermined control period during the charge travel mode, as described hereinafter.

$$ENE_ch = ENE_mot1 \cdot Eeng \cdot Etm_c \cdot Emot_c \quad \cdots\cdots (10)$$

In this case, since the charge amount ENE_ch represents a calculated value obtained by a single calculation, to cause states of charge in the past to be reflected on the charge amount, an average value of charge amounts ENE_ch obtained by a predetermined number of times of calculations up to the present time point is calculated as a past average charge amount ENE_chave by the moving average calculation method, as described hereinafter. When the value enclosed by [] on the right side of the equation (9) is replaced by the past average charge amount ENE_chave, there is obtained the following equation (11) :

$$ENE_mot2 = ENE_chave \cdot Ebat_cd \cdot Emot_d \cdot Etm_d \quad \cdots\cdots (11)$$

Then, when the above equation (11) and the aforementioned equation (2) are substituted into the above equation (8), there is obtained the following equation (12).

$$TE_asst = \frac{ENE_eng1 \cdot Eeng \cdot Etm_d + ENE_chave \cdot Ebat_cd \cdot Emot_d \cdot Etm_d}{ENE_eng1 + ENE_mot1} \quad \cdots\cdots (12)$$

Therefore, by calculating the assist travel total efficiency TE_asst using this equation (12) and converting calculated values of TE_asst to fuel consumption amounts, it is possible to calculate the map values of the assist fuel consumption amount FC_asst in the above-described sixteen types of maps (the E1M1 calculation map to the E7M7 calculation map). In this case, respective parameters in the equation (12) are specifically calculated as follows:

The engine fuel energy ENE_eng1 is calculated by calculating a fuel amount which generates the above-mentioned optimum fuel economy torque according to the vehicle speed VP and the speed position and converting the fuel amount to energy. Further, the motor charging/discharging energy ENE_mot1 is calculated by converting a value obtained by subtracting the optimum fuel economy torque from the required torque TRQ, to energy. Furthermore, the efficiencies Eeng, Etm_d, Emot_c, and Etm_c are calculated by the above-described methods. In addition to this, the past average charge amount ENE_chave is calculated during traveling of the hybrid vehicle V at a predetermined control period, as described hereinafter. Accordingly, the map values of the assist fuel consumption amount FC_asst are updated at the predetermined control period, so that the regions of the assist fuel consumption amount FC_asst in the map in FIG. 13 are also changed.

Since the map values of the assist fuel consumption amount FC_asst are set by the above method, each map value of the assist fuel consumption amount FC_asst is calculated as a value corresponding to the consumption amount of fuel consumed when the difference between torque generated when the engine 3 is operated with the fuel amount that minimizes the net fuel consumption ratio BSFC and the required torque TRQ, that is, the insufficient amount of the generated torque with respect to the required torque TRQ is compensated for by powering control by the motor 4.

Note that the third speed position map in FIG. 11 and the map in FIG. 13 may be replaced by a map shown in FIG. 14. The map shown in FIG. 14 is formed by combining the third speed position map in FIG. 11 and the map in FIG. 13 and thereafter causing portions each indicating the smallest one of the three fuel consumption amounts FC_eng, FC_ch, and FC_asst in the third speed position to remain. Therefore, by searching this map according to the required torque TRQ and the vehicle speed VP, it is possible to calculate the smallest value of the three fuel consumption amounts FC_eng, FC_ch, and FC_asst for the third speed position. When this map is used as well, the map values of the assist fuel consumption amount FC_asst are updated at the predetermined control period, as described above, so that the regions of the assist fuel consumption amount FC_asst in the map in FIG. 14 are also changed.

Next, a map for calculating the above-mentioned EV fuel consumption amount FC_ev will be described with reference to FIG. 15. The map shown in the figure is formed by creating maps for calculating the EV fuel consumption amount FC_ev for the first speed position, the third speed position, the fifth speed position, and the seventh speed position, based on the results of actual measurements, and then combining the four maps such that portions each indicating the smallest fuel consumption amount of the four maps are caused to remain.

In the above-described step 2 in FIG. 10, the maps in FIG. 15 are searched according to the required torque TRQ and the vehicle speed VP, whereby the EV fuel consumption amount FC_ev for one of the first speed position, the third speed position, the fifth speed position, and the seventh speed position is calculated. In this case, there are regions which have no map values of the EV fuel consumption amount FC_ev, depending on the region of the required torque TRQ and the vehicle speed VP. In this case, the EV fuel consumption amount FC_ev is not calculated.

Note that the map values of the EV fuel consumption amount FC_ev may be updated by a method described hereinafter: The EV fuel consumption amount FC_ev corresponds to a value obtained by converting EV travel total efficiency TE_ev, which is the efficiency of the whole hybrid vehicle V in the EV travel mode, to a fuel consumption amount. Since the EV travel total efficiency TE_ev is calculated as a ratio between the traveling energy of the hybrid vehicle V and the above-mentioned motive power source energy, the EV travel total efficiency TE_ev is defined by the following equation (13):

$$
\begin{aligned}
TE_ev &= \frac{ENE_mot2}{ENE_mot1} \\
&= \frac{ENE_chave \cdot Ebat_cd \cdot Emot_d \cdot Etm_d}{ENE_mot1} \qquad \cdots\cdots (13)
\end{aligned}
$$

In this case, in the above equation (13), the motor charging/discharging energy ENE_mot1 is calculated by converting the required torque TRQ to energy. Therefore, the EV fuel consumption amount FC may be calculated at a predetermined control period by converting the EV travel total efficiency TE_ev calculated by the equation (13) to a fuel consumption amount, and the map values of the EV fuel consumption amount FC_ev may be updated using the results of the calculation.

Referring again to FIG. 10, in the step 2, after calculating the values of the four fuel consumption amounts FC_eng, FC_asst, FC_ch, and FC_ev according to the vehicle speed VP and the required torque TRQ, as described above, the process proceeds to a step 3, wherein the smallest value of the four fuel consumption amounts FC_eng, FC_asst, FC_ch, and FC_ev is selected, and a speed position and a travel mode corresponding to the selected fuel consumption amount are determined as the current speed position and travel mode.

Then, the process proceeds to a step 4, wherein the operations of the engine 3, the motor 4, and the transmission mechanisms 11 and 31 are controlled such that the speed position and the travel mode determined in the step 3 are put into effect. After that, the process is terminated.

Next, a process for calculating the past average charge amount ENE_chave will be described with reference to FIG. 16. This calculation process is executed at a predetermined control period (e.g. 10 msec) during execution of the charge travel mode.

As shown in the figure, first, in a step 10, the engine fuel energy ENE_eng1 during the charge travel mode is calculated by calculating a fuel amount which generates the optimum fuel economy torque according to the vehicle speed VP and the speed position, and converting the fuel amount to energy, as described hereinabove. After that, the process proceeds to a step 11, wherein the motor charging/discharging energy ENE_mot1 is calculated by converting a value obtained by subtracting the required torque TRQ from the optimum fuel economy torque, to energy, as described above.

Next, in a step 12, the engine efficiency Eeng is calculated according to the engine operating conditions, such as the engine speed NE, as described above. After that, in a step 13, the charging efficiency Etm_c of the transmission mechanism is calculated according to the speed position, as described hereinabove.

Then, the process proceeds to a step 14, wherein the motor charging efficiency Emot_c is calculated according to the speed position, the vehicle speed VP, and the required torque TRQ, as described above. In a step 15 following the step 14, the charge amount ENE_ch is calculated by the aforementioned equation (10).

Next, in a step 16, the past average charge amount ENE_chave is calculated by calculating a moving average of a predetermined number of calculated values of the charge amounts ENE_ch, including the current calculated value of the charge amount ENE_ch, as described hereinabove. This past average charge amount ENE_chave is stored in the EEPROM. After that, the present process is terminated.

As described above, since the past average charge amount ENE_chave is calculated by calculating a moving average of the predetermined number of the charge amounts ENE_ch, the past average charge amount ENE_chave is calculated as a charge amount on which the charging efficiency of the battery 52 up to the current time is reflected. Note that in the above-described step 16, the past average charge amount ENE_chave may be calculated as an arithmetic mean value or a weighted average value of the predetermined number of the charge amounts ENE_ch.

Next, a process for updating the above-described map values of the assist fuel consumption amount FC_asst will be described with reference to FIG. 17. This updating process is executed at a predetermined control period (e.g. 10 msec) during the assist travel mode.

As shown in the figure, first, in a step 20, the engine fuel energy ENE_eng1 during the assist travel mode is calculated by calculating a fuel amount which generates the optimum fuel economy torque according to the vehicle speed VP and the speed position, and converting the fuel amount to energy, as described hereinabove. After that, the process proceeds to a step 21, wherein the motor charging/discharging energy ENE_mot1 is calculated by converting a value obtained by subtracting the optimum fuel economy torque from the required torque TRQ, to energy, as described above.

Next, in a step 22, the engine efficiency Eeng is calculated according to the engine operating conditions, such as the engine speed NE, as described above. After that, in a step 23, the driving efficiency Etm_d of the transmission mechanisms is calculated according to the speed position, as described hereinabove.

Then, the process proceeds to a step 24, wherein the past average charge amount ENE_chave stored in the EEPROM is read in therefrom. In a step 25 following the step 24, the charging/discharging efficiency Ebat_cd of the battery 52 is calculated according to the state of charge SOC, as described hereinabove.

Next, in a step 26, the motor driving efficiency Emot_d is calculated according to the speed position, the vehicle speed VP, and the required torque TRQ, as described above. In a step 27 following the step 26, the assist travel total efficiency TE_asst is calculated by the aforementioned equation (12).

Then, the process proceeds to a step 28, wherein the assist fuel consumption amount FC_asst is calculated by converting the assist travel total efficiency TE_asst to a fuel consumption amount. In a step 29 following the step 28, a map value of the assist fuel consumption amount FC_asst in the EEPROM, which is associated with the current speed position, the required torque TRQ, and the vehicle speed VP, is overwritten by the value calculated in the step 28. That is, the map value is updated. After that, the present process is terminated.

As described above, according to the control system for the hybrid vehicle of the second embodiment, the four fuel consumption amounts FC_eng, FC_asst, FC_ch, and FC_ev are calculated by searching the above-described various maps, and the operations of the engine 3, the motor 4, and the transmission mechanisms 11 and 31 are controlled such that the hybrid vehicle V is caused to travel in a speed position and a travel mode corresponding to the smallest value of the results of calculation of the fuel consumption amounts. Therefore, it is possible to cause the hybrid vehicle V to travel in the combination of the speed position and the travel mode which minimize the fuel consumption amount (i.e. minimize the degree of fuel consumption), whereby it is possible to suppress the fuel consumption of the engine 3, and thereby improve fuel economy.

Further, since the four fuel consumption amounts FC_eng, FC_asst, FC_ch, and FC_ev are calculated by taking into account at least two of the engine fuel energy ENE_eng1, the engine driving energy ENE_eng2, the motor charging/discharging energy ENE_mot1, and the driving/charging energy ENE_mot2, it is possible to calculate the above fuel consumption amounts as values on which the efficiency of the hybrid vehicle V in its entirety is accurately reflected. This makes it possible, compared with the conventional case where only the fuel consumption ratio of the engine is taken into account, to properly suppress the fuel consumption of the engine 3, thereby making it possible to further improve fuel economy.

Furthermore, since the assist fuel consumption amount FC_asst is calculated using the past average charge amount ENE_chave and the motor charging/discharging energy ENE_mot1, it is possible to accurately calculate the assist fuel consumption amount FC_asst while taking the amount of fuel consumed for charging the storage battery into account.

Further, the control process in FIG. 10 may be configured for execution thereof such that if the conditions for executing the charge travel mode are not satisfied, in the above-described step 2, the three fuel consumption amounts FC_eng, FC_asst, and FC_ch are calculated, and in the steps 3 and 4, the operations of the engine 3, the motor 4, and the transmission mechanisms 11 and 31 are controlled such that the hybrid vehicle V is caused to travel in a speed position and a travel mode corresponding to the smallest value of the results of calculation of the fuel consumption amounts. With this configuration, it is possible to cause the hybrid vehicle V to travel in one of the speed positions in the ENG travel mode, the assist travel mode, and the EV travel mode, which minimizes the fuel consumption amount. This makes it possible to suppress the fuel consumption of the engine 3, thereby making it possible to improve fuel economy.

Note that although the second embodiment is an example which uses the engine fuel consumption amount FC_eng as the engine consumption degree parameter, the engine consumption degree parameter in the present invention is not limited to this, but any suitable engine consumption degree parameter may be used insofar as it represents the degree of consumption of fuel consumed by the engine when the ENG travel mode is executed. For example, the above-described engine travel total efficiency TE_eng or a value obtained by converting the engine travel total efficiency TE_eng to a fuel consumption ratio may be used as the engine consumption degree parameter.

Further, although the second embodiment is an example which uses the EV fuel consumption amount FC_ev as the EV consumption degree parameter, the EV consumption degree parameter in the present invention is not limited to this, but any suitable EV consumption degree parameter may be used insofar as it represents the degree of consumption of fuel corresponding to the degree of consumption of electric power of the storage battery used for conversion to motive power by the electric motor when the EV travel mode is executed. For example, the above-described EV travel total efficiency TE_ev or a value obtained by converting the EV travel total efficiency TE_ev to a fuel consumption ratio may be used as the EV consumption degree parameter.

Furthermore, although the second embodiment is an example which uses the assist fuel consumption amount FC_asst as the assist consumption degree parameter, the assist consumption degree parameter in the present invention is not limited to this, but any suitable assist consumption degree parameter may be used insofar as it represents the degree of consumption of fuel consumed by the engine and the degree of consumption of fuel corresponding to the degree of consumption of electric power of the storage battery used for conversion to motive power by the electric motor, when the assist travel mode is executed. For example, the above-described assist travel total efficiency TE_asst or a value obtained by converting the assist travel total efficiency TE_asst to a fuel consumption ratio may be used as the assist consumption degree parameter.

Further, although the second embodiment is an example which uses the vehicle speed VP and the required torque TRQ as a parameter indicative of the traveling state, the parameter indicative of the traveling state in the present invention are not limited to this, but any suitable parameter indicative of the traveling state may be used insofar as it represents the traveling state of the hybrid vehicle. For example, the accelerator pedal opening AP, the engine speed NE, or the like may be used as the parameter indicative of the traveling state.

Next, a description will be given of a control system for a hybrid vehicle according to a third embodiment of the present invention. The following description will be given only of different points from the second embodiment, and component elements identical or similar to those of the second embodiment are designated by the same reference numerals, and a description thereof is omitted. In the third embodiment, specific arrangements of the hybrid vehicle and the control system are the same as those of the hybrid vehicle V and the control system 1 according to the second embodiment, and the control system according to the third embodiment is distinguished from the control system 1 according to the second embodiment only in details of an EV travel control process shown in FIG. 18. Therefore, the following description will be given of this EV travel control process. Note that in the present embodiment, the ECU 2 corresponds to the travel mode-executing means, the engine consumption degree parameter-calculating means and the EV consumption degree parameter-calculating means.

During execution of the EV travel mode, the EV travel control process determines a travel mode and a speed position of the hybrid vehicle V, and controls the operations of the engine 3, the motor 4, and the two transmission mechanisms 11 and 31, based on the determination. The EV travel control process is executed at a predetermined control period (e.g. 10 msec) in the state in which the accelerator pedal is being stepped on by the driver.

As shown in the figure, first, in a step 40, the required torque TRQ is calculated by the same method as employed in the above-described step 1. Then, the process proceeds to a step 41, wherein a process for calculating a fuel consumption amount is executed. In the step 41, as described hereinafter, the engine fuel consumption amount FC_eng and the EV fuel consumption amount FC_ev are calculated.

More specifically, the engine fuel consumption amount FC_eng is calculated by searching the above-described maps shown in FIG. 11 according to the required torque TRQ and the vehicle speed VP. In this case, since the maps in the FIG. 11 are configured as described above, the engine fuel consumption amount FC_eng is determined to a map value of one of the speed positions, where the smallest value of the engine fuel consumption amount FC_eng can be obtained.

Further, the EV fuel consumption amount FC_ev is calculated by searching the above-described map shown in FIG. 15 according to the required torque TRQ and the vehicle speed VP. In this case, since the map in the FIG. 15 is configured as described above, the EV fuel consumption amount FC_ev is determined to a map value of one of the speed positions, where the smallest value of the EV fuel consumption amount FC_ev can be obtained.

In a step 42 following the step 41, by comparing the two fuel consumption amounts FC_eng and FC_ev calculated in the step 41, a speed position and a travel mode corresponding to the smaller fuel consumption amount are determined as the speed position and travel mode for selection this time.

Then, the process proceeds to a step 43, wherein the operations of the engine 3, the motor 4, and the transmission mechanisms 11 and 31 are controlled such that the speed position and the travel mode determined in the step 42 are executed. In this case, the EV travel mode is selected, and also if the speed position is required to be changed, speed change operations by the transmission mechanisms 11 and 31 are executed when the operation amount of the accelerator pedal of the hybrid vehicle V is not larger than a predetermined value. After that, the present process is terminated.

As described above, according to the control system for the hybrid vehicle of the third embodiment, the engine fuel consumption amount FC_eng is determined to a map value in one of the speed positions, where the smallest value of the engine fuel consumption amount FC_eng can be obtained, by searching the maps shown in FIG. 11, and the EV fuel consumption amount FC_ev is determined to a map value in one of the speed positions, where the smallest value of the EV fuel consumption amount FC_ev can be obtained, by searching the map shown in FIG. 15. By selecting one of the fuel consumption amounts FC_eng and FC_ev, which has the smaller value, it is possible to cause the hybrid vehicle V to travel in a combination of a speed position and a travel mode which minimize the fuel consumption amount (i.e. minimize the degree of fuel consumption), according to the traveling state of the hybrid vehicle V, whereby it is possible to suppress the fuel consumption, and thereby improve fuel economy.

Further, if, in the step 42, the EV travel mode is selected and also a change in the speed position is determined, the speed change operations of the transmission mechanisms 11 and 31 are executed when the operation amount of the accelerator pedal of the hybrid vehicle V is not larger than the predetermined value, and hence differently from a case where the speed change operations are executed in a state in which the operation amount of the accelerator pedal is large, it is possible to avoid occurrence of a speed-change shock or a free running feeling, whereby it is possible to improve marketability.

Note that when the EV travel control process shown in FIG. 18 is executed, if the engine 3 is at a stop, in the step 41, the EV fuel consumption amount FC_ev may be calculated by correcting the value obtained by searching the map in FIG. 15, according to the amount of electric power required for starting the engine 3 by the motive power of the motor 4. With this configuration, even when the EV travel mode is selected in the step 42, it is possible to positively start the engine 3 by the motive power of the motor 4, thereby making it is possible to improve marketability.

Further, in a case where the hybrid vehicle V is a plug-in type vehicle, when electric power is supplied from an external power source to the battery 52 by a plug-in method, in the step 41, the EV fuel consumption amount FC_ev may be calculated by correcting the value obtained by map search in FIG. 15 according to the amount of electric power supplied to the battery 52 by the plug-in method. With this configuration, it is possible to calculate the EV fuel consumption amount FC_ev while taking into account the influence of the amount of electric power supplied to the battery 52 by the plug-in method, so that e.g. by correcting the EV fuel consumption amount FC_ev such that the EV fuel consumption amount FC_ev is made smaller as the amount of electric power supplied to the battery 52 by the plug-in method is larger, it is possible to lengthen a time period over which the EV travel mode is executed, thereby making it is possible to further improve fuel economy.

Furthermore, the EV travel control process shown in FIG. 18 may be configured such that even when the EV travel mode is selected in the step 42, if at least one of a condition that the state of charge SOC (charge amount) is not smaller than a predetermined amount and a condition that the battery temperature TB (storage battery temperature) is not lower than a predetermined temperature is satisfied, the ENG travel mode is selected. With this configuration, it is possible to avoid occurrence of a overcharged state of the battery 52 and/or an overheated state of the electric motor 4, whereby it is possible to prolong the service lives/life of the battery 52 and/or the electric motor 4. In this case, the ECU 2 corresponds to powering control means and charge amount-detecting means, the current/voltage sensor 62 corresponds to the charge amount-detecting means, and the battery temperature sensor 63 corresponds to storage battery temperature-detecting means.

On the other hand, the EV travel control process shown in FIG. 18 may be configured such that it is executed during execution of the regeneration control instead of during execution of the EV travel mode, and even when the EV travel mode is selected as the travel mode in the above-described step 42, if at least one of the condition that the state of charge SOC (charge amount) is not smaller than the predetermined amount and the condition that the battery temperature TB (storage battery temperature) is not lower than the predetermined temperature is satisfied, the ENG travel mode is selected. With this configuration as well, as described hereinabove, it is possible to avoid occurrence of the overcharged state of the battery 52 and/or the overheated state of the electric motor 4, whereby it is possible to prolong the service lives/life of the battery 52 and/or the electric motor 4. In this case, the ECU 2 corresponds to regeneration control means, the charge amount-detecting means, and the travel mode-executing means, the current/voltage sensor 62 corresponds to the charge amount-detecting means, and the battery temperature sensor 63 corresponds to the storage battery temperature-detecting means.

Further, the EV travel control process may be configured such that when determining a speed position and a travel mode in the step 42, a traveling situation of the hybrid vehicle V is predicted based on data stored in the car navigation system 66, and the speed position and the travel mode are determined further according to the predicted traveling situation of the hybrid vehicle V. With this configuration, it is possible to select a speed position and a travel mode suitable for the traveling situation of the hybrid vehicle. This makes it possible to further suppress the fuel consumption of the whole hybrid vehicle, and further improve fuel economy. Note that in this case, the ECU 2 corresponds to prediction means.

Further, although the second and third embodiments are examples in which the control system of the present invention is applied to the above-described hybrid vehicle V shown in FIG. 1, the control system of the present invention is not limited to this, but it can be applied to the above-described hybrid vehicle V' shown in FIG. 9. When this hybrid vehicle V' is controlled by the control system of the second or third embodiment, although detailed description thereof is omitted, the above-described selection of a travel mode and a speed position is executed using four fuel consumption amounts or two fuel consumption amounts, by the above-described control method. This makes it possible to obtain the same advantageous effects as provided by the above-described second and third embodiments.

Next, a control system for a hybrid vehicle according to a fourth embodiment of the present invention will be described. In the case of the fourth embodiment, specific arrangements of the hybrid vehicle and the control system are the same as those of the hybrid vehicle and the control system according to the second embodiment, and the control system according to the fourth embodiment is distinguished from the control system according to the second embodiment only in that a travel control process shown in FIG. 19 is executed instead of the travel control process shown in FIG. 10. Therefore, the following description will be given only of this travel control process shown in FIG. 19. Note that in the present embodiment, the ECU 2 corresponds to consumption degree parameter-calculating means, the travel mode-executing means, the engine driving energy-calculating means, charging energy-calculating means, and charge consumption degree parameter-calculating means.

The travel control process shown in FIG. 19 is executed by the ECU 2 during operation of the hybrid vehicle V at a predetermined control period (e.g. 10 msec) when conditions for executing the EV travel mode are not satisfied and also the accelerator pedal is being stepped on by the driver.

As shown in the figure, first, in a step 101, similarly to the above-described step 1, the required torque TRQ is calculated by searching a map, not shown, according to the accelerator pedal opening AP.

Then, the process proceeds to a step 102, wherein similarly to the above-described step 2, the fuel consumption amount is calculated by searching maps for calculating various fuel consumption amounts, described hereinafter. In this case, the above-mentioned FIG. 11 maps for calculating the engine fuel consumption amount FC_eng, and the above-mentioned FIG. 12 map for calculating the assist fuel consumption amount FC_asst and the charge fuel consumption amount FC_ch are provided as the maps for calculating the fuel consumption amount. Note that in the present embodiment, the engine fuel consumption amount FC_eng, the assist fuel consumption amount FC_asst, and the charge fuel consumption amount FC_ch correspond to the consumption degree parameter.

In the step 102, the values of the three fuel consumption amounts FC_eng, FC_asst, and FC_ch are calculated using these maps by the same method as used in the above-described step 2, according to the vehicle speed VP and the required torque TRQ, and then the process proceeds to a step 103, wherein the smallest value of the three fuel consumption amounts FC_eng, FC_asst, and FC_ch is selected, and a speed position and a travel mode corresponding to the selected fuel consumption amount is determined as the speed position and travel mode for selection this time.

Then, the process proceeds to a step 104, wherein the operations of the engine 3, the motor 4, and the transmission mechanisms 11 and 31 are controlled such that the speed position and the travel mode determined in the step 103 are executed. After that, the present process is terminated.

As described above, according to the control system for the hybrid vehicle of the fourth embodiment, the three fuel consumption amounts FC_eng, FC_asst, and FC_ch are calculated on a speed position basis by searching the above-described various maps, and the operations of the engine 3, the motor 4, and the transmission mechanisms 11 and 31 are controlled such that the hybrid vehicle V is caused to travel in a speed position and a travel mode corresponding to the smallest value of the results of calculation of the fuel consumption amounts. Therefore, it is possible to cause the hybrid vehicle V to travel in a combination of a speed position and a travel mode which minimize the fuel consumption amount, whereby it is possible to suppress the fuel consumption of the engine 3 and thereby improve fuel economy.

Further, since the two fuel consumption amounts FC_asst and FC_ch are calculated by taking into account the engine fuel energy ENE_eng1, the engine driving energy ENE_eng2, the motor charging/discharging energy ENE_mot1, and the driving/charging energy ENE_mot2, it is possible to calculate the fuel consumption amounts FC_asst and FC_ch as values which accurately represent the efficiency of the whole hybrid vehicle V, i.e. the fuel consumption amount of the whole hybrid vehicle V. This makes it possible, compared with the conventional case where only the fuel consumption ratio of the engine is taken into account, to properly suppress the fuel consumption of the engine 3, and thereby further improve fuel economy.

Furthermore, since the assist fuel consumption amount FC_asst is calculated using the past average charge amount ENE_chave, it is possible to accurately calculate the assist fuel consumption amount FC_asst while causing the charging efficiency of the battery 52 up to the current time to be reflected thereon. In addition to this, the charge fuel consumption amount FC_ch is calculated using the predicted efficiency Ehat, and this predicted efficiency Ehat is calculated using the charging/discharging efficiency Ebat_cd of the battery 52, the motor driving efficiency Emot_d, and the driving efficiency Etm_d of the transmission mechanisms. Therefore, it is possible to accurately calculate the charge fuel consumption amount FC_ch while taking into account efficiency provided when electric power charged into the battery 52 is used for conversion to motive power by the motor 4 in the future.

In addition to this, in the case of the hybrid vehicle V, as described hereinabove, for structural reasons of the transmission mechanisms 11 and 31, when the engine motive power is transmitted to the drive wheels DW via an even-number speed position, the motive power transmission between the motor 4 and the drive wheels DW can be executed via any one of the four odd-number speed positions. Therefore, to calculate the two fuel consumption amounts FC_asst and FC_ch, the E2Mi calculation map (i = 1, 3, 5, 7), the E4Mi calculation map, and the E6Mi calculation map are used, and hence it is possible to calculate the two fuel consumption amounts FC_asst and FC_ch in a fine-grained manner in a manner associated with an actual combination of the even-number speed position for transmitting the engine motive power and one of the odd-number speed position for transmitting the motor motive power. From the above, it is possible to further suppress fuel consumption, and thereby further improve fuel economy.

Note that in a case where a motor temperature sensor for detecting the temperature of the motor 4 is provided in the hybrid vehicle V, and in the above-described step 103, the assist travel mode in a certain speed position is selected, if at least one of a condition that the battery temperature TB is equal to a first predetermined temperature, and a condition that the temperature of the motor 4 is not lower than a second predetermined temperature is satisfied, the control may be performed such that the output of the motor 4 being driven is limited and the limited amount of the output of the motor 4 is compensated for by the engine 3. With this configuration, it is possible to prevent the battery 52 and/or the motor 4 from being overheated, and thereby prolong the service lives/life of the battery 52 and/or the electric motor 4. Note that in this case, the motor temperature sensor corresponds to electric motor temperature-detecting means, the battery temperature sensor 63 corresponds to the electric motor temperature-detecting means, and the ECU 2 corresponds to limiting means.

Further, the travel control process may be configured such that in the case where in the above-described steps 102 and 103, the three fuel consumption amounts FC_eng, FC_asst, and FC_ch are calculated on a speed position basis, and a speed position and a travel mode are determined, when the state of charge SOC of the battery 52 is not larger than the predetermined amount, the results of calculation of the three fuel consumption amounts FC_eng, FC_asst and FC_ch are corrected so as to lengthen a time period over which a battery charging operation by the motor 4 is executed, to thereby correct the operations of the engine 3, the motor 4, and the transmission mechanisms 11 and 31. With this configuration, it is possible to quickly avoid shortage of the charge amount of the battery 52. Note that in this case, the ECU 2 corresponds to the charge amount-detecting means and correction means, and the current/voltage sensor 62 corresponds to the charge amount-detecting means.

Further, the travel control process may be configured such that when determining a speed position and a travel mode in the step 103, a traveling situation of the hybrid vehicle is predicted based on data stored in the car navigation system 66, and the speed position and the travel mode are determined further according to the predicted traveling situation of the hybrid vehicle. With this configuration, it is possible to select a speed position and a travel mode suitable for the traveling situation of the hybrid vehicle. This makes it possible to further improve the total efficiency of the whole hybrid vehicle, and thereby further improve fuel economy. Note that in this case, the ECU 2 corresponds to the prediction means.

In addition to this, the travel control process may be configured such that in the case where in the above-described steps 102 and 103, the three fuel consumption amounts FC_eng, FC_asst, and FC_ch are calculated on a speed position basis, and a speed position and a travel mode are determined, when the state of charge SOC of the battery 52 is not larger than the predetermined lower limit value, the results of calculation of the three fuel consumption amounts FC_eng, FC_asst, and FC_ch are corrected so as to execute one of inhibiting an operation of stopping the engine 3 and continuing the operation of the engine 3 for a predetermined time period, to thereby control the operations of the engine 3, the motor 4, and the transmission mechanisms 11 and 31. With this configuration, it is possible to avoid the battery 52 from being overdischarged, and thereby prolong the service life of the battery 52. Note that in this case, the ECU 2 corresponds to the charge amount-detecting means and engine control means, and the current/voltage sensor 62 corresponds to the charge amount-detecting means.

Further, in the case where in the above-described steps 102 and 103, the three fuel consumption amounts FC_eng, FC_asst, and FC_ch are calculated on a speed position basis, and a speed position and a travel mode are determined, when the state of charge SOC of the battery 52 is not larger than the predetermined amount, the results of calculation of the three fuel consumption amounts FC_eng, FC_asst, and FC_ch may be corrected so as to execute the charge travel mode. In this case, the ECU 2 corresponds to charge control means.

Furthermore, although the fourth embodiment is an example which uses the three fuel consumption amounts FC_eng, FC_asst, and FC_ch as consumption degree parameters, the consumption degree parameters in the present invention are not limited to these, but any suitable consumption degree parameters may be employed insofar as they represent the degree of consumption of fuel consumed when the difference between torque generated by the engine that is operated with a fuel amount minimizing the fuel consumption ratio and the required torque is absorbed/supplemented by regenerative operation/powering operation by the electric motor. For example, the above-described engine travel total efficiency TE_eng, charge travel total efficiency TE_ch, and assist travel total efficiency TE_asst may be used as the consumption degree parameters. Further, values obtained by converting the engine travel total efficiency TE_eng, the charge travel total efficiency TE_ch, and the assist travel total efficiency TE_asst to fuel consumption ratios may be used as the consumption degree parameters.

Further, although the fourth embodiment is an example which uses the charge fuel consumption amount FC_ch as a charge consumption degree parameter, the charge consumption degree parameter in the present invention is not limited to this, but any suitable charge consumption degree parameter may be employed insofar as it represents the degree of consumption of fuel consumed by the engine when the charge travel mode is executed. For example, the charge travel total efficiency TE_ch, or a value obtained by converting the same to a fuel consumption ratio may be used as the charge consumption degree parameter.

Furthermore, although the fourth embodiment is an example in which the control system of the present invention is applied to the above-described hybrid vehicle V shown in FIG. 1, the control system of the present invention is not limited to this, but it may be applied to the above-described hybrid vehicle V' shown in FIG. 9. When this hybrid vehicle V' is controlled by the control system of the fourth embodiment, although detailed description thereof is omitted, the above-described selection of a travel mode and a speed position is executed using three fuel consumption amounts, by the above-described control method. This makes it possible to obtain the same advantageous effects as provided by the above-described fourth embodiments.

Note that although in the above-described embodiments, the plurality of speed positions of the respective first and second transmission mechanisms 11 and 31 are set to odd-number speed positions and even-number speed positions, respectively, this is not limitative, but inversely, they may be set to even-number speed positions and odd-number speed positions, respectively. Further, although in the above-described first embodiment, as the first and second transmission mechanisms 11 and 31, there are used transmission mechanisms of a type which shares the output shaft 21 for transmitting motive power changed in speed to the drive wheels DW, this is not limitative, but there may be used transmission mechanisms of a type in which output shafts are separately provided. In this case, the first to fourth synchronizing clutches SC1 to SC4 may be provided not on the first input shaft 13 and the second input intermediate shaft 33 but on the output shafts.

Furthermore, although in the above-described embodiments, the clutch C and the first and second clutches C1 and C2 are dry multiple-disc clutches, they may be wet multiple-disc clutches or electromagnetic clutches.

Further, although in the above-described embodiments, as the electric motor in the present invention, there is used the motor 4, which is a brushless DC motor, there may be used a suitable electric motor other than this, such as an AC motor, insofar as it is capable of generating electric power. Further, although in the above-described embodiments, the storage battery of the present invention is the battery 52, a suitable storage battery other than this, such as a capacitor, may be used insofar as it is capable of being charged and discharged. Further, although in the above-described first embodiment, the engine 3, which is a gasoline engine, is employed as an internal combustion engine in the present invention, a suitable engine other than this may be employed which is powered by light oil, natural gases, ethanol, or a mixed fuel of gasoline and another fuel. Further, it is possible to modify details of the construction of the embodiments as required within the spirit and scope of the present invention.

As described heretofore, the control system for a hybrid vehicle according to the present invention is effective in suppressing fuel consumption and enhancing fuel economy when the hybrid vehicle is caused to travel by the motive power of the engine or the motive powers of an electric motor and the engine.

| | |
|---|---|
| V | hybrid vehicle |
| V' | hybrid vehicle |
| DW | drive wheel |
| 1 | control system |
| 2 | ECU |
| 3 | internal combustion engine |
| 3a | crankshaft |
| 4 | electric motor |
| 11 | first transmission mechanism |
| 13 | first input shaft |
| 31 | second transmission mechanism |
| 32 | second input shaft |
| C1 | first clutch |
| C2 | second clutch |
| 52 | battery |
| 62 | current/voltage sensor |
| 63 | battery temperature sensor |
| 66 | car navigation system |
| 71 | transmission mechanism |
| TRQ | required torque |
| VP | vehicle speed |
| TB | battery temperature |
| SOC | state of charge |
| TSFC | total fuel consumption ratio |

| | |
|---|---|
| TSFC1 | first total fuel consumption ratio |
| TSFC2 | second total fuel consumption ratio |
| FC_eng | engine fuel consumption amount |
| FC_ev | EV fuel consumption amount |
| FC_ch | charge fuel consumption amount |
| FC_asst | assist fuel consumption amount |
| ENE_eng1 | engine fuel energy |
| ENE_eng2 | engine driving energy |
| Eeng | engine efficiency |
| Etm_d | driving efficiency of transmission mechanism |
| ENE_mot1 | motor charging/discharging energy |
| ENE_mot2 | driving/charging energy |
| ENE_chave | past average charge amount |
| Ehat | predicted efficiency |
| Ebat_cd | charging/discharging efficiency of battery |
| Etm_c | charging efficiency of transmission mechanism |
| Emot_d | motor driving efficiency |
| Etm_d | driving efficiency of transmission mechanism |
| Eeng | engine efficiency |
| Etm_c | charging efficiency of transmission mechanism |

**Claims**

1. A control system for a hybrid vehicle including an internal combustion engine and an electric motor capable of generating electric power, as motive power sources, a storage battery capable of supplying and receiving electric power to and from the electric motor, and a transmission mechanism capable of transmitting input motive power to drive wheels, the control system comprising:

 first memory means for memorizing a first total fuel consumption which is a total fuel consumption of the hybrid vehicle in an ENG travel mode in which only the engine is used as the motive power source; and
 second memory means for memorizing a second total fuel consumption which is a total fuel consumption of the hybrid vehicle in a charge travel mode in which the engine is operated in a vicinity of an optimum fuel economy line and regeneration is performed by the electric motor using a surplus amount of torque of the engine with respect to a required driving force required for the drive wheels,
 wherein the second total fuel consumption is set according to a predetermined assumed power usage effectiveness which is a predicted value of driving efficiency of the hybrid vehicle to be exhibited when the hybrid vehicle is caused to travel by supplying electric power which has been charged into the storage battery during the charge travel mode, afterwards to the electric motor, and
 wherein a travel mode in which a smaller total fuel consumption can be obtained is selected from the ENG travel mode and the charge travel mode, based on a result of comparison between the first total fuel consumption and the second total fuel consumption.

2. A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:

 first memory means for memorizing a first total fuel consumption which is a total fuel consumption of the hybrid vehicle in an ENG travel mode in which only the engine is used as the motive power source; and
 second memory means for memorizing a second total fuel consumption which is a total fuel consumption of the hybrid vehicle in a charge travel mode in which the engine is operated in a vicinity of an optimum fuel economy line and regeneration is performed by the electric motor using a surplus amount of torque of the engine with respect to the required driving force,
wherein the second total fuel consumption is set according to a predetermined assumed power usage effectiveness which is a predicted value of driving efficiency of the hybrid vehicle to be exhibited when the hybrid vehicle is caused to travel by supplying electric power which has been charged into the storage battery during the charge travel mode, afterwards to the electric motor, and
wherein a travel mode in which a smaller total fuel consumption can be obtained is selected from the ENG travel mode and the charge travel mode, based on a result of comparison between the first total fuel consumption and the second total fuel consumption.

**3.** The control system according to claim 2, wherein the second total fuel consumption is expressed by the following equation (A), and selection of the speed position is performed such that the second total fuel consumption is minimized during the charge travel mode.
second total fuel consumption = (first fuel consumption amount + second fuel consumption amount) / (traveling energy + EV traveling energy) ... (A)
wherein first fuel consumption amount: amount of fuel supplied to the engine for causing the hybrid vehicle to travel during the charge travel mode
second fuel consumption amount: amount of fuel supplied to the engine for regeneration by the electric motor during the charge travel mode
traveling energy: traveling energy of the hybrid vehicle in the charge travel mode
EV traveling energy: predicted value of the traveling energy of the hybrid vehicle with which the hybrid vehicle is to travel when the hybrid vehicle is caused to travel by supplying electric power which has been charged into the storage battery during the charge travel mode, afterwards to the electric motor.

**4.** The control system according to claim 2, wherein during the charge travel mode, when the hybrid vehicle is traveling in a state in which the speed of the motive power of the engine has been changed by the second transmission mechanism, a lower speed position than a speed position of the second transmission mechanism or such a speed position as will enhance power generation efficiency of the electric motor is selected as the speed position of the first transmission mechanism.

**5.** The control system according to claim 2, wherein during the charge travel mode, when a state of charge of the storage battery is not larger than a predetermined value, such a speed position as will enhance power generation efficiency of the electric motor is selected as the speed positions of the first and second transmission mechanisms.

**6.** A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to the drive wheels in a state in which a speed of the motive power is changed in one of a plurality of speed positions, a second transmission mechanism that is capable of receiving motive power from the engine output shaft by a second input shaft, and transmitting the motive power to drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:

travel mode-executing means capable of selecting an ENG travel mode in which the hybrid vehicle is caused to travel using the engine as a motive power source, and an EV travel mode in which the hybrid vehicle is caused to travel using the electric motor as a motive power source, for a travel mode of the hybrid vehicle;
engine consumption degree parameter-calculating means for calculating an engine consumption degree parameter indicative of a degree of consumption of fuel to be consumed by the engine when the ENG travel mode is executed, according to a traveling state of the hybrid vehicle; and
EV consumption degree parameter-calculating means for calculating an EV consumption degree parameter indicative of a degree of consumption of fuel corresponding to a degree of consumption of electric power of the storage battery to be used for conversion to motive power by the electric motor when the EV travel mode is executed, according to the traveling state of the hybrid vehicle,
wherein said travel mode-executing means selects, as the travel mode, the ENG travel mode when the degree of consumption of fuel represented by the engine consumption degree parameter is smaller than the degree of consumption of fuel represented by the EV consumption degree parameter, and the EV travel mode when the degree of consumption of fuel represented by the EV consumption degree parameter is smaller than the degree of consumption of fuel represented by the engine consumption degree parameter.

**7.** The control system according to claim 6, wherein when electric power is supplied from an external power source to the storage battery by a plug-in method, said EV consumption degree parameter-calculating means corrects the EV consumption degree parameter according to an amount of electric power supplied to the storage battery by the plug-in method.

**8.** The control system according to claim 6, wherein said travel mode-executing means selects and executes one of the ENG travel mode, the EV travel mode, and an assist travel mode in which the hybrid vehicle is caused to travel using the engine and the electric motor as the motive power sources,
the control system further comprises assist consumption degree parameter-calculating means for calculating an assist consumption degree parameter indicative of a degree of consumption of fuel to be consumed by the engine when the assist travel mode is executed, and a degree of consumption of fuel corresponding to a degree of consumption of electric power of the storage battery to used for conversion to motive power by the electric motor, using a past charge amount, which is a charge amount on which charging efficiency of the storage battery up to a current time is reflected, and a consumed electric power amount in the storage battery.

**9.** The control system according to claim 6, wherein in a case where the EV travel mode is being executed, when the engine is at a stop, said EV consumption degree parameter-calculating means corrects the EV consumption degree parameter according to an amount of electric power required for starting the engine by motive power of the electric motor.

**10.** The control system according to claim 6, wherein said engine consumption degree parameter-calculating means calculates the engine consumption degree parameter, in association with each speed position of the first transmission mechanism and the second transmission mechanism according to the traveling state of the hybrid vehicle,
wherein said EV consumption degree parameter-calculating means calculates the EV consumption degree parameter, in association with each speed position of the first transmission mechanism according to the traveling state of the hybrid vehicle, and
wherein during execution of the EV travel mode, said travel mode-executing means selects a travel mode in a speed position corresponding to a smallest value of a degree of consumption of fuel indicated by the engine consumption degree parameter which is calculated in association with each speed position of the first transmission mechanism and the second transmission mechanism, and a degree of consumption of fuel indicated by the EV consumption degree parameter which is calculated in association with each speed position of the first transmission mechanism.

**11.** A control system for a hybrid vehicle including an internal combustion engine and an electric motor capable of generating electric power, as motive power sources, a storage battery capable of supplying and receiving electric power to and from the electric motor, and a transmission mechanism that transmits motive power of the engine and the electric motor to drive wheels while changing a speed of the motive power of the engine and the electric motor, and includes a plurality of speed positions, the control system comprising:

consumption degree parameter-calculating means for calculating, in association with each speed position, a consumption degree parameter which represents a degree of consumption of fuel to be consumed, when a difference between torque to be generated by the engine when the engine is operated in a given one of the speed positions such that the degree of consumption of fuel is minimized, and a required torque demanded by the hybrid vehicle, is absorbed/supplemented by regenerative operation/powering operation by the electric motor, by using one of a past charge amount, which is a charge amount on which charging efficiency of the storage battery up to a current time is reflected, and a predicted efficiency, which is an efficiency predicted to be exhibited when it is predicted that an amount of electric power charged in the storage battery is to be used; and
travel mode-executing means for selecting and executing a travel mode corresponding to a smallest value of a degree of consumption of fuel indicated by the consumption degree parameter which is calculated in association with each speed position, according to the required torque and a vehicle speed of the hybrid vehicle.

**12.** A control system for a hybrid vehicle including an internal combustion engine, an electric motor capable of generating electric power, a storage battery capable of supplying and receiving electric power to and from the electric motor, a first transmission mechanism that is capable of transmitting motive power from an engine output shaft of the engine and the electric motor to a first input shaft, and transmitting the motive power to the drive wheels in a state in which a speed of the motive power is changed in one of a plurality of speed positions, a second transmission mechanism that is capable of transmitting motive power from the engine output shaft to a second input shaft, and transmitting the motive power to drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:

consumption degree parameter-calculating means for calculating, in association with each speed position of the first transmission mechanism and the second transmission mechanism, a consumption degree parameter which represents a degree of consumption of fuel to be consumed, when a difference between torque to be generated by the engine when the engine is operated in a given one of the speed positions of the first transmission mechanism and the second transmission mechanism such that the degree of consumption of fuel is minimized, and a required torque required by the hybrid vehicle, is absorbed/supplemented by regenerative operation/powering operation by the electric motor, by using one of a past charge amount, which is a charge amount on which charging efficiency of the storage battery up to a current time is reflected, and a predicted efficiency, which is an efficiency predicted to be exhibited when it is predicted that an amount of electric power charged in the storage battery is to be used; and
travel mode-executing means for selecting and executing a travel mode corresponding to a smallest value of a degree of consumption of fuel indicated by the consumption degree parameter which is calculated in association with each speed position, according to the required torque and a vehicle speed of the hybrid vehicle.

**13.** The control system according to claim 12, wherein the motive power of the engine is transmitted to the drive wheels via an odd-number speed position of the first transmission mechanism and an even-number speed position of the second transmission mechanism, and the motive power of the electric motor is transmitted to the drive wheels via an odd-number speed position of the first transmission mechanism, and
wherein when said consumption degree parameter-calculating means calculates the consumption degree parameter in a travel mode in which the hybrid vehicle is caused to travel using the motive power of both the engine and the electric motor, said consumption degree parameter-calculating means calculates, when transmission of motive power of the engine is executed in the even-number speed position of the second transmission mechanism, a consumption degree parameter associate with a case where transmission of motive power of the electric motor is executed using a higher or lower odd-number speed position of the first transmission mechanism than the even-number speed position.

**14.** The control system according to claim 11 or 12, wherein the predicted efficiency is calculated using charging/discharging efficiency of the storage battery, driving efficiency of the electric motor, and driving efficiency of the transmission mechanisms.

**15.** The control system according to any one of claims 1, 2, 6, 11, and 12, wherein when a temperature of at least one of the electric motor and the storage battery is not lower than a predetermined temperature set for at least one of the electric motor and the storage battery, an output of the electric motor is limited, or
alternatively, in a case where regeneration control is being executed by the electric motor, when at least one of a condition that a charge amount of the storage battery is not smaller than a predetermined amount, and a condition that the temperature of the storage battery is not lower than a predetermined temperature is satisfied, the ENG travel mode is selected.

**16.** The control system according to any one of claims 1, 2, 6, 11, and 12, wherein when a state of charge of the storage battery is not larger than a predetermined value, a forced regeneration mode in which regeneration by the electric motor is forcibly performed using part of the motive power of the engine is selected,
wherein in a case where powering control is being executed by the electric motor, when at least one of a condition that a charge amount of the storage battery is not smaller than a predetermined amount, and a condition that a temperature of the storage battery is not lower than a predetermined temperature is satisfied, the ENG travel mode is selected,
wherein when the charge amount of the storage battery is not larger than the predetermined value, operations of the engine, the electric motor, and the transmission mechanism are corrected such that a time period over which an operation of charging the storage battery by the electric motor is executed is made longer, or
alternatively, when the charge amount of the storage battery is not larger than a predetermined lower limit value, one of inhibiting an operation of stopping the engine and continuing the operation of the engine for a predetermined time period is executed.

**17.** The control system according to any one of claims 1, 2, 6, 11 and 12, wherein the hybrid vehicle is equipped with a car navigation system storing data indicative of information on a road on which the hybrid vehicle is traveling and neighborhood roads,
the control system further comprising prediction means for predicting a traveling situation of the hybrid vehicle based on the data stored in the car navigation system,
wherein selection of the travel mode is performed further according to the predicted traveling situation of the hybrid vehicle.

**18.** A control system for a hybrid vehicle including an internal combustion engine and an electric motor capable of generating electric power, as motive power sources, a storage battery capable of supplying and receiving electric power to and from the electric motor, and a transmission mechanism that transmits motive power of the engine and the electric motor to drive wheels while changing a speed of the motive power of the engine and the electric motor, and includes a plurality of speed positions, the control system comprising:

charge travel mode-executing means for executing a charge travel mode in which driving of the drive wheels by the motive power of the engine and charging of the storage battery by the electric motor are simultaneously executed, as a travel mode of the hybrid vehicle;
engine driving energy-calculating means for calculating engine driving energy which is energy transmitted from the engine to the drive wheels, using engine efficiency and driving efficiency of the transmission mechanism;
charging energy-calculating means for calculating charging energy which is electric energy to be charged when charging of the storage battery by electric power conversion of the motive power of the engine by the electric motor is executed, using the engine efficiency, charging efficiency of the transmission mechanism, charging/discharging efficiency of the electric motor, and predicted efficiency, which is an efficiency to be exhibited when it is predicted that electric power in the storage battery is to be used; and
charge consumption degree parameter-calculating means for calculating a charge consumption degree parameter indicative of a degree of consumption of fuel to be consumed by the engine when the charge travel mode is executed, using the engine driving energy and the charging energy,
wherein said charge travel mode-executing means executes the charge travel mode such that a smallest value of the degree of consumption of fuel indicated by the charge consumption degree parameter can be obtained.

**19.** A method of controlling a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the method comprising:

setting a first total fuel consumption which is a total fuel consumption of the hybrid vehicle in an ENG travel mode in which only the engine is used as the motive power source;
setting a second total fuel consumption which is a total fuel consumption of the hybrid vehicle in a charge travel mode in which the engine is operated in a vicinity of an optimum fuel economy line and regeneration is performed by the electric motor using a surplus amount of torque of the engine with respect to the required driving force, according to a predetermined assumed power usage effectiveness which is a predicted value of driving efficiency of the hybrid vehicle to be exhibited when the hybrid vehicle is caused to travel by supplying electric power which has been charged into the storage battery during the charge travel mode, afterwards to the electric motor; and
selecting a travel mode in which a smaller total fuel consumption can be obtained from the ENG travel mode and the charge travel mode, based on a result of comparison between the first total fuel consumption and the second total fuel consumption.

**20.** The method according to claim 19, wherein the second total fuel consumption is expressed by the following equation (B), and selection of the speed position is performed such that the second total fuel consumption is minimized during the charge travel mode.
second total fuel consumption = (first fuel consumption amount + second fuel consumption amount)/(traveling energy + EV traveling energy) ... (B)
wherein first fuel consumption amount: amount of fuel supplied to the engine for causing the hybrid vehicle to travel during the charge travel mode
second fuel consumption amount: amount of fuel supplied to the engine for regeneration by the electric motor during the charge travel mode
traveling energy: traveling energy of the hybrid vehicle in the charge travel mode
EV traveling energy: predicted value of the traveling energy of the hybrid vehicle with which the hybrid vehicle is to travel when the hybrid vehicle is caused to travel by supplying electric power which has been charged into the storage battery during the charge travel mode, afterwards to the electric motor.

**21.** A method of controlling a hybrid vehicle including an internal combustion engine, an electric motor capable of generating electric power, a storage battery capable of supplying and receiving electric power to and from the electric motor, a first transmission mechanism that is capable of transmitting motive power from an engine output shaft of the engine and the electric motor to a first input shaft, and transmitting the motive power to the drive wheels in a state in which a speed of the motive power is changed in one of a plurality of speed positions, a second transmission mechanism that is capable of transmitting motive power from the engine output shaft to a second input shaft, and transmitting the motive power to drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the method comprising:

calculating, in association with each speed position of the first transmission mechanism and the second transmission mechanism, a consumption degree parameter which represents a degree of consumption of fuel to be consumed, when a difference between torque to be generated by the engine when the engine is operated in a given one of the speed positions of the first transmission mechanism and the second transmission mechanism such that the degree of consumption of fuel is minimized, and a required torque required by the hybrid vehicle, is absorbed/supplemented by regenerative operation/powering operation by the electric motor, by using one of a past charge amount, which is a charge amount on which charging efficiency of the storage battery up to a current time is reflected, and a predicted efficiency, which is an efficiency predicted to be exhibited when it is predicted that an amount of electric power charged in the storage battery is to be used;
selecting and executing a travel mode corresponding to a smallest value of a degree of consumption of fuel indicated by the consumption degree parameter which is calculated in association with each speed position, according to the required torque and a vehicle speed of the hybrid vehicle; and
calculating the predicted efficiency, using charging/discharging efficiency of the storage battery, driving efficiency of the electric motor, and driving efficiency of the transmission mechanisms.

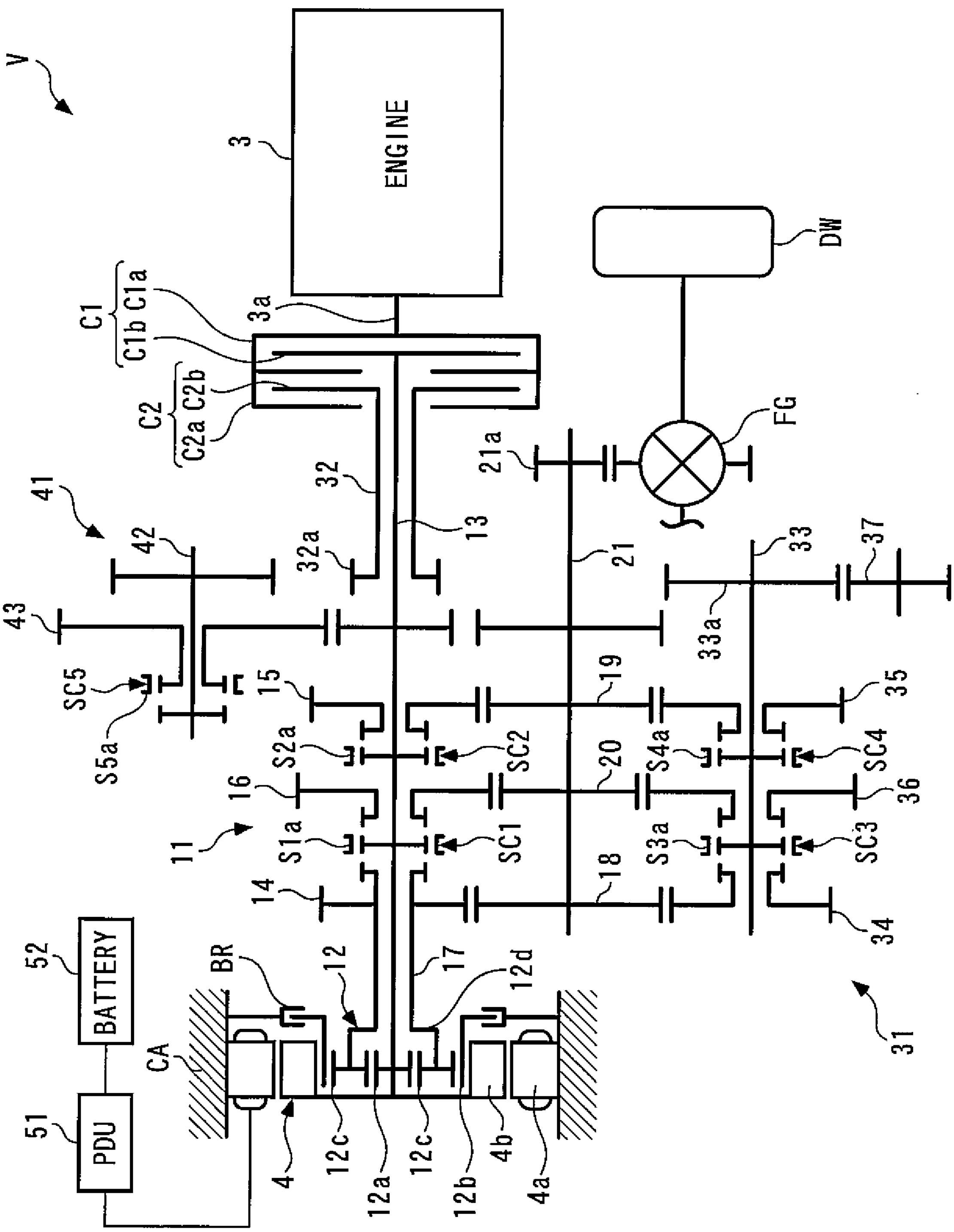
ENGINE
BATTERY
PDU
DW
FG
V
3
3a
C1
C1a
C1b
C2
C2a
C2b
4
4a
4b
11
12
12a
12b
12c
12d
13
14
15
16
17
18
19
20
21
21a
31
32
32a
33
33a
34
35
36
37
41
42
43
51
52
BR
CA
S1a
S2a
S3a
S4a
S5a
SC1
SC2
SC3
SC4
SC5

F I G. 1

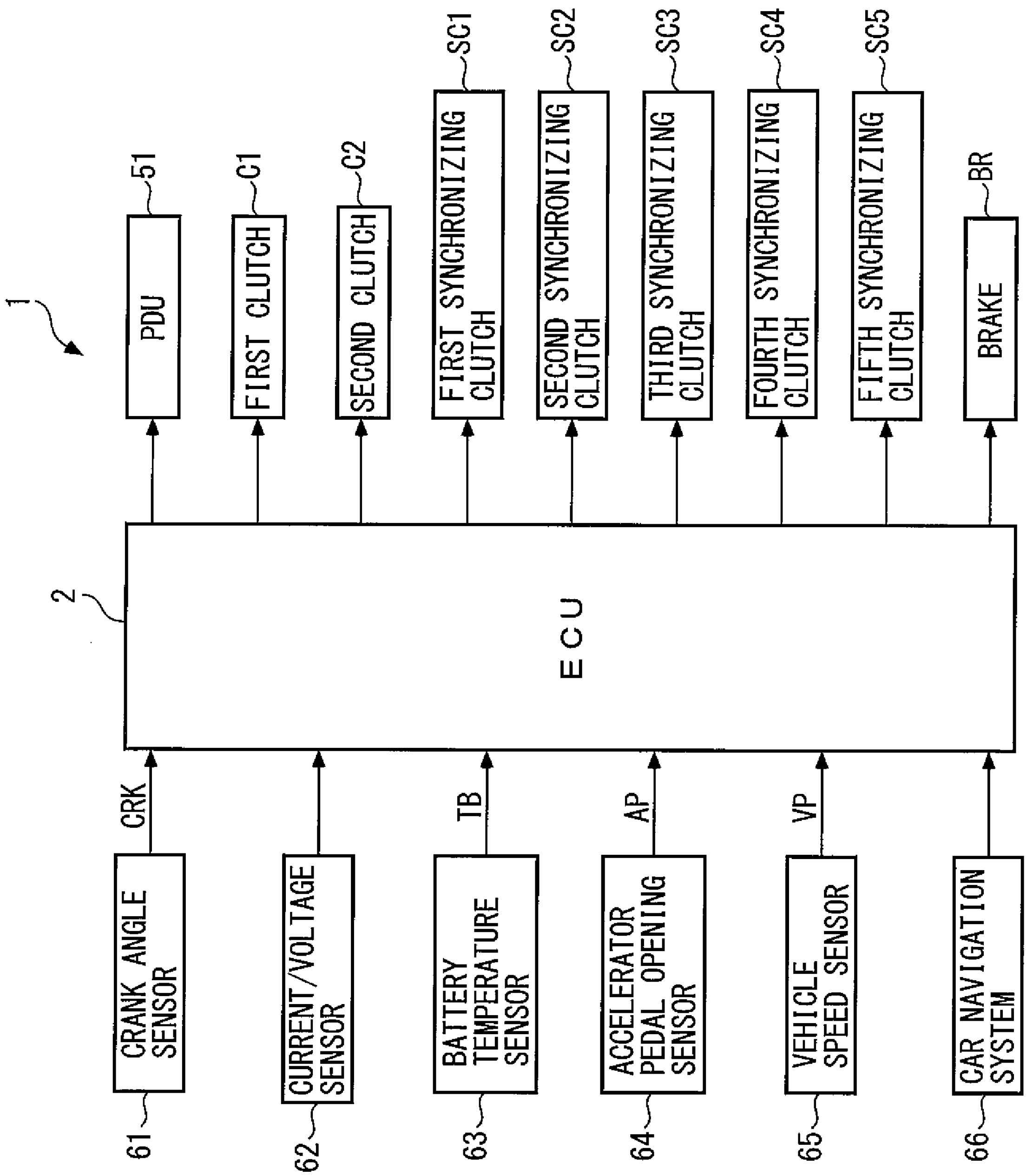
1
2
ECU
PDU
51
FIRST CLUTCH
C1
SECOND CLUTCH
C2
FIRST SYNCHRONIZING CLUTCH
SC1
SECOND SYNCHRONIZING CLUTCH
SC2
THIRD SYNCHRONIZING CLUTCH
SC3
FOURTH SYNCHRONIZING CLUTCH
SC4
FIFTH SYNCHRONIZING CLUTCH
SC5
BRAKE
BR
CRANK ANGLE SENSOR
61
CRK
CURRENT/VOLTAGE SENSOR
62
BATTERY TEMPERATURE SENSOR
63
TB
ACCELERATOR PEDAL OPENING SENSOR
64
AP
VEHICLE SPEED SENSOR
65
VP
CAR NAVIGATION SYSTEM
66

F I G. 2

FIG. 3

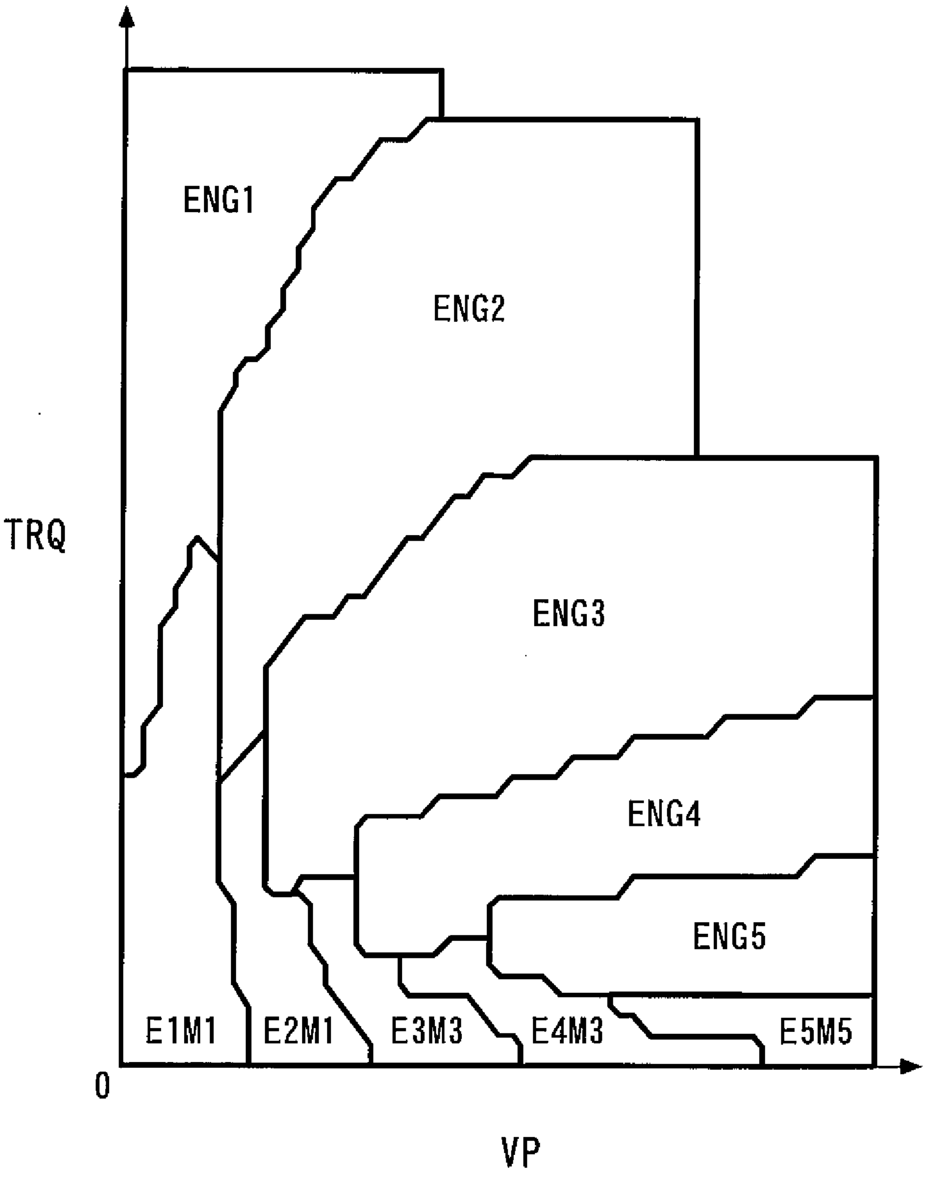

F I G. 4

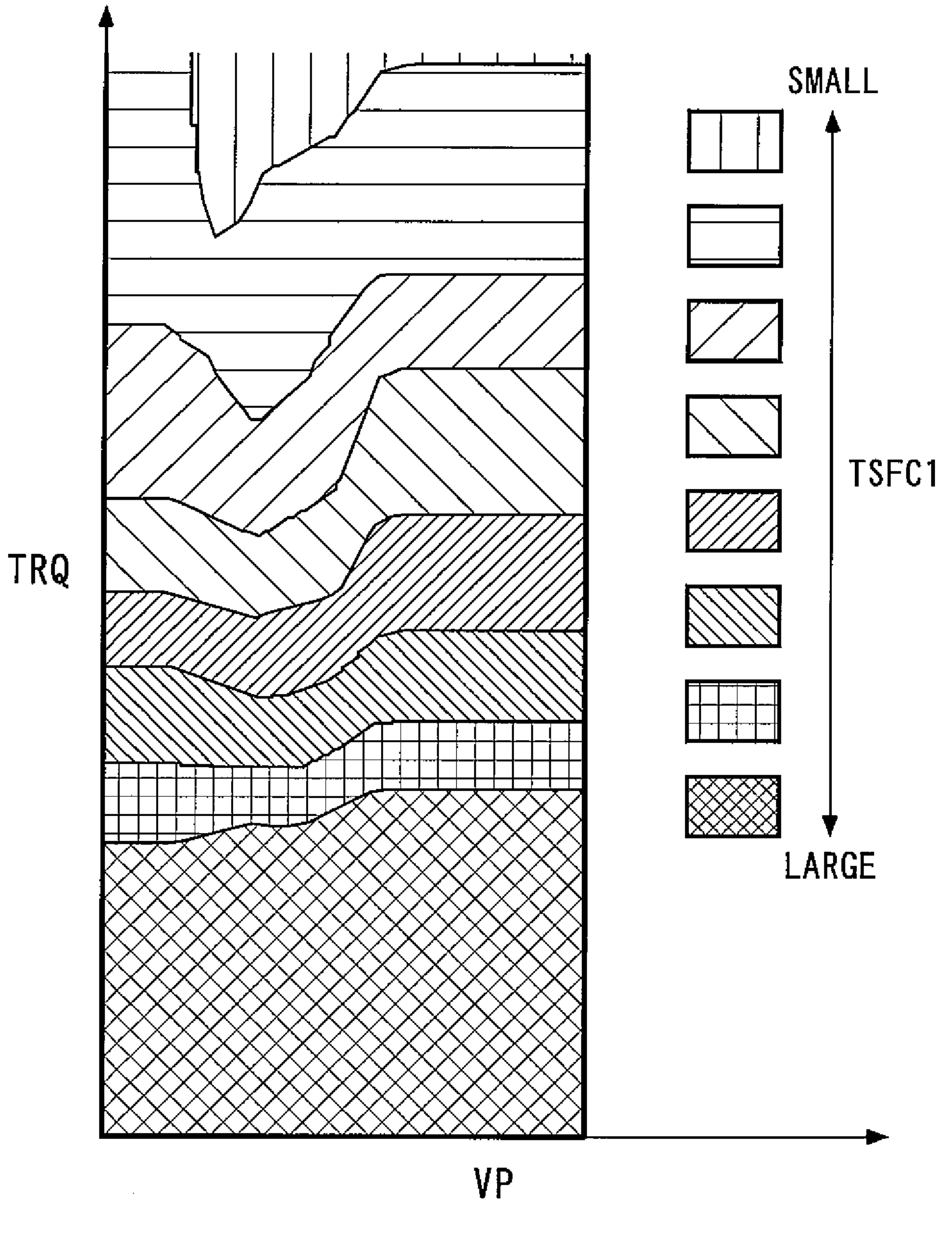

FIG. 5

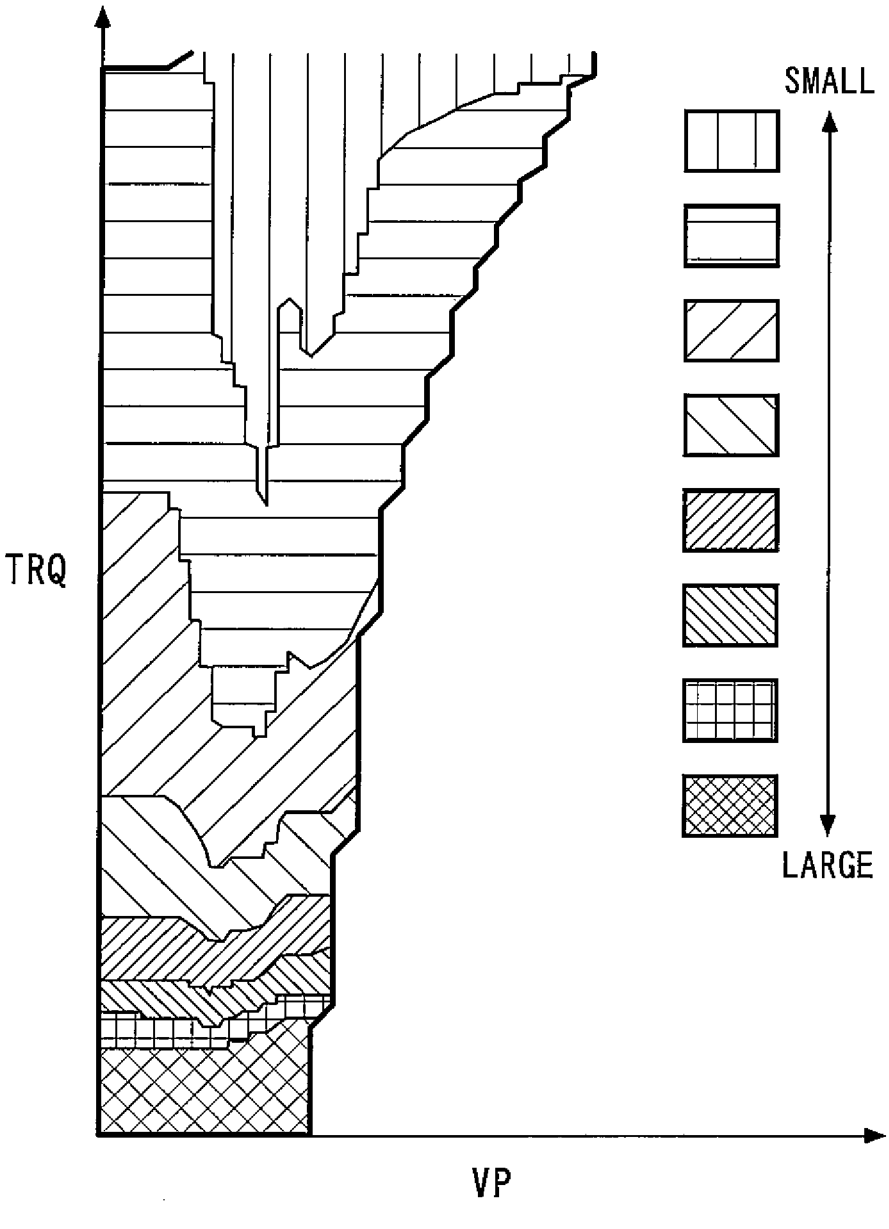

F I G. 6

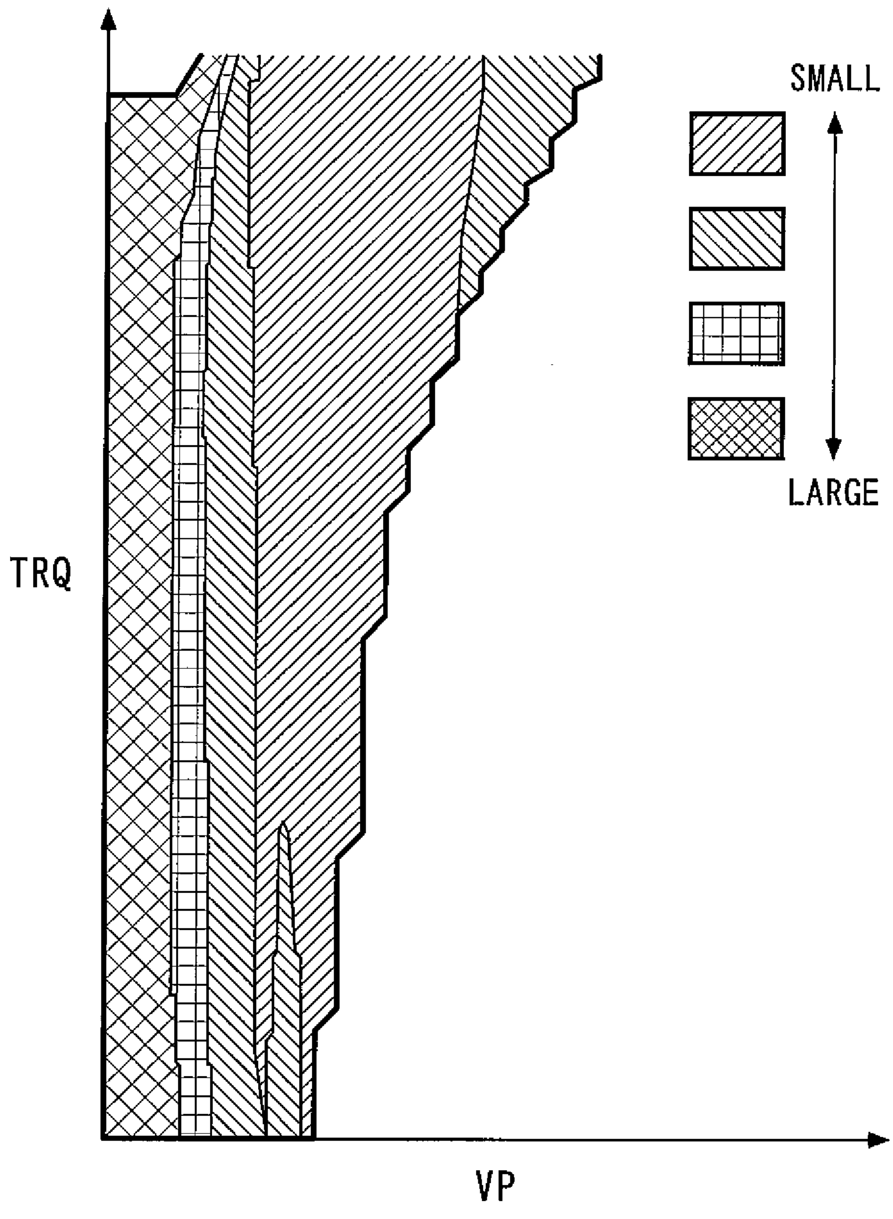

F I G. 7

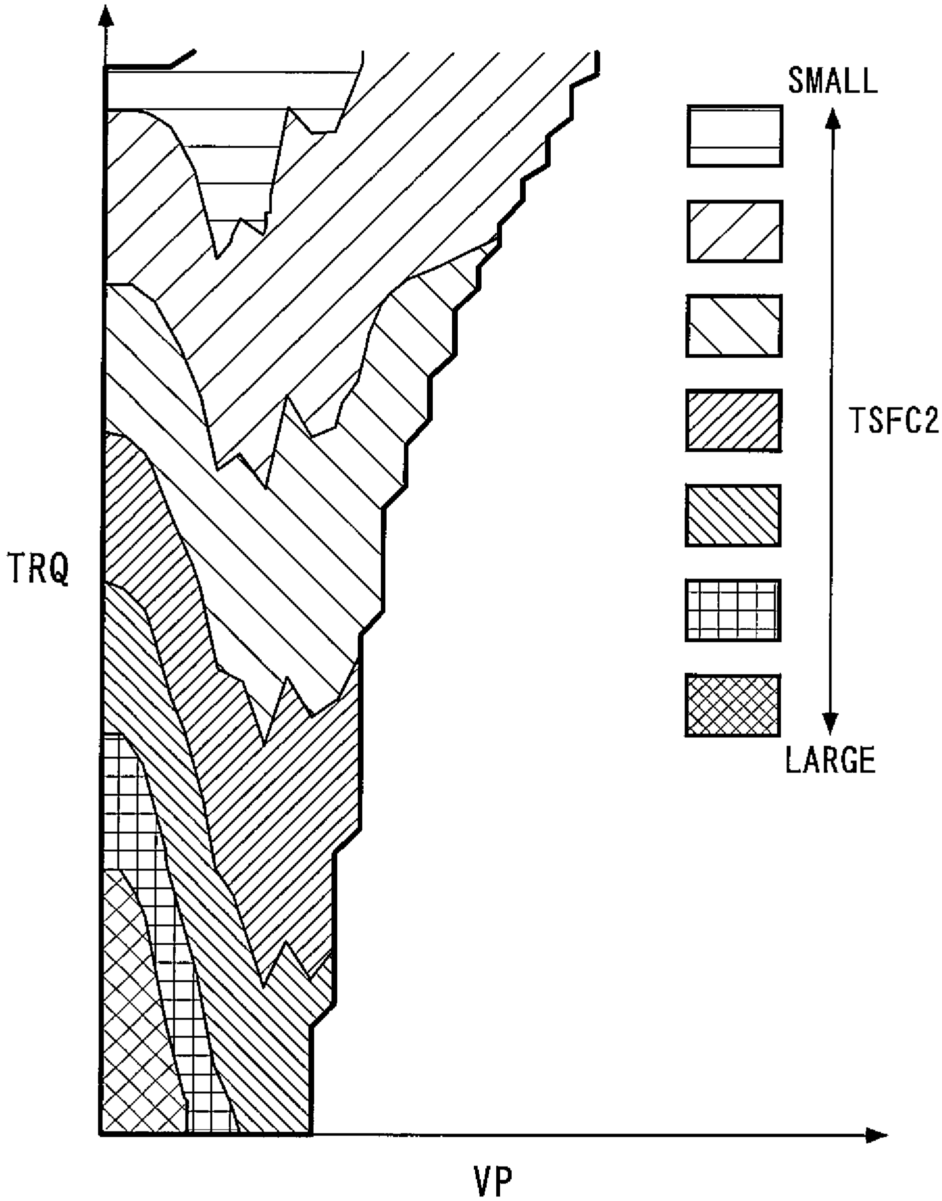

F I G. 8

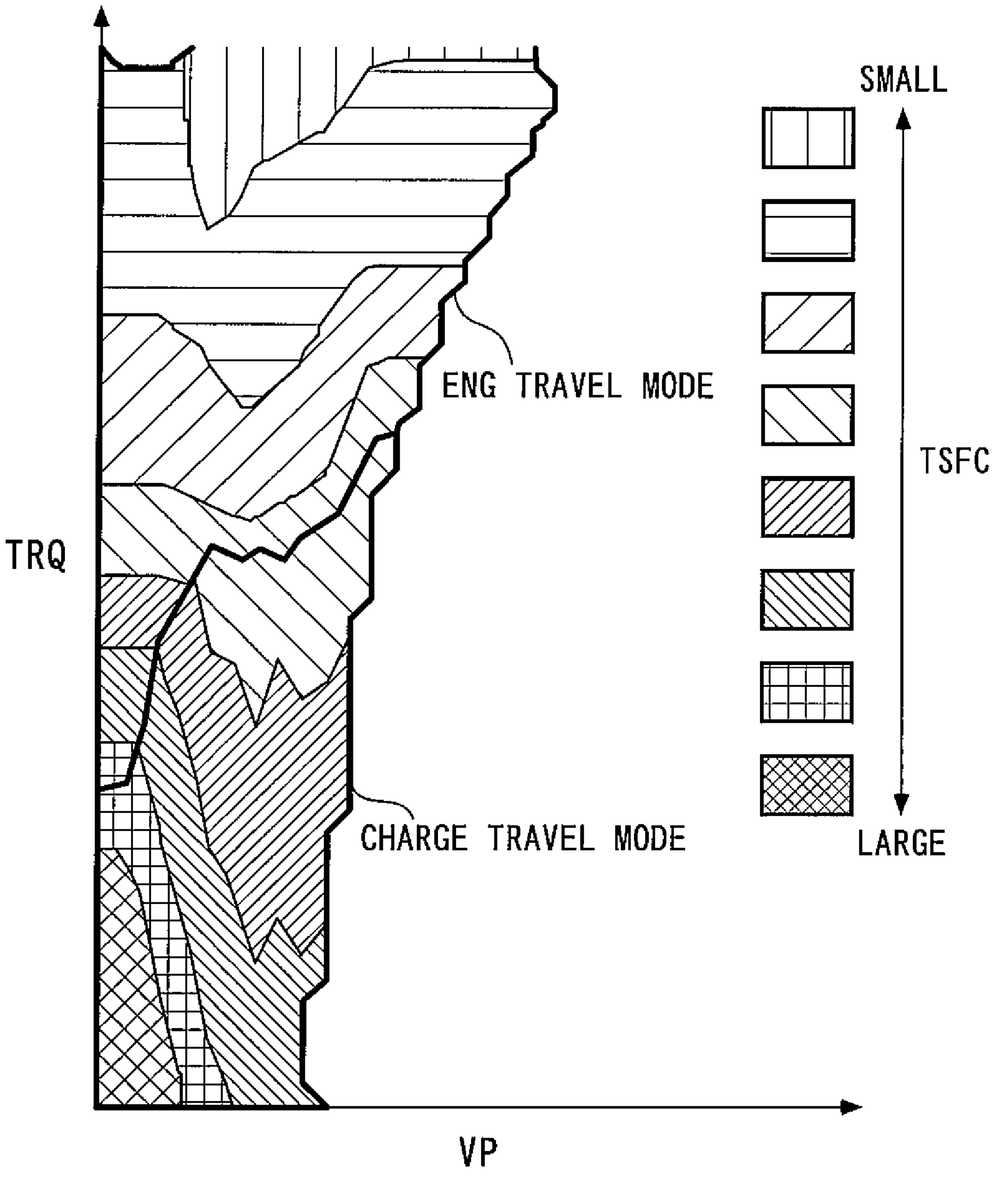

F I G. 9

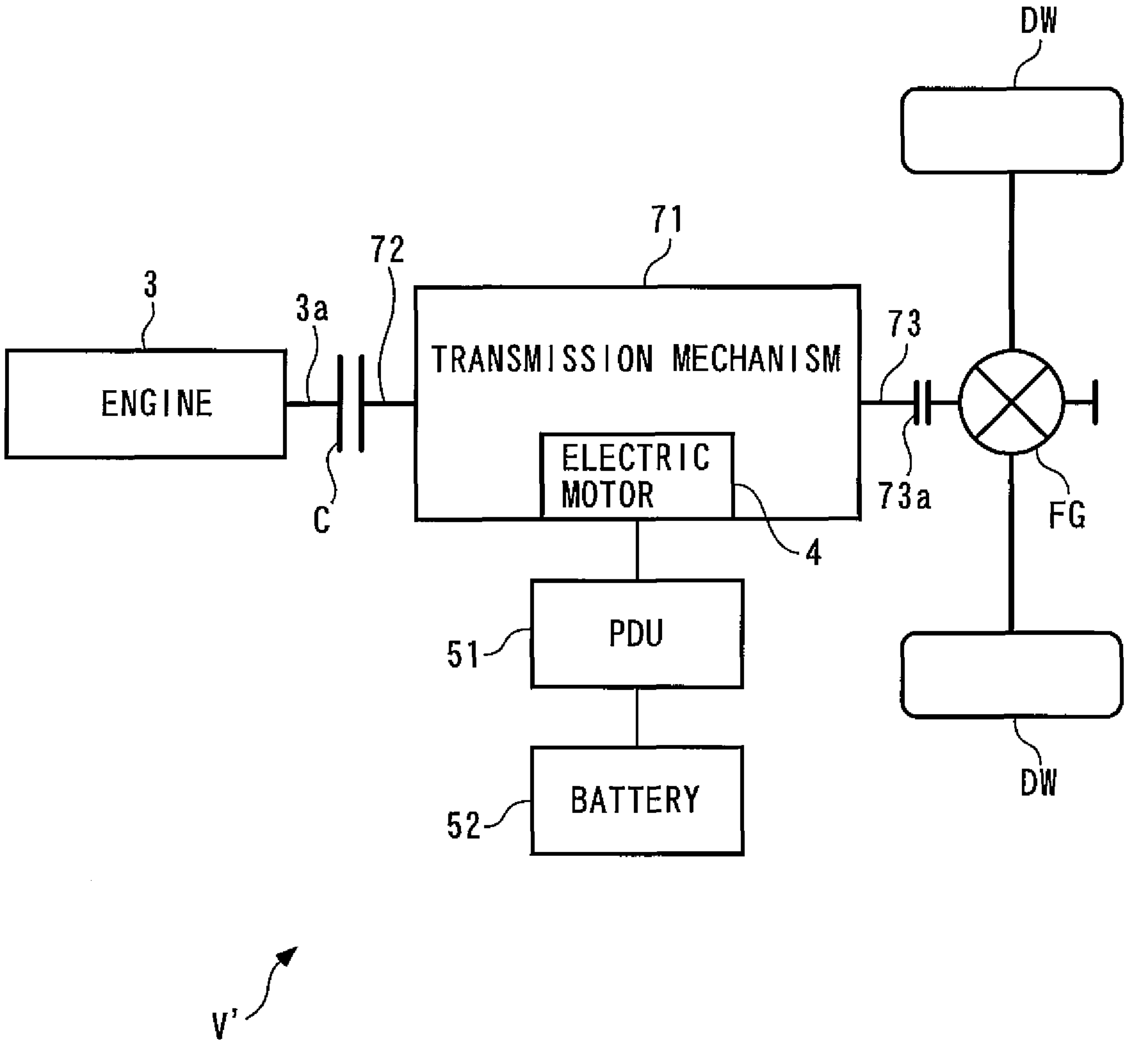
3
3a
72
71
73
DW
ENGINE
TRANSMISSION MECHANISM
ELECTRIC
MOTOR
C
4
73a
FG
PDU
51
BATTERY
52
DW
V'

F I G. 1 0

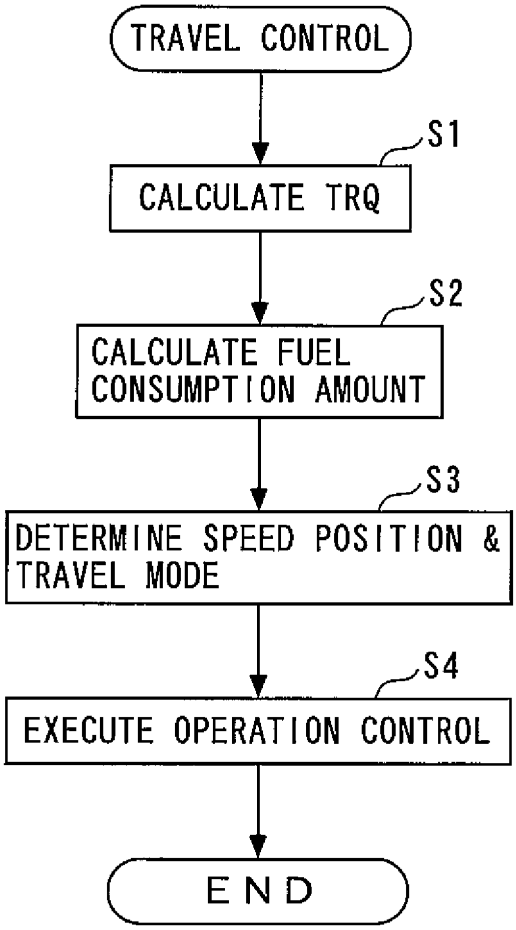
TRAVEL CONTROL
S1
CALCULATE TRQ
S2
CALCULATE FUEL CONSUMPTION AMOUNT
S3
DETERMINE SPEED POSITION & TRAVEL MODE
S4
EXECUTE OPERATION CONTROL
END

F I G. 1 1

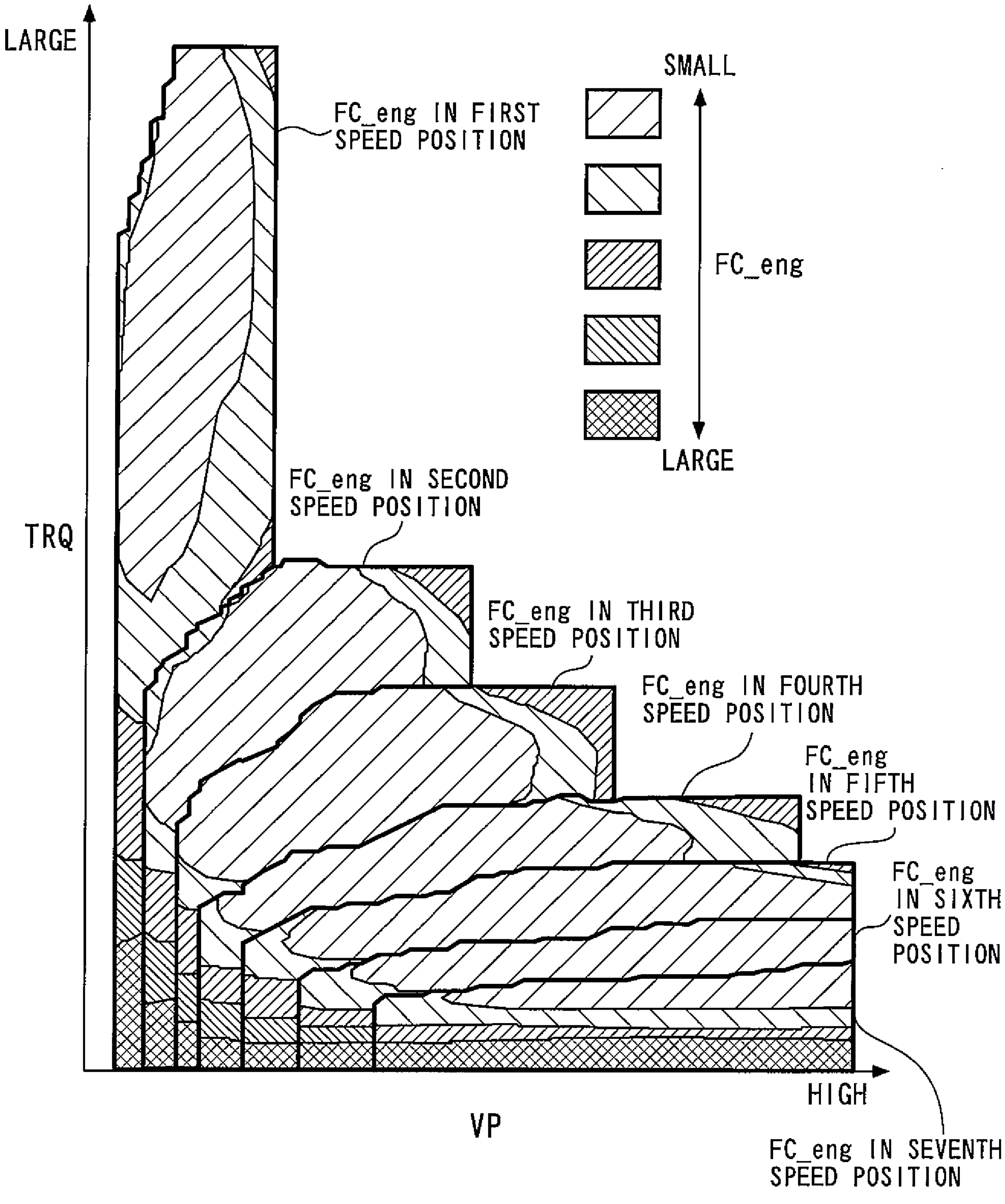
LARGE
TRQ
FC_eng IN FIRST SPEED POSITION
SMALL
FC_eng
LARGE
FC_eng IN SECOND SPEED POSITION
FC_eng IN THIRD SPEED POSITION
FC_eng IN FOURTH SPEED POSITION
FC_eng IN FIFTH SPEED POSITION
FC_eng IN SIXTH SPEED POSITION
HIGH
VP
FC_eng IN SEVENTH SPEED POSITION

F I G. 1 2

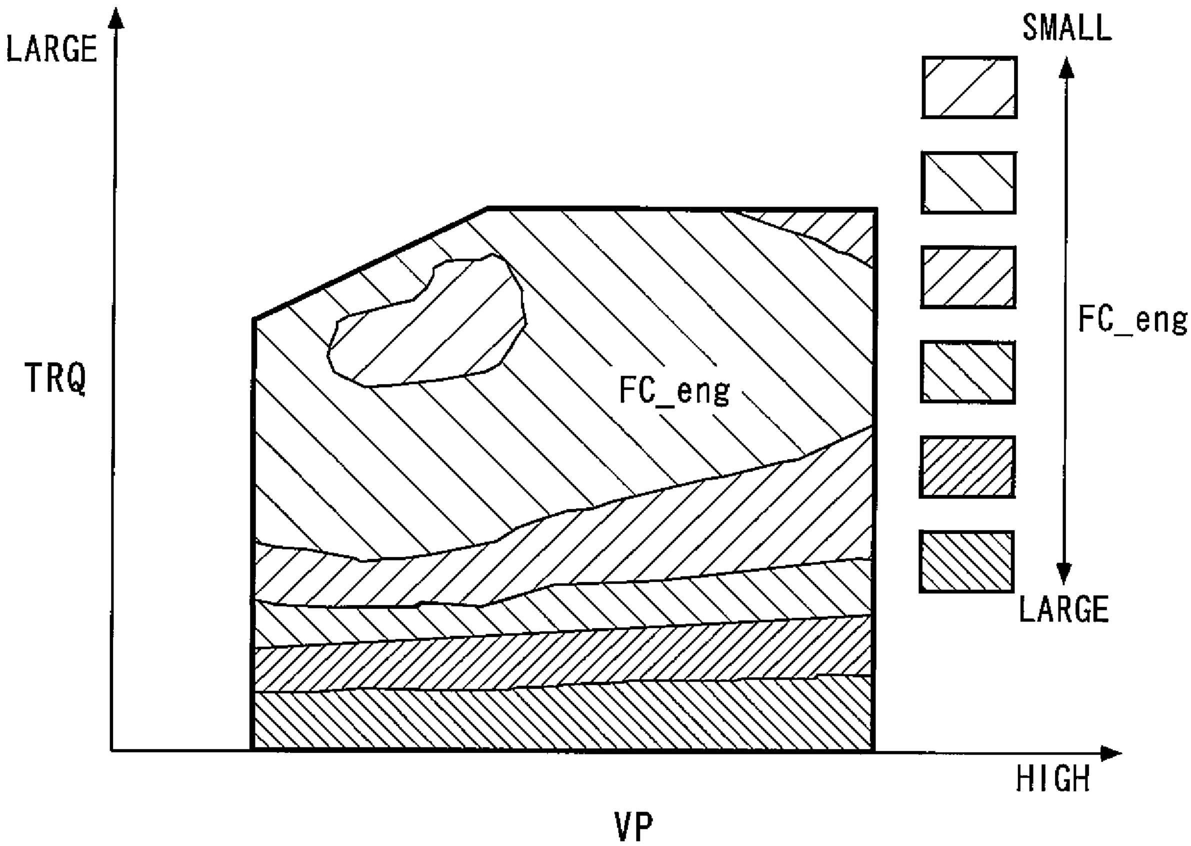

F I G. 1 3

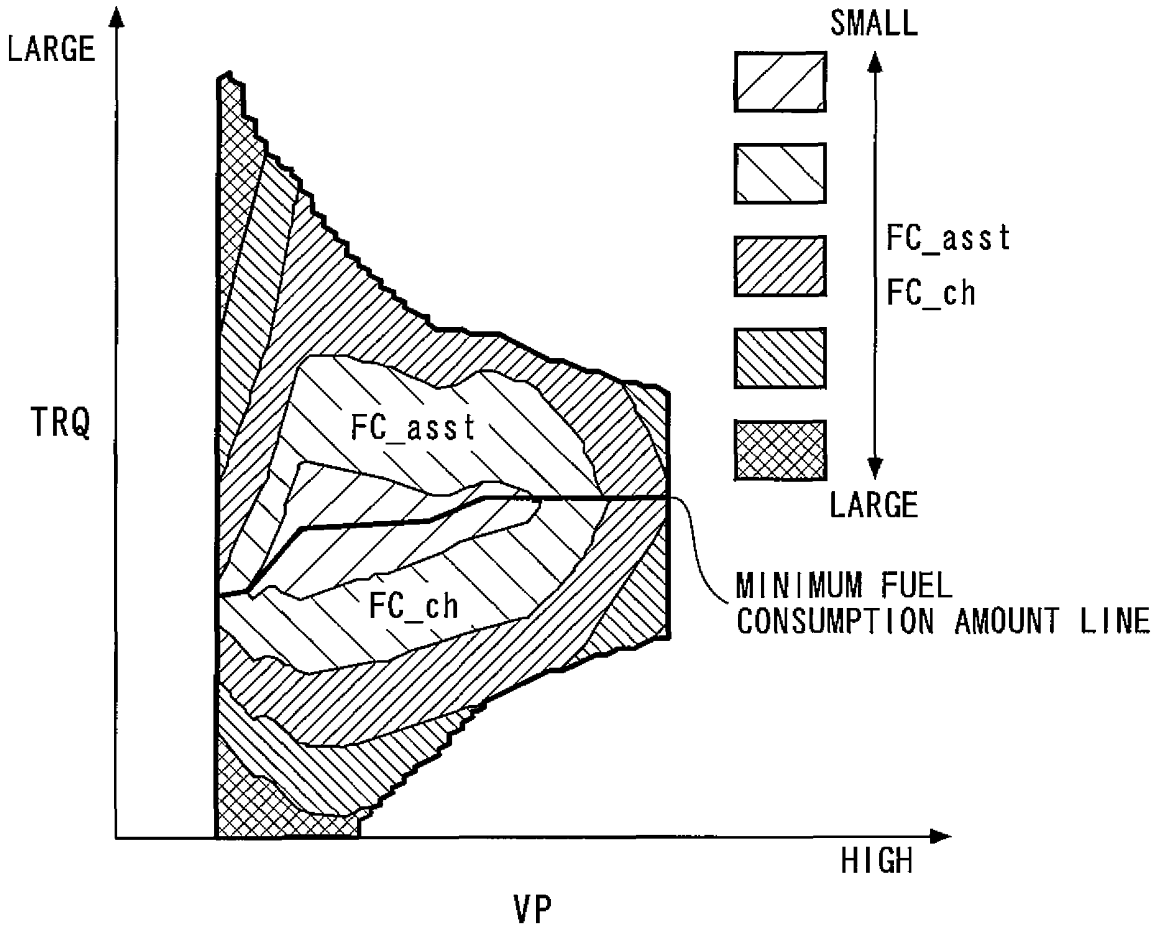
LARGE
TRQ
SMALL
FC_asst
FC_ch
LARGE
FC_asst
FC_ch
MINIMUM FUEL
CONSUMPTION AMOUNT LINE
HIGH
VP

F I G. 1 4

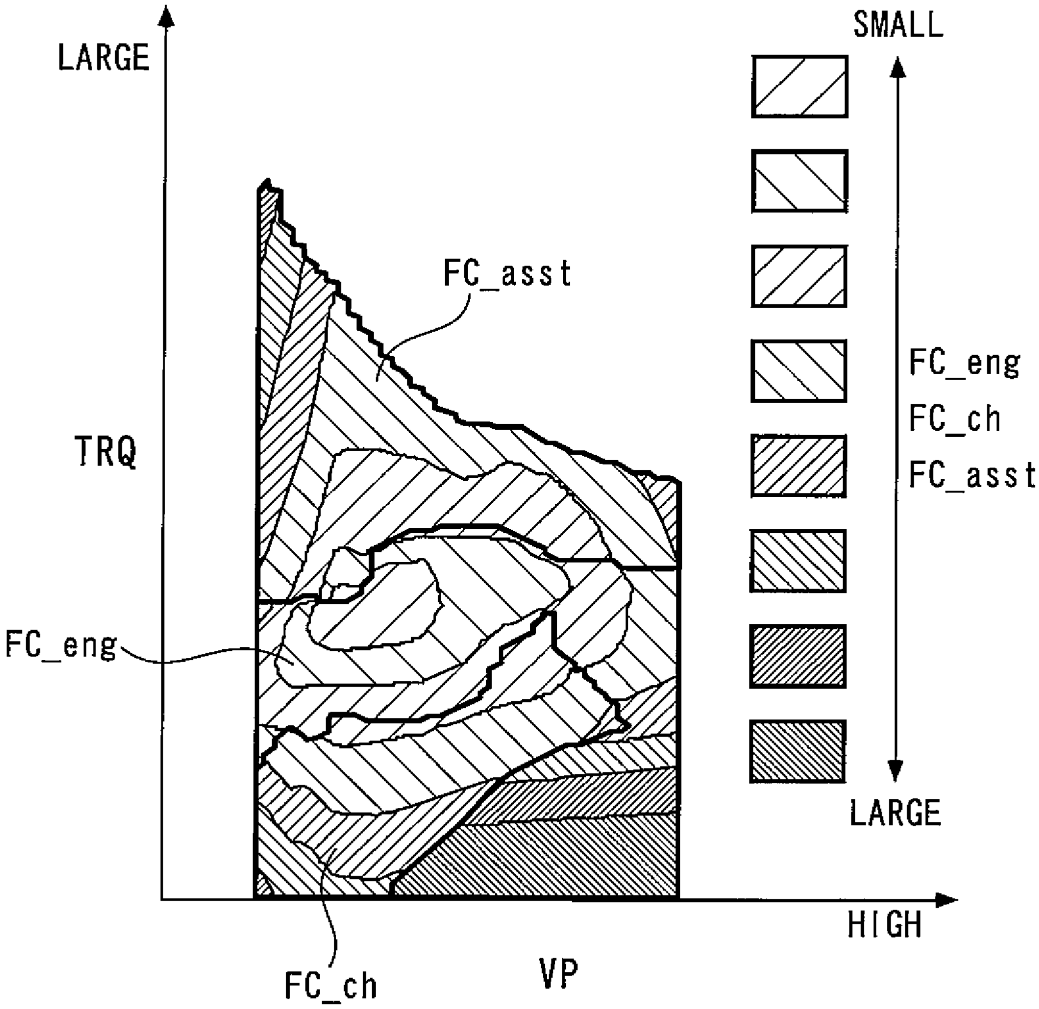
LARGE
TRQ
FC_eng
FC_asst
FC_ch
VP
HIGH
SMALL
FC_eng
FC_ch
FC_asst
LARGE

F I G. 1 5

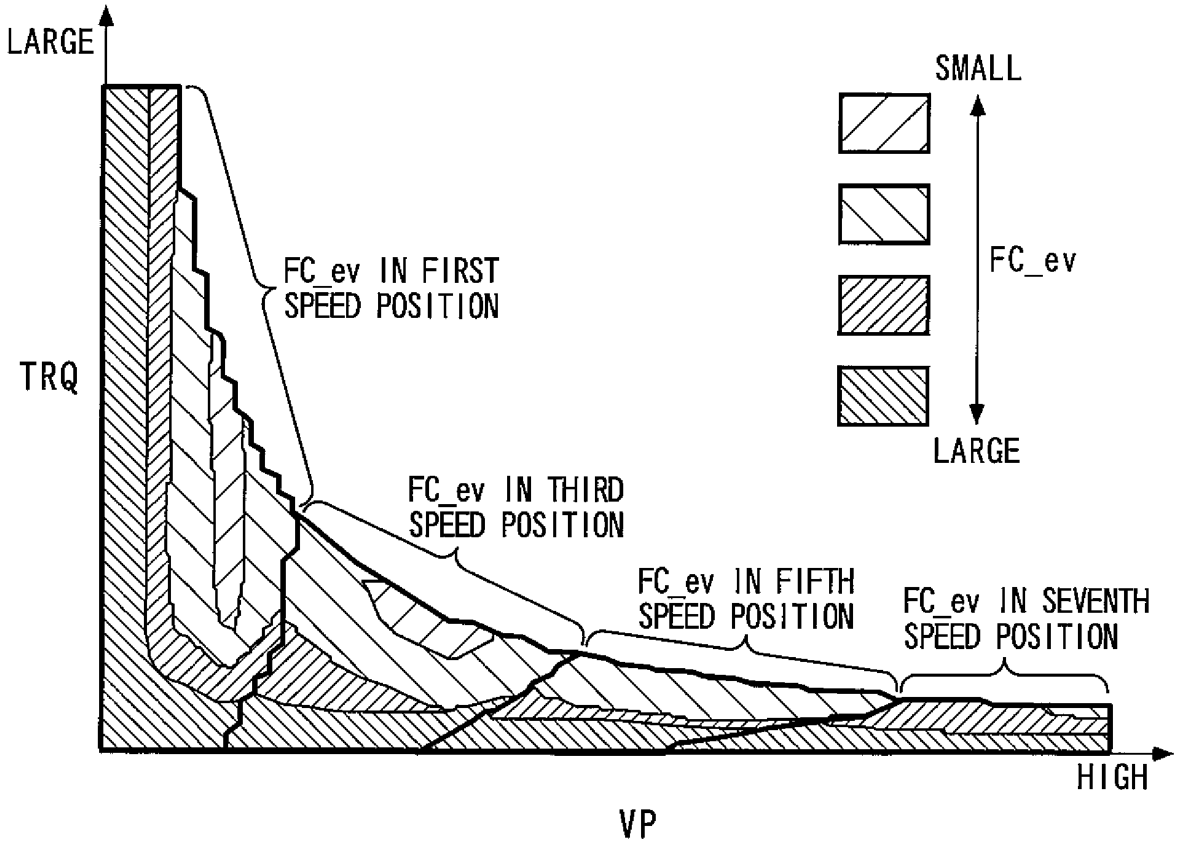
LARGE
TRQ
SMALL
FC_ev
LARGE
FC_ev IN FIRST SPEED POSITION
FC_ev IN THIRD SPEED POSITION
FC_ev IN FIFTH SPEED POSITION
FC_ev IN SEVENTH SPEED POSITION
HIGH
VP

F I G. 1 6

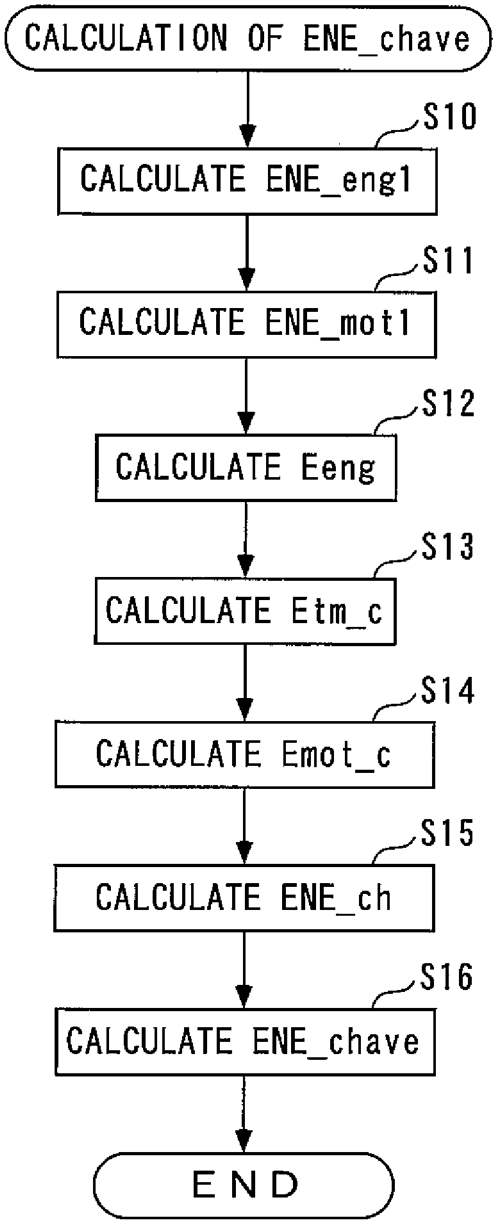
CALCULATION OF ENE_chave
S10
CALCULATE ENE_eng1
S11
CALCULATE ENE_mot1
S12
CALCULATE Eeng
S13
CALCULATE Etm_c
S14
CALCULATE Emot_c
S15
CALCULATE ENE_ch
S16
CALCULATE ENE_chave
END

FIG. 17

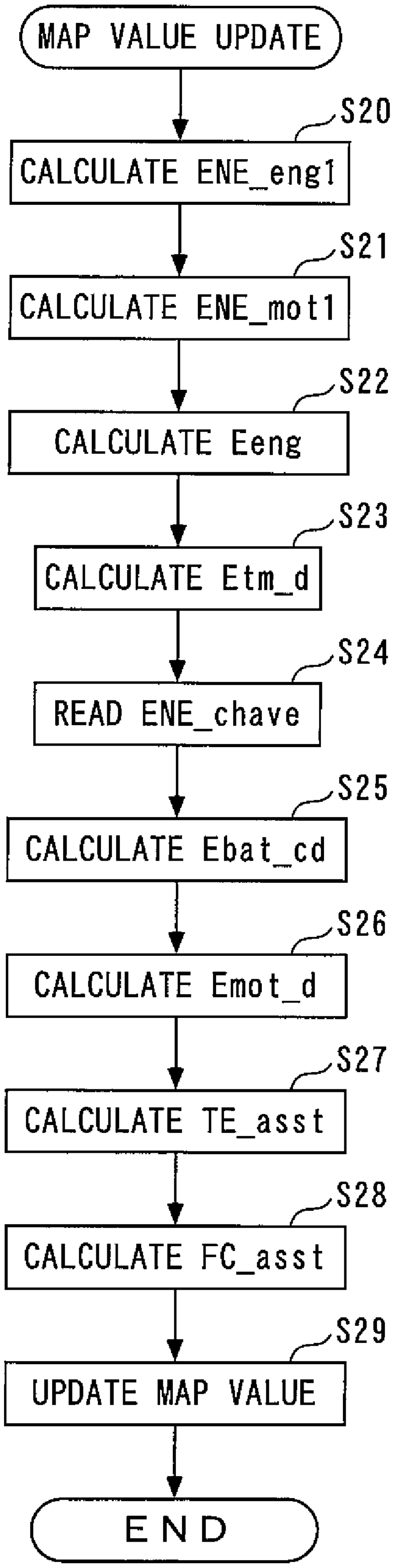
MAP VALUE UPDATE
S20
CALCULATE ENE_eng1
S21
CALCULATE ENE_mot1
S22
CALCULATE Eeng
S23
CALCULATE Etm_d
S24
READ ENE_chave
S25
CALCULATE Ebat_cd
S26
CALCULATE Emot_d
S27
CALCULATE TE_asst
S28
CALCULATE FC_asst
S29
UPDATE MAP VALUE
END

FIG. 18

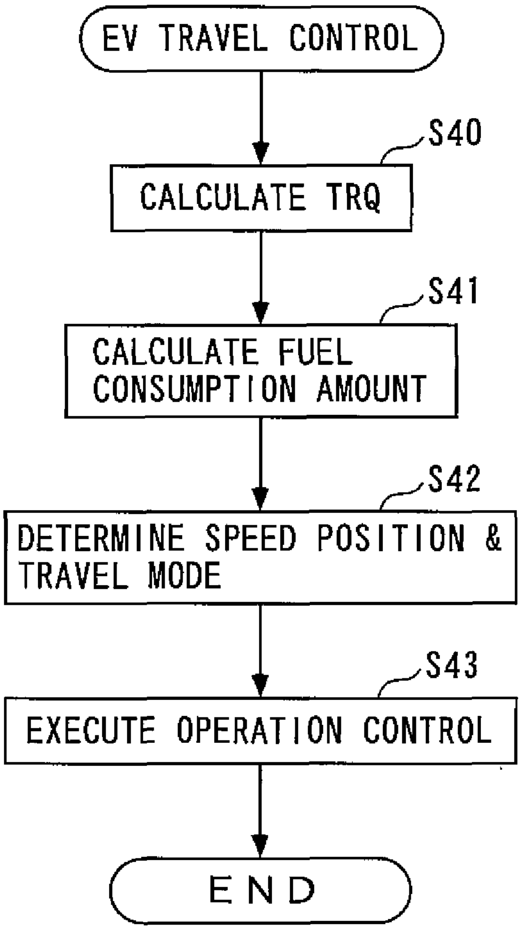
EV TRAVEL CONTROL
S40
CALCULATE TRQ
S41
CALCULATE FUEL CONSUMPTION AMOUNT
S42
DETERMINE SPEED POSITION & TRAVEL MODE
S43
EXECUTE OPERATION CONTROL
END

FIG. 19

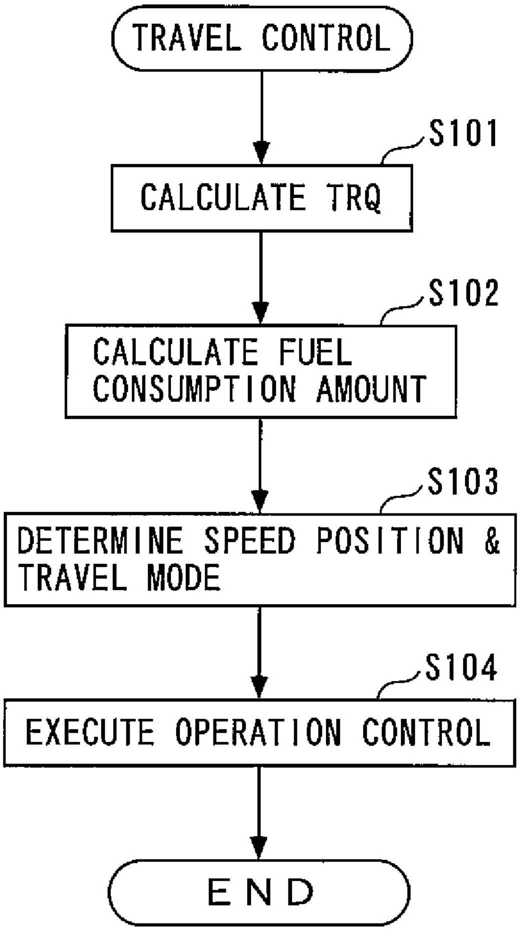
TRAVEL CONTROL
S101
CALCULATE TRQ
S102
CALCULATE FUEL CONSUMPTION AMOUNT
S103
DETERMINE SPEED POSITION & TRAVEL MODE
S104
EXECUTE OPERATION CONTROL
END

**INTERNATIONAL SEARCH REPORT**

International application No.
PCT/JP2012/072576

A. CLASSIFICATION OF SUBJECT MATTER
*B60W10/08*(2006.01)i, *B60K6/48*(2007.10)i, *B60K6/547*(2007.10)i, *B60L7/14*(2006.01)i, *B60L11/14*(2006.01)i, *B60L11/18*(2006.01)i, *B60W10/10*(2012.01)i, *B60W20/00*(2006.01)i, *F16H61/02*(2006.01)i,

According to International Patent Classification (IPC) or to both national classification and IPC

B. FIELDS SEARCHED

Minimum documentation searched (classification system followed by classification symbols)
B60W10/08, B60K6/48, B60K6/547, B60L7/14, B60L11/14, B60L11/18, B60W10/10, B60W20/00, F16H61/02, F16H61/688, F16H63/50

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br><br><br>A | JP 2007-269257 A (Fuji Heavy Industries Ltd.), 18 October 2007 (18.10.2007), paragraphs [0025] to [0029], [0045] to [0074], [0089] to [0107]; fig. 1 to 5 (Family: none) | 1-2,4-5, 11-12,14-19, 21<br>3,10,13,20 |
| Y | JP 2003-70102 A (Nissan Motor Co., Ltd.), 07 March 2003 (07.03.2003), paragraph [0064] (Family: none) | 1-2,4-5, 11-12,14-19, 21 |
| Y | WO 2011/070848 A1 (Honda Motor Co., Ltd.), 16 June 2011 (16.06.2011), paragraphs [0042] to [0099], [0109]; fig. 1 & JP 2011-121413 A & JP 2011-121415 A & JP 2011-121414 A | 2,4-9,12, 14-17,19,21 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 November, 2012 (26.11.12) | Date of mailing of the international search report<br>04 December, 2012 (04.12.12) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2012/072576

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-152914 A (Honda Motor Co., Ltd.), 11 August 2011 (11.08.2011), paragraphs [0086] to [0088]; fig. 1 & US 2010/0125020 A1 & EP 2189318 A1 | 2,4-9,12, 14-17,19,21 |
| Y | JP 2003-286872 A (Honda Motor Co., Ltd.), 10 October 2003 (10.10.2003), paragraphs [0015] to [0085] (Family: none) | 6-9,11-12, 14-17,21 |
| A | JP 11-229916 A (Toyota Motor Corp.), 24 August 1999 (24.08.1999), entire text; all drawings & US 6201312 B1 | 1-21 |
| A | JP 9-98516 A (Toyota Motor Corp.), 08 April 1997 (08.04.1997), entire text; all drawings & US 5789882 A & EP 759370 A2 | 1-21 |
| A | JP 2011-31855 A (Toyota Motor Corp.), 17 February 2011 (17.02.2011), entire text; all drawings (Family: none) | 1-21 |

Form PCT/ISA/210 (continuation of second sheet) (July 2009)

**INTERNATIONAL SEARCH REPORT**

International application No.
PCT/JP2012/072576

Continuation of A. CLASSIFICATION OF SUBJECT MATTER
(International Patent Classification (IPC))

*F16H61/688*(2006.01)i, *F16H63/50*(2006.01)i

(According to International Patent Classification (IPC) or to both national classification and IPC)

Form PCT/ISA/210 (extra sheet) (July 2009)

**INTERNATIONAL SEARCH REPORT**

International application No.
PCT/JP2012/072576

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

**INTERNATIONAL SEARCH REPORT**

International application No.
PCT/JP2012/072576

Continuation of Box No.III of continuation of first sheet(2)

The technical feature common to the invention of claims 1-5, 15-17, and 19-20, and the invention of claims 6-14, 18, and 21 is "a hybrid vehicle control device comprising: an electric motor capable of generating electric power and an internal combustion engine as a power source; a condenser capable of swapping the electric power with the electric motor; and a speed change mechanism capable of transmitting an input power to a drive wheel".

However, the above-said technical feature cannot be considered to be a special technical feature, since the technical feature does not make a contribution over the prior art in the light of the contents disclosed in the light of the contents disclosed in the document 1 (JP 2007-269257 A (Fuji Heavy Industries Ltd.), 18 October 2007 (18.10.2007), paragraphs [0025] to [0029], fig. 1 (Family: none)), the document 4 (WO 2011/070848 A1 (Honda Motor Co., Ltd.), 16 June 2011 (16.06.2011), paragraphs [0042] to [0099], fig. 1), and the document 5 (JP 2011-152914 A (Honda Motor Co., Ltd.), 11 August 2011 (11.08.2011), fig. 1).

Further, there is no other same or corresponding special technical feature between these inventions.

Accordingly, the following two invention groups are involved in claims.

(Invention 1) the inventions of claims 1-5, 15-17 and 19-20

The invention related to selection of a driving mode based on overall fuel consumption.

(Invention 2) the inventions of claims 6-14, 18 and 21

The invention related to selection of a driving mode based on a consumption degree parameter.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009173196 A
- JP 2010100251 A